# EUROPEAN PATENT APPLICATION

(11) **EP 4 628 424 A1**
(43) Date of publication of application: **08.10.2025**
(21) Application number: 23897676.5
(22) Date of filing: 24.11.2023
(51) Int. Cl.: B65D 81/34, A23L 5/10, B65D 30/16, B65D 30/18, F24C 7/02

(54) **PACKAGING BAG, COOKING METHOD FOR PACKAGED FOOD, METHOD FOR PRODUCING PACKAGING BAG EQUIPPED WITH REINFORCEMENT MEMBER, AND PACKAGING BAG UNIT**

(30) Priority: 30.11.2022 JP 2022191710; 09.12.2022 JP 2022197334; 29.03.2023 JP 2023054396; 29.03.2023 JP 2023054397; 29.03.2023 JP 2023054398; 29.03.2023 JP 2023054399; 28.04.2023 JP 2023074728; 28.04.2023 JP 2023074730; 28.04.2023 JP 2023074731; 14.06.2023 JP 2023098134; 04.07.2023 JP 2023110313; 21.08.2023 JP 2023134281; 19.09.2023 JP 2023151594; 07.11.2023 JP 2023190112
(71) Applicant: KYORAKU CO., LTD., Kyoto-shi, Kyoto 602-0912 (JP)
(72) Inventor: HASHIMOTO, Keigo, Tokyo 103-0004 (JP); KURAHASHI, Yuhi, Yamato-shi, Kanagawa 242-0018 (JP); MUKAI, Makoto, Tokyo 103-0004 (JP)
(74) Representative: Gulde & Partner
(86) International application number: PCT/JP2023/042140
(87) International publication number: WO 2024/117028

(57) **Abstract**

The present invention has been made in view of the above circumstances, and an object thereof is to provide a packaging bag that can store contents such as food, can be easily and efficiently heated by a microwave oven, and is easy to use as tableware after heating. According to the present invention, there is provided a packaging bag for a microwave oven made of a flexible film formed into a bag shape, comprising: a bottom portion; and a peripheral surface portion, wherein the peripheral surface portion includes a front portion and a back portion that face each other and are provided so as to stand from the bottom portion; the front portion and the back portion are configured to be integrally inclinable with respect to the bottom portion toward a front side or a back side of the packaging bag; and the bottom portion is developable.

## Description

### [Technical Field]

The present invention relates to a packaging bag, a cooking method for packaged food, a method for manufacturing a packaging bag with a reinforcing member, and a method for manufacturing a packaging bag unit.

### [Background Art]

As a packaging bag for storing contents such as food, a packaging bag that can be heated by a microwave oven is known. For example, the packaging bag disclosed in PTL 1 can be heated by a microwave oven in a self-standing state, and can release steam from a steam releasing means during heating.

### [Citation List]

### [Patent Literature]

[PTL 1] JP-A-2005-306426

### [Summary of Invention]

### [Technical Problem]

### (First, second, and fourth aspects)

When the packaging bag is self-standing, it is easy to take it out from the microwave oven after heating, and it is also easy to use the packaging container as tableware. On the other hand, microwave ovens are generally designed so that microwaves are concentrated in the center lower part of the oven, and heating the packaging bag in a lying state allows for more efficient cooking than heating it in a self-standing state.

### (First aspect)

The present invention has been made in view of the above circumstances, and an object of the present invention is to provide a packaging bag that can store contents such as food and can be easily and efficiently heated by a microwave oven, and can be easily used as tableware after heating.

### (Second aspect)

When heating the packaging bag in a lying state, in order to prevent contents from leaking from the steam releasing means, it is necessary to lay the packaging bag so that the steam releasing means faces upward. However, there is a risk that the packaging bag may be laid with the steam releasing means facing downward by mistake.

The present invention has been made in view of the above circumstances, and an object of the present invention is to provide a packaging bag that can store contents such as food and can be easily and efficiently heated by a microwave oven, and can suppress leakage of contents from a steam vent seal portion.

### (Third aspect)

When cooking contents in a microwave oven, it is desirable that the entire contents be heated uniformly. However, in the cavity of the microwave oven, there are places where microwaves are likely to hit and places where microwaves are unlikely to hit, and it is not easy to heat the contents uniformly.

The present invention has been made in view of the above circumstances, and an object of the present invention is to provide a cooking method for packaged food that can improve the uniformity of heating of contents when cooking contents such as food in a microwave oven.

### (Fourth aspect)

The present invention has been made in view of the above circumstances, and an object of the present invention is to provide a method capable of efficiently manufacturing a packaging bag that can store contents such as food and can be easily and efficiently heated by a microwave oven, and can be easily used as tableware after heating.

### (Fifth to sixth aspects)

By the way, when contents are heated in a microwave oven with the contents stored in the packaging bag, the contents are not always heated uniformly, and it is desired to improve the uniformity of heating.

The present invention has been made in view of the above circumstances, and an object of the present invention is to improve the uniformity of heating of the contents of the packaging bag in a microwave oven.

### [Solution to Problem]

### (First aspect)

According to the present invention, the following inventions are provided.
[1] A packaging bag for a microwave oven made of a flexible film formed into a bag shape, comprising: a bottom portion; and a peripheral surface portion, wherein the peripheral surface portion includes a front portion and a back portion that face each other and are provided so as to stand from the bottom portion; the front portion and the back portion are configured to be integrally inclinable with respect to the bottom portion toward a front side or a back side of the packaging bag; and the bottom portion is developable.
[2] The packaging bag according to [1], comprising a steam vent seal portion that forms a steam flow path as an internal pressure of the packaging bag increases.
[3] The packaging bag according to [1] or [2], further comprising a sealed space inside for housing contents, wherein the packaging bag is configured such that a sum of a weight of a portion of the peripheral surface portion below a center line of the sealed space in a top-bottom direction of the packaging bag and a weight of the bottom portion is greater than a weight of a portion of the peripheral surface portion above the center line of the sealed space.
[4] The packaging bag according to any one of [1] to [3], wherein the bottom portion is made of a bottom film; and the bottom portion is provided with a reinforcing member that reinforces the bottom portion so as to suppress a curvature of the bottom film.
[5] The packaging bag according to [4], wherein the reinforcing member can be removed from the bottom portion and then attached to a bottom portion of another packaging bag.
[6] A cooking method for packaged food, comprising a heating step, wherein the packaged food comprises the packaging bag according to any one of [1] to [5], and food stored in the packaging bag; in the heating step, heating of the food stored in the packaging bag by a microwave oven is started with the bottom portion developed and grounded and the peripheral surface portion inclined such that an inclination angle with respect to a horizontal surface is 30° or less.

### (Second aspect)

According to the present invention, the following inventions are provided.
[1] A packaging bag for a microwave oven made of a flexible film formed into a bag shape, comprising a bottom portion and a peripheral surface portion, wherein the peripheral surface portion includes a front portion and a back portion that face each other and are provided so as to stand from the bottom portion; the front portion and the back portion are configured to be integrally inclinable; the front portion is provided with a steam vent seal portion that forms a steam flow path as an internal pressure of the packaging bag increases; the bottom portion is developable; and the peripheral surface portion is inclined such that the bottom portion and the back portion are valley-folded with the bottom portion developed, and an inclination angle with respect to the bottom portion is 30° or less.
[2] The packaging bag according to [1], wherein the bottom portion is made of a bottom film; and the bottom portion is provided with a reinforcing member that reinforces the bottom portion so as to suppress a curvature of the bottom film.

### (Third aspect)

According to the present invention, the following inventions are provided.
[1] A cooking method for packaged food, comprising a heating step, wherein the packaged food comprises a packaging bag and food stored in the packaging bag; the packaging bag comprises a bottom portion and a peripheral surface portion provided so as to stand from the bottom portion; and in the heating step, heating of the food stored in the packaging bag by a microwave oven is started with the peripheral surface portion inclined such that an inclination angle with respect to a horizontal surface is 30° or less, and the peripheral surface portion becomes upright when heating is completed.
[2] The method according to [1], further comprising a storing step, wherein in the storing step, cooking liquid is stored in the packaging bag so as to contact the food, and the packaging bag is sealed, and in the heating step, the food and the cooking liquid stored in the packaging bag are heated by the microwave oven.
[3] The method according to [1] or [2], wherein the bottom portion is developable; and the heating step is started with the bottom portion developed and grounded.
[4] The method according to any one of [1] to [3], wherein the bottom portion is made of a bottom film; and the heating step is started with a reinforcing member provided on the bottom portion so as to reinforce the bottom portion to suppress a curvature of the bottom film.

### (Fourth aspect)

According to the present invention, the following inventions are provided.
[1] A method for manufacturing a packaging bag with a reinforcing member for a microwave oven, comprising: a reinforcing member attaching step, wherein in the reinforcing member attaching step, a reinforcing member is attached to a bottom portion of a packaging bag in a state where the bottom portion is developed; the packaging bag is configured by forming a flexible film into a bag shape; the packaging bag comprises a bottom portion and a peripheral surface portion; the bottom portion is made of a bottom film; the peripheral surface portion includes a front portion and a back portion that face each other and are provided so as to stand from the bottom portion; the front portion and the back portion are configured to be integrally inclinable with respect to the bottom portion toward a front side or a back side of the packaging bag; and the reinforcing member is configured to reinforce the bottom portion so as to suppress a curvature of the bottom film.
[2] The method according to [1], further comprising a bag-making step of manufacturing the packaging bag, wherein the reinforcing member attaching step is performed after the bag-making step.
[3] The method according to [1] or [2], further comprising a contents filling step, wherein in the contents filling step, contents are filled into the packaging bag and the packaging bag is sealed; and the reinforcing member attaching step is performed after the contents filling step.

### (Fifth aspect)

According to the present invention, the following inventions are provided.
[1] A packaging bag unit for a microwave oven, wherein the packaging bag unit comprises a packaging bag and a displacement assisting portion; the packaging bag comprises a peripheral surface portion having a front portion and a back portion that face each other; and the displacement assisting portion is configured to deform and change an inclination angle of the peripheral surface portion when the packaging bag unit is heated in a microwave oven.
[2] The packaging bag unit according to [1], wherein the displacement assisting portion comprises a shape memory member having a property of returning to its original shape when heated above a recovery temperature; and the packaging bag unit is configured to change an inclination angle of the peripheral surface portion by the shape memory member returning to its original shape as the packaging bag unit is heated in a microwave oven.
[3] The packaging bag unit according to [1], wherein the displacement assisting portion comprises an expandable member having a property of expanding upon heating; and the packaging bag unit is configured to change an inclination angle of the peripheral surface portion by the expandable member expanding as the packaging bag unit is heated in a microwave oven.
[4] The packaging bag unit according to [1], wherein the displacement assisting portion comprises an elastic member deformed from its original shape and a restricting member that restricts a recovery of the elastic member; and the packaging bag unit is configured to change an inclination angle of the peripheral surface portion by a restriction by the restricting member being released and the elastic member returning to its original shape as the packaging bag unit is heated in a microwave oven.
[5] The packaging bag unit according to any one of [1] to [4], wherein the displacement assisting portion is configured to change an inclination angle of the peripheral surface portion of the packaging bag by pushing up the peripheral surface portion of the packaging bag or by pushing up a peripheral surface portion of an outer packaging surrounding the packaging bag.
[6] A cooking method for packaged food, comprising: a heating step, wherein the packaged food comprises the packaging bag unit according to any one of [1] to [5], and food stored in the packaging bag; in the heating step, heating of the food stored in the packaging bag is started by a microwave oven, and an inclination angle of the peripheral surface portion is changed by deforming the displacement assisting portion during the heating.

### (Sixth aspect)

According to the present invention, the following inventions are provided.
[1] A packaging bag unit for a microwave oven, wherein the packaging bag unit comprises a packaging bag; the packaging bag comprises a peripheral surface portion having a front portion and a back portion that face each other; and the packaging bag unit is configured such that a posture of the packaging bag changes as a center of gravity of contents of the packaging bag moves when the packaging bag unit is heated in a microwave oven.
[2] The packaging bag unit according to [1], further comprising an outer packaging surrounding the packaging bag, wherein in a state before heating, an outer packaging interior portion including a lower end of the packaging bag is arranged inside the outer packaging; the outer packaging interior portion is fixed to the outer packaging; and the packaging bag unit is so configured that a posture of the packaging bag changes by movement of the center of gravity due to relocation of contents of the packaging bag, that are arranged outside the outer packaging, to the outer packaging interior portion as the packaging bag expands with the heating.
[3] The packaging bag unit according to [1], wherein the packaging bag comprises a dividing seal portion that divides a space inside the packaging bag into a first space and a second space; and the packaging bag unit is so configured that a posture of the packaging bag changes as the dividing seal portion peels off with the heating, and contents of the first space move to a second space, causing the center of gravity to move.
[4] The packaging bag unit according to [1], wherein the packaging bag unit is so configured that when the packaging bag expands with the heating, contents of the packaging bag move toward a lower end of the packaging bag, causing movement of the center of gravity and a ground contact portion of the packaging bag toward the lower end, thereby changing a posture of the packaging bag.
[5] A cooking method for packaged food, comprising a heating step, wherein the packaged food comprises the packaging bag unit according to any one of [1] to [4], and food stored in the packaging bag; in the heating step, heating of the food stored in the packaging bag is started by a microwave oven, and a posture of the packaging bag is changed by moving the center of gravity during the heating.

### [Advantageous Effects of Invention]

### (First aspect)

In the packaging bag according to the present invention, the front portion and the back portion constituting the peripheral surface portion are configured to be integrally inclinable to the front side or the back side with respect to the bottom portion. With such a configuration, the packaging bag can be placed in the microwave oven cavity with the peripheral surface portion lying down, and by starting heating in this state, the contents can be efficiently heated. In addition, after heating, the bottom portion can be developed and grounded, so it is easy to use as tableware.

### (Second aspect)

In the packaging bag according to the present invention, the peripheral surface portion is inclined such that the bottom portion and the back portion are valley-folded with the bottom portion developed, and the inclination angle with respect to the bottom portion is 30° or less, so when the packaging bag is placed in the microwave oven cavity so that the bottom portion is grounded, the steam vent seal portion provided on the front portion is necessarily arranged on the upper side of the packaging bag, so leakage of contents through the steam flow path formed in the steam vent seal portion is suppressed, and the contents can be efficiently heated.

### (Third aspect)

In the present invention, heating is started with the peripheral surface portion lying down (that is, inclined so that the inclination angle with respect to the horizontal surface is 30° or less), and in the heating step, the peripheral surface becomes upright when heating is completed. In this step, the peripheral surface portion is displaced from the lying state to the upright state during heating. During this displacement, the contents are also displaced, so the contents are stirred, or the distribution of microwaves irradiated onto the contents changes, and the uniformity of heating is improved.

### (Fourth aspect)

The method of the present invention includes a reinforcing member attaching step of attaching a reinforcing member to the bottom portion with the bottom portion of the packaging bag developed. By attaching the reinforcing member after manufacturing the packaging bag, the packaging bag with a reinforcing member can be efficiently manufactured. In addition, the packaging bag to which the reinforcing member is attached is configured such that the front portion and the back portion constituting the peripheral surface portion are integrally inclinable to the front side or the back side with respect to the bottom portion, so the packaging bag can be placed in the microwave oven cavity with the peripheral surface portion lying down, and by heating in this state, the contents can be efficiently heated. Furthermore, since the reinforcing member is configured to be capable of reinforcing the bottom portion so as to suppress bending of the bottom film, the self-standing property is improved, and it is easy to use as tableware.

### (Fifth aspect)

According to the present invention, a packaging bag unit including a packaging bag and a displacement assisting portion is provided. The displacement assisting portion is configured to deform by heating and change the inclination angle of the peripheral surface portion of the packaging bag. By changing the inclination angle of the peripheral surface portion, the contents are displaced or deformed, or the intensity distribution of microwaves irradiated onto the contents changes. Therefore, according to the present invention, the uniformity of heating of the contents of the packaging bag is improved.

### (Sixth aspect)

The packaging bag unit of the present invention is configured such that the posture of the packaging bag changes as the center of gravity of the contents of the packaging bag moves when heated in a microwave oven. By changing the posture of the packaging bag, the contents are displaced or deformed, or the intensity distribution of microwaves irradiated onto the contents changes. Therefore, according to the present invention, the uniformity of heating of the contents of the packaging bag is improved.

### [Brief Description of Drawings]

(First to Fourth Aspects)
   Fig. 1 is a perspective view showing a state where contents are stored in a packaging bag 1 according to the first embodiment of the present invention. Illustration of the steam vent seal portion 11 is omitted as appropriate for convenience of illustration. The same applies to Fig. 2 and subsequent figures.
   Fig. 2A is a perspective view showing a state where the packaging bag 1 of Fig. 1 is opened at the upper opening portion 26. Fig. 2B is a perspective view showing a state where the packaging bag 1 of Fig. 2A is opened at the opening portion 24 after being expanded by heating.
   Fig. 3A is a plan view showing the packaging bag 1 of Fig. 1 in a flattened state. Fig. 3B is a back view showing the packaging bag 1 of Fig. 1 in a flattened state.
   Fig. 4 is a perspective view of the bottom film 20a constituting the bottom portion 2 of the packaging bag 1.
   Figs. 5A to 5C are explanatory views of how the opening 22 of the packaging bag 1 is opened and closed by the opening/closing member 23. Fig. 5A is a cross-sectional view along the line A-A in Fig. 3A. Fig. 5B is an enlarged view of area B in Fig. 5A. Fig. 5C shows the opening/closing member 23 of Fig. 5B in an open state.
   Fig. 6 is a perspective view of the front portion 3 and the back portion 4 of the packaging bag 1 of Fig. 2A, integrally inclined backward, as seen from the back portion 4 side.
   Fig. 7A is a plan view showing the packaging bag 1 of Fig. 1 in a flattened state. Fig. 7B is a perspective view showing a state where contents are stored in the packaging bag 1.
   Figs. 8A to 8C are explanatory views of a cooking method for packaged food containing food in the packaging bag 1, schematically showing a cross-sectional view along the line D-D in Fig. 6. Fig. 8A shows the state of the packaging bag 1 at the start of heating in the heating step of the cooking method. Fig. 8B shows the state where the packaging bag 1 has expanded due to heating from Fig. 8A. Fig. 8C shows the state where the packaging bag 1 has further expanded due to heating from Fig. 8B.
   Fig. 9A is a side view of the peripheral wall film 20b. Fig. 9B is a view showing a state where a part of the peripheral wall film 20b is cut, and the bottom film 20a is inserted into the cut portion.
   Fig. 10A is a view showing how the peripheral wall film 20b and the bottom film 20a are welded to manufacture the packaging bag 1, and Fig. 10B is a view showing a state where the opening/closing member 23 is inserted between the front portion 3 and the back portion 4.
   Figs. 11A to 11C are explanatory views of a cooking method for packaged food containing food in the packaging bag 1 according to the second embodiment, schematically showing a cross-sectional view along the line D-D in Fig. 6. Fig. 11A shows the state of the packaging bag 1 at the start of heating in the heating step of the cooking method. Fig. 11B shows the state where the packaging bag 1 has expanded due to heating from Fig. 11A. Fig. 11C shows the state where the packaging bag 1 has further expanded due to heating from Fig. 11B.
   Fig. 12 is a perspective view of the packaging bag 1 according to the second embodiment of the present invention, showing a state where it is opened at the opening portion 24 after being expanded by heating.
   Figs. 13A to 13D are bottom views each showing a state where a reinforcing member 27 is attached to the bottom portion 2; Fig. 13A shows a state where an elliptical reinforcing member 27 is attached; Fig. 13B shows a state where a pair of reinforcing members 27 are attached near both left and right ends of the packaging bag 1; Fig. 13C shows a state where a reinforcing member 27 is attached to the center in the left-right direction of the packaging bag 1; and Fig. 13D shows a state where a reinforcing member 27 is attached to the center in the front-back direction of the packaging bag 1.
   Fig. 14 is a bottom view showing a state where a reinforcing member 27 having a shape along the inner edge 2j of the lower end welded portion 13 is attached.
   Fig. 15A is a perspective view showing a state where disposable chopsticks 27a are attached to the bottom portion 2 as the reinforcing member 27; Fig. 15B is an enlarged view of area B in Fig. 15A; and Fig. 15C shows a state where the disposable chopsticks 27a are removed from Fig. 15B.
   Fig. 16A is a perspective view showing a state where disposable chopsticks 27a as the reinforcing member 27 are inserted into an opening 2f provided in the lower end welded portion 13 of the bottom portion 2 and attached to the bottom portion 2; Fig. 16B is an enlarged view of area B in Fig. 16A; and Fig. 16C shows a state where the disposable chopsticks 27a are removed from Fig. 16B.
   Fig. 17 is a perspective view showing an example of a method for fixing the reinforcing member 27 to the bottom portion 2 using fixing means 29.
   Fig. 18A is a perspective view corresponding to Fig. 4, showing a state where the bottom film 20a and the reinforcing member film 20d are joined. Fig. 18B is a perspective view of the packaging bag 1 manufactured using the film of Fig. 18A.
   Fig. 19 is a cross-sectional view corresponding to Fig. 8A, showing a state where the reinforcing member 27 protrudes from the bottom portion 2.
   Fig. 20 is a perspective view corresponding to Fig. 8A, showing a state where the packaging bag 1 is attached to a plate 30a with double-sided tape 29a.
   Fig. 21A shows a step of fixing the lower end portion 20j of the peripheral wall film 20b to a plate-shaped member 42, and Fig. 21B shows a step of fixing the bottom film 20a to the back surface of the plate-shaped member 42 of Fig. 21A.
   Figs. 22A to 22C are plan views corresponding to Fig. 3A, Fig. 22A shows a state where the steam vent seal portion 11 is provided at the upper end welded portion 19, Fig. 22B shows a state where the steam vent seal portion 11 is provided at the side end welded portion 12, and Fig. 22C shows a state where the steam vent seal portion 11 is provided so as to protrude from the inner edge 12a of the side end welded portion 12.
   Fig. 23 is a plan view showing a state where a donut-shaped steam vent seal portion 11a is provided.
   Fig. 24A is a perspective view showing a state where an overlapping portion 28 is formed on the film 20c. Fig. 24B is a perspective view showing a state after forming the first bottom portion 2a on the overlapping portion 28 from the state of Fig. 24A.
   Fig. 25 is a perspective view showing a state after forming the second bottom portion 2b and the side end welded portion 12 from the state of Fig. 24B.
   Fig. 26A shows a state where the packaging bag 1 is stored in a tubular outer packaging body 32a, and Fig. 26B shows a state where the tubular outer packaging body 32a is made into a strip and the strip is folded back from the state of Fig. 26A.
   Fig. 27A shows a state where the packaging bag 1 is stored in a box-shaped outer packaging body 32b, and Fig. 27B shows a state where the box-shaped outer packaging body 32b is opened from the state of Fig. 27A.
   Fig. 28 is a perspective view showing a state where the reinforcing member 27 is arranged along the front edge 2c and the back edge 2d of the bottom portion 2 so as to reinforce the bottom portion 2.
   Fig. 29A shows a state where the reinforcing member 27 is arranged along the front edge 20a3 and the back edge 20a4 of the bottom film 20a, and the cover film 20k is arranged above it. Fig. 29B shows a state where the bottom film 20a and the cover film 20k are overlapped, and a welded portion 20l is formed around the reinforcing member 27.
   Fig. 30 shows a state where an opening 13b communicating with the inside of the packaging bag 1 is provided in an unsealed portion 13a provided in the lower end welded portion 13 of the packaging bag 1.
   Fig. 31 shows a state where the reinforcing member 27 is fixed only to the front edge 2c of the bottom portion 2.
   Fig. 32A is a schematic plan view of the process of attaching the reinforcing member 27 to the bottom portion 2. Figs. 32B to 32D are schematic cross-sectional views in the direction perpendicular to the conveying direction at the first to third positions, respectively.
   Fig. 33A shows a configuration in which the reinforcing member 27 is fixed by fixing the extension portions 3a1, 4a1 of the lower front portion 3a and the lower back portion 4a to the bottom portion 2 in a state where the extension portions 3a1, 4a1 surround the reinforcing member 27, and Fig. 33B is an enlarged view of area B in Fig. 33A.
   Fig. 34A shows a configuration in which the reinforcing member 27 is fixed by forming overlapping portions 3a2, 4a2 with the extension portions 3a1, 4a1 of the lower front portion 3a and the lower back portion 4a in a state where the extension portions 3a1, 4a1 surround the reinforcing member 27, and forming a welded portion in the overlapping portions 3a2, 4a2, and Fig. 34B is an enlarged view of area B in Fig. 34A.
   Fig. 35 is a perspective view showing a state where the packaging bag 1 is fixed to a non-dedicated member 30 using fixing means 29.
   Fig. 36A is a perspective view of the outer packaging body 32b provided with the first and second easy-to-cut portions 32b3, 32b4. Fig. 36B shows a state after the outer packaging body 32b is cut and opened along the first easy-to-cut portion 32b3 from the state of Fig. 36A. Fig. 36C shows the cut-out piece 32b5 obtained by cutting the outer packaging body 32b along the second easy-to-cut portion 32b4 from the state of Fig. 36B, which is folded into a triangular prism shape to form the reinforcing member 27.
   Fig. 37A is a perspective view of another embodiment of the outer packaging body 32b provided with the first and second easy-to-cut portions 32b3, 32b4. Fig. 37B shows a state after the outer packaging body 32b is cut and opened along the first easy-to-cut portion 32b3 from the state of Fig. 37A. Fig. 37C shows the cut-out piece 32b5 obtained by cutting the outer packaging body 32b along the second easy-to-cut portion 32b4 from the state of Fig. 37B.
   Fig. 38A is a perspective view of the packaging bag 1 with the bottom portion 2 facing upward and the reinforcing member 27 made of the cut-out piece 32b5. Fig. 38B shows a state after the reinforcing member 27 is fixed to the bottom portion 2 from the state of Fig. 38A.
   Fig. 39A is a plan view showing a state where the packaging bag 1 is stored in the outer packaging body 32c, and Fig. 39B is a cross-sectional view along the line B-B in Fig. 39A.
   Fig. 40A shows a state after the lid portion 32c5 is opened from the state of Fig. 39B. Fig. 40B shows a state where the peripheral surface portion 21 rises with heating and the front portion 3 comes into contact with the edge 32c2 from the state of Fig. 40A. Fig. 40C shows a state where the peripheral surface portion 21 further rises from the state of Fig. 40B, and the front facing portion 3c comes into contact with the edge 32c2, suppressing the lifting of the front edge 2c.
   Figs. 41A and 41B are perspective views of the holding jig 44. Figs. 41A and 41B show states where the first support portion 44a is in the holding state and the released state, respectively.
   Fig. 42A shows a state after a part of the bottom portion 2 is inserted into the gap 44g from the state of Fig. 41B, and Fig. 42B shows a state after the bottom portion 2 is further inserted from the state of Fig. 42A, and three sides of the bottom portion 2 are supported by the second to fourth support portions 44b to 44d.
   Fig. 43 shows a state where the first support portion 44a is brought into the holding state from the state of Fig. 42B, and all four sides of the bottom portion 2 are supported by the first to fourth support portions 44a to 44d.
   Fig. 44A is a perspective view showing a state after the holding jig 44 is attached to the adhesive application device 45. Fig. 44B shows a state after the conveying table 45c is moved to the first position from the state of Fig. 44A. Fig. 44C shows a state after the conveying table 45c is moved to the second position from the state of Fig. 44B.
   Fig. 45A shows a state after the holding jig 44 is removed from the adhesive application device 45 from the state of Fig. 44C, and the reinforcing member 27 is superimposed so as to overlap the bottom portion 2. Fig. 45B shows a state where the reinforcing member 27 is pressed against the bottom portion 2 by the pressing portion 46 from the state of Fig. 45A.
   Fig. 46A is a plan view showing a state where the packaging bag 1 is stored in an outer packaging body 8 with an illustration 8j, and Fig. 46B is a cross-sectional view along the line B-B in Fig. 46A.
   Fig. 47 shows a sheet 8a for forming the outer packaging body 8 of Fig. 46.
   Figs. 48A to 48B show a state where the peripheral surface portion 21 rises with heating from the state of Fig. 46 and pushes up the first and second top portions 8e1, 8e2; Fig. 48A is a cross-sectional view corresponding to Fig. 46B, and Fig. 48B is a right side view of Fig. 48A.
   Fig. 49 is a cross-sectional view corresponding to Fig. 48A, showing a state where the peripheral surface portion 21 has further risen from the state of Fig. 48A.
   Fig. 50A is a perspective view of the vicinity of the bottom portion 2 of the packaging bag 1, and Fig. 50B is a bottom view of the packaging bag 1 of Fig. 50A.
   Fig. 51 is a schematic cross-sectional view of the packaging bag 1 of Fig. 50. Contents are not shown.
   Figs. 52A and 52B correspond to Figs. 50A and 50B, respectively, and show modified examples of the lower end welded portion 13.
   Figs. 53A to 53C show the process of laying down the peripheral surface portion 21 toward the back edge 2d side after filling the packaging bag 1 with contents W.
   Fig. 54A shows a packaging bag 1 in which the lower end welded portion 13 having a sharp-cornered intersection point 13f is formed, and Fig. 54B shows a packaging bag 1 in which the lower end welded portion 13 having a curved inner edge 13c2 is formed.
(Fifth Aspect)
   Fig. 55 is a perspective view of the packaging bag unit 50 according to the first embodiment of the present invention.
   Fig. 56A is a cross-sectional view passing through the center surface in the left-right direction of the packaging bag unit 50 of Fig. 55. Fig. 56B shows a state after the shape memory member 51a is deformed so as to return to its original shape and the peripheral surface portion 21 is pushed up from the state of Fig. 56A.
   Fig. 57A is a perspective view showing a state where contents are stored in the packaging bag 1 included in the packaging bag unit 50 of Fig. 55. Fig. 57B is a perspective view of the packaging bag 1 in an opened state.
   Fig. 58 is a plan view showing the packaging bag 1 of Fig. 57.
   Fig. 59 is a cross-sectional view along the line A-A in Fig. 58.
   Fig. 60A is a perspective view of the packaging bag unit 50 according to the second embodiment of the present invention. Fig. 60B is a cross-sectional view passing through the center surface in the width direction of the packaging bag unit 50 of Fig. 60A.
   Figs. 61A and 61B show a state after the expandable member 51b expands and the peripheral surface portion 21 is pushed up from the state of Fig. 60B.
   Fig. 62 is a perspective view of the packaging bag unit 50 according to the third embodiment of the present invention.
   Fig. 63A is a cross-sectional view passing through the center surface in the left-right direction of the packaging bag unit 50 of Fig. 62. Fig. 63B shows a state after the elastic member 51c1 returns to its original shape and the peripheral surface portion 52a of the outer packaging 52 is pushed up from the state of Fig. 63A.
(Sixth Aspect)
   Fig. 64A is a perspective view of the packaging bag unit 50 according to the first embodiment of the present invention. Fig. 64B is a cross-sectional view passing through the center surface in the left-right direction of the packaging bag unit 50 of Fig. 64A.
   Figs. 65A and 65B show a state where, as the packaging bag 1 expands from the state of Fig. 64B, the upper portion 1c of the packaging bag 1 is lifted, the contents W move, and thereby the center of gravity of the contents W moves, causing the packaging bag 1 to rise.
   Fig. 66 is a plan view showing the packaging bag 1 included in the packaging bag unit 50 of Fig. 64.
   Fig. 67 is a cross-sectional view along the line A-A in Fig. 66.
   Fig. 68A is a perspective view of the packaging bag unit 50 according to the second embodiment of the present invention. Fig. 68B is a cross-sectional view passing through the center surface in the left-right direction of the packaging bag unit 50 of Fig. 68A.
   Figs. 69A and 69B show a state where, as the packaging bag 1 expands from the state of Fig. 68B, the dividing seal portion 1g peels off, causing the contents W to move, and thereby the center of gravity of the contents W moves, causing the packaging bag 1 to rise.
   Fig. 70A is a plan view of the packaging bag unit 50 according to the third embodiment of the present invention. Fig. 70B is a cross-sectional view passing through the center surface in the left-right direction of the packaging bag unit 50 of Fig. 70A.
   Figs. 71A and 71B show a state where, as the packaging bag 1 expands from the state of Fig. 70B, the contents W and the ground contact portion 1i move toward the lower end 1a, and thereby the center of gravity of the contents W moves, causing the packaging bag 1 to rise.

### [Description of Embodiments]

Hereinafter, embodiments of the present invention will be described with reference to the drawings. The features shown in the embodiments below can be combined with each other. In addition, the invention is established independently for each feature. Among the embodiments described below, elements not specified in the claims are arbitrary elements and can be omitted. The contents disclosed in each of the first to sixth aspects can be combined with each other.

### (First to Fourth aspects)

In the embodiments shown below, the following first to seventh inventions are disclosed, and the scope of claims relates to at least a part thereof.

### (First Invention)

In the present invention, there is provided a packaging bag for a microwave oven, made of a flexible film formed into a bag shape, comprising a bottom portion and a peripheral surface portion, wherein the bottom portion is made of a bottom film, the peripheral surface portion comprises a front portion and a back portion that face each other and are provided so as to stand from the bottom portion, the front portion and the back portion are configured to be integrally inclinable with respect to the bottom portion toward a front side or a back side of the packaging bag, and the bottom portion is provided with a reinforcing member that reinforces the bottom portion so as to suppress a curvature of the bottom film.

### (Second invention)

In the present invention, there is provided a cooking method for packaged food, comprising a heating step, wherein the packaged food comprises a packaging bag and food stored in the packaging bag, the packaging bag comprises a bottom portion and a peripheral surface portion provided so as to stand from the bottom portion, and in the heating step, heating of the food stored in the packaging bag by a microwave oven is started with the bottom portion grounded and the peripheral surface portion inclined such that an inclination angle with respect to a horizontal surface is 30° or less, and the peripheral surface portion becomes upright when heating is completed.

### (Third invention)

In the present invention, there is provided a packaging bag for a microwave oven, made of a flexible film formed into a bag shape, comprising a bottom portion and a peripheral surface portion, wherein the peripheral surface portion comprises a front portion and a back portion that face each other and are provided so as to stand from the bottom portion, the front portion and the back portion are configured to be integrally inclinable with respect to the bottom portion toward a front side or a back side of the packaging bag, and the bottom portion is developable.

### (Fourth Invention)

In the present invention, there is provided a cooking method for packaged food, comprising a heating step, wherein the packaged food comprises the packaging bag according to the third invention and food stored in the packaging bag, and in the heating step, heating of the food stored in the packaging bag by a microwave oven is started with the bottom portion developed and grounded and the peripheral surface portion inclined such that an inclination angle with respect to a horizontal surface is 30° or less.

### (Fifth invention)

In the present invention, there is provided a packaging bag for a microwave oven, made of a flexible film formed into a bag shape, comprising a bottom portion and a peripheral surface portion, wherein the peripheral surface portion comprises a front portion and a back portion that face each other and are provided so as to stand from the bottom portion, the front portion and the back portion are configured to be integrally inclinable, the front portion is provided with a steam vent seal portion that forms a steam flow path as an internal pressure of the packaging bag increases, the bottom portion is developable, and the peripheral surface portion is inclined such that the bottom portion and the back portion are valley-folded with the bottom portion developed, and an inclination angle with respect to the bottom portion is 30° or less.

### (Sixth invention)

In the present invention, there is provided a cooking method for packaged food, comprising a heating step, wherein the packaged food comprises a packaging bag and food stored in the packaging bag, the packaging bag comprises a bottom portion and a peripheral surface portion provided so as to stand from the bottom portion, and in the heating step, heating of the food stored in the packaging bag by a microwave oven is started with the peripheral surface portion inclined such that an inclination angle with respect to a horizontal surface is 30° or less, and the peripheral surface portion becomes upright when heating is completed.

### (Seventh invention)

In the present invention, there is provided a method for manufacturing a packaging bag with a reinforcing member for a microwave oven, comprising a reinforcing member attaching step, wherein in the reinforcing member attaching step, a reinforcing member is attached to a bottom portion of a packaging bag in a state where the bottom portion is developed, the packaging bag is configured by forming a flexible film into a bag shape, the packaging bag comprises a bottom portion and a peripheral surface portion, the bottom portion is made of a bottom film, the peripheral surface portion includes a front portion and a back portion that face each other and are provided so as to stand from the bottom portion, the front portion and the back portion are configured to be integrally inclinable with respect to the bottom portion toward a front side or a back side of the packaging bag, and the reinforcing member is configured to reinforce the bottom portion so as to suppress a curvature of the bottom film.

### 1. First Embodiment

### 1.1. Configuration of Packaging Bag 1

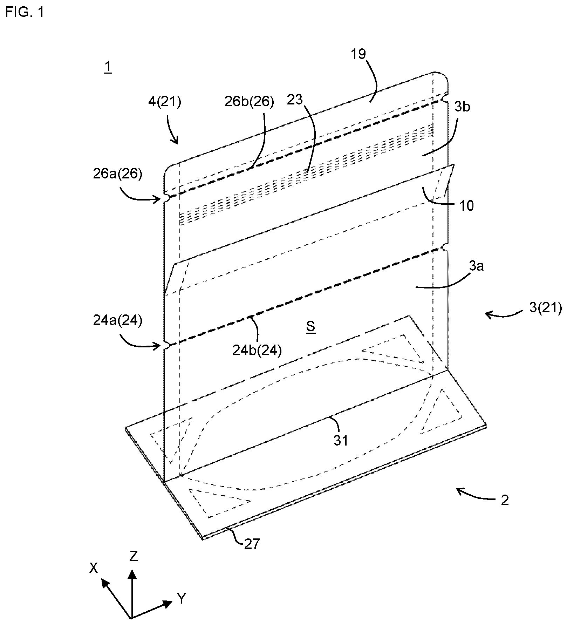

As shown in Fig. 1, the packaging bag 1 of the first embodiment of the present invention is a packaging bag for a microwave oven in which a flexible film is formed into a bag shape. The packaging bag 1 includes a sealed space S inside, and contents are stored in the sealed space S. The packaging bag 1 is suitably used for storing food to be heated and cooked in a microwave oven, and is particularly suitably used for storing instant noodles as contents.

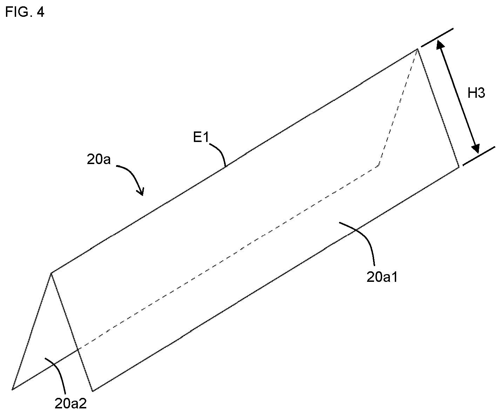

As shown in Figs. 1 to 3B, the packaging bag 1 includes a bottom portion 2 and a peripheral surface portion 21. The bottom portion 2 is composed of a bottom film 20a shown in Fig. 4, and a reinforcing member 27 is provided as shown in Fig. 1. The peripheral surface portion 21 is provided so as to stand from the bottom portion 2, and includes a front portion 3 and a back portion 4 that face each other in the front-back direction.

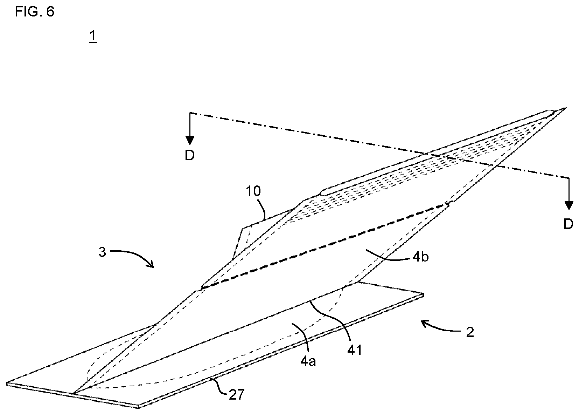

The front portion 3 and the back portion 4 are welded (heat-sealed) to each other at their end portions in the left-right direction (hereinafter also referred to as side ends). In addition, the bottom film 20a of the bottom portion 2 is welded to the front portion 3 and the back portion 4. The film is formed into a bag shape by welding the bottom portion 2, the front portion 3, and the back portion 4 to each other. Above the fold lines 31 and 41 shown in Figs. 1 and 6, the front portion 3 and the back portion 4 are welded to each other, and below the fold lines 31 and 41, the bottom portion 2 and the front portion 3 are welded to each other, and the bottom portion 2 and the back portion 4 are welded to each other. Below the fold lines 31 and 41, the front portion 3 and the back portion 4 are not welded to each other, and the bottom portions 2 are not welded to each other. Therefore, the bottom portion 2 is developable (unfoldable), and the bottom portion 2 can be spread into a flat state.

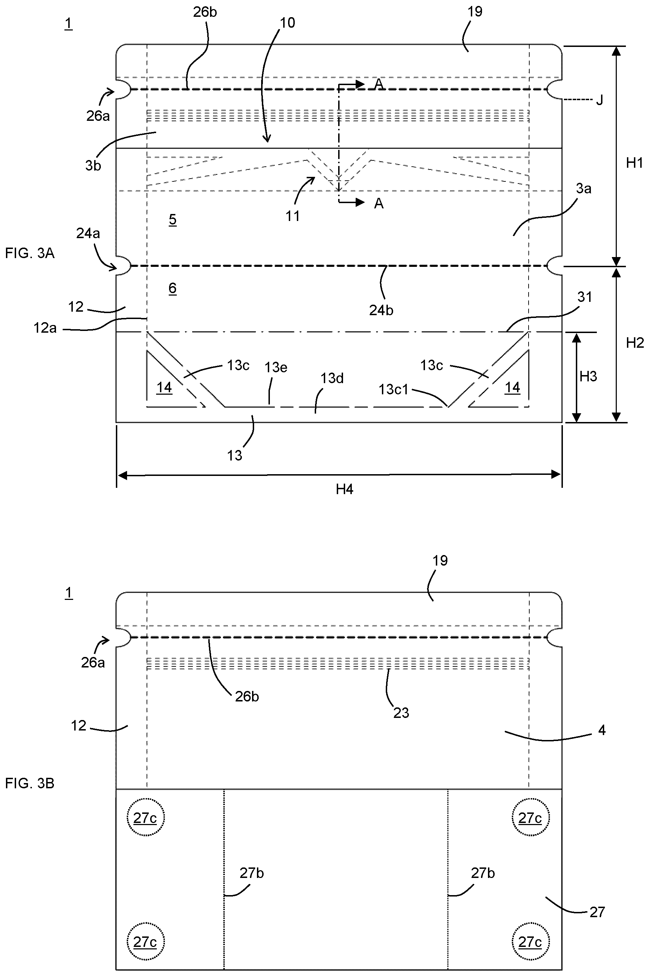

Figs. 3A and 3B are views showing the packaging bag 1 of Fig. 1 in a plan view and a back view, respectively. The plan view means that the packaging bag 1 is flattened in a state where no contents are included in the packaging bag 1, and viewed from the direction perpendicular to the front portion 3 in that state. The back view means that the packaging bag 1 in the same state is viewed from the direction perpendicular to the back portion 4. In this disclosure, the top, bottom, left, and right in Fig. 3A are described as the top, bottom, left, and right of the packaging bag 1. Specifically, the bottom portion 2 side is the bottom side, and the direction in which the front portion 3 (and the back portion 4) stands from the bottom portion 2 is the top side. In addition, the left and right when the front portion 3 is placed in front are defined as the left and right of the packaging bag 1. Furthermore, the front portion 3 side is the front side, and the back portion 4 side is the back side. In the following description, the top-bottom direction may be referred to as the height direction. As shown in Figs. 3A and 3B, the packaging bag 1 is formed so as to be line-symmetric with respect to the center line in the left-right direction.

As shown in Figs. 1 to 2B, the packaging bag 1 can stand on its own with the bottom portion 2 at the bottom. With such a configuration, compared with a flat bag-shaped packaging bag in which the front portion 3 and the back portion 4 are welded to each other at the bottom without providing the bottom portion 2, a large volume inside the packaging bag 1 can be secured, and when the contents are food, the packaging bag 1 can be stood up and used as tableware after heating.

The front portion 3 includes a lower front portion 3a and an upper front portion 3b. The lower front portion 3a is welded to the bottom film 20a of the bottom portion 2. The lower front portion 3a and the upper front portion 3b are welded to each other at a fin seal portion 10 formed by overlapping their inner surfaces. By providing the fin seal portion 10, a large volume inside the packaging bag 1 can be secured.

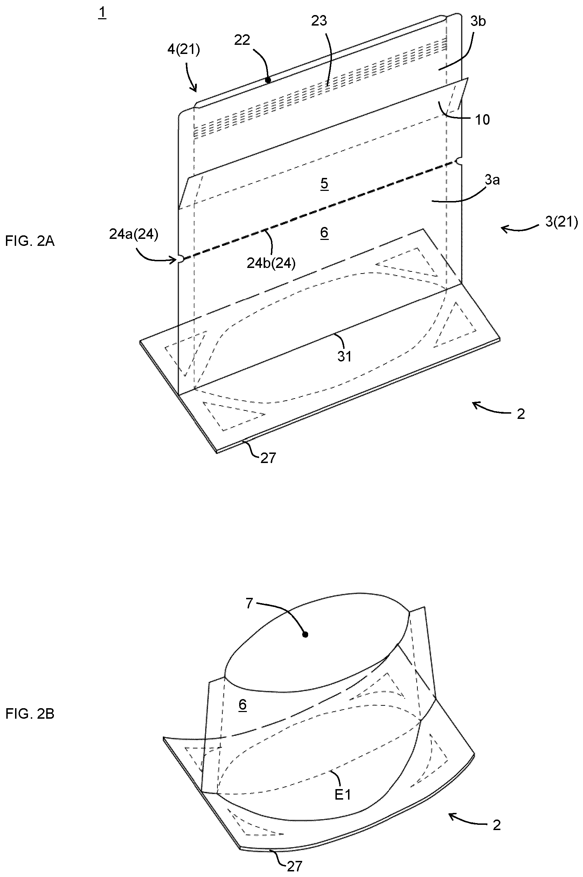

The peripheral surface portion 21 of the packaging bag 1 is provided with an upper opening portion 26, an opening/closing member 23, and an opening portion 24. The upper end of the packaging bag 1 is sealed by providing an upper end welded portion 19 that welds the front portion 3 and the back portion 4 along the left-right direction. The upper opening portion 26 is a portion for opening the upper end of the packaging bag 1. By tearing the peripheral surface portion 21 along the left-right direction at the upper opening portion 26 and separating the portion on the upper end side of the peripheral surface portion 21 including the upper end welded portion 19, an opening 22 that opens upward is formed as shown in Fig. 2A. Such a configuration is preferable from the viewpoint of hygiene because the inner surface of the packaging bag 1 is not exposed to the outside in the state before opening.

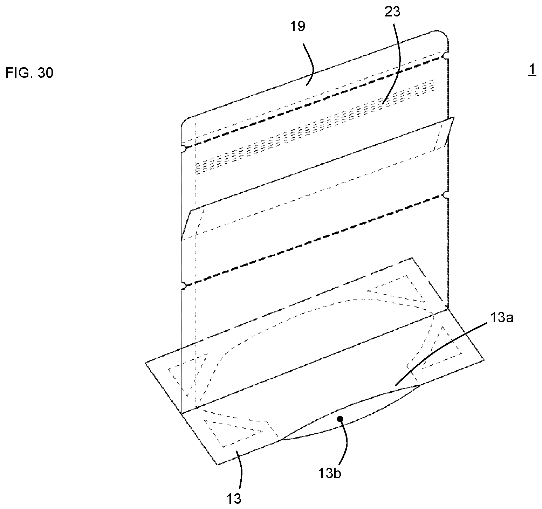

In one example, the upper end welded portion 19 is not formed before the contents are filled into the packaging bag 1, and the contents are filled into the packaging bag 1 through the opening 22 shown in Fig. 2A. In this case, the contents are likely to adhere to the inner surface of the packaging bag 1, and in particular, it is not preferable from a hygienic viewpoint that the contents adhere to the opening/closing member 23. In order to solve this problem, in the modified example shown in Fig. 30, by providing an unsealed portion 13a in the lower end welded portion 13, an opening 13b communicating with the inside of the packaging bag 1 is provided in the bottom portion 2. In this case, the contents can be filled into the packaging bag 1 through the opening 13b, and adhesion of the contents to the opening/closing member 23 is suppressed. After filling the contents, the opening 13b is welded and sealed. When there is no opening/closing member 23, the upper end welded portion 19 is formed before filling the contents through the opening 13b, and the upper end of the packaging bag 1 is sealed. On the other hand, when there is an opening/closing member 23, the upper end welded portion 19 may be formed either before or after filling the contents through the opening 13b, or the upper end welded portion 19 may not be formed. In addition, when the packaging bag 1 has a fin seal portion 10, the opening 13b is preferably provided on the fin seal portion 10 side. That is, it is preferable to provide the unsealed portion 13a between the front portion 3 where the fin seal portion 10 is provided and the bottom portion 2 to form the opening 13b.

The upper opening portion 26 includes a tear initiation portion 26a that serves as a starting point for tearing the peripheral surface portion 21, and a tear line 26b on which a line indicating a portion to be cut out is printed. The packaging bag 1 may be opened by tearing the peripheral surface portion 21 starting from the tear initiation portion 26a, or may be opened by cutting the peripheral surface portion 21 along the tear line 26b using a cutting tool such as scissors. The tear initiation portion 26a is configured by, for example, a notch or a cut. Instead of the tear line 26b, a half-cut line extending in the circumferential direction of the peripheral surface portion 21 may be provided, or a band-shaped film may be arranged by welding so as to extend in the circumferential direction of the peripheral surface portion 21, and the peripheral surface portion 21 may be configured to be tearable along the band-shaped film by pulling the band-shaped film from the end portion.

The packaging bag 1 may be configured without providing the upper end welded portion 19 and the upper opening portion 26. In this case, the front portion 3 and the back portion 4 are not welded to each other at the upper end of the packaging bag 1, and the opening 22 is formed, so it is not necessary to open the upper end of the packaging bag 1.

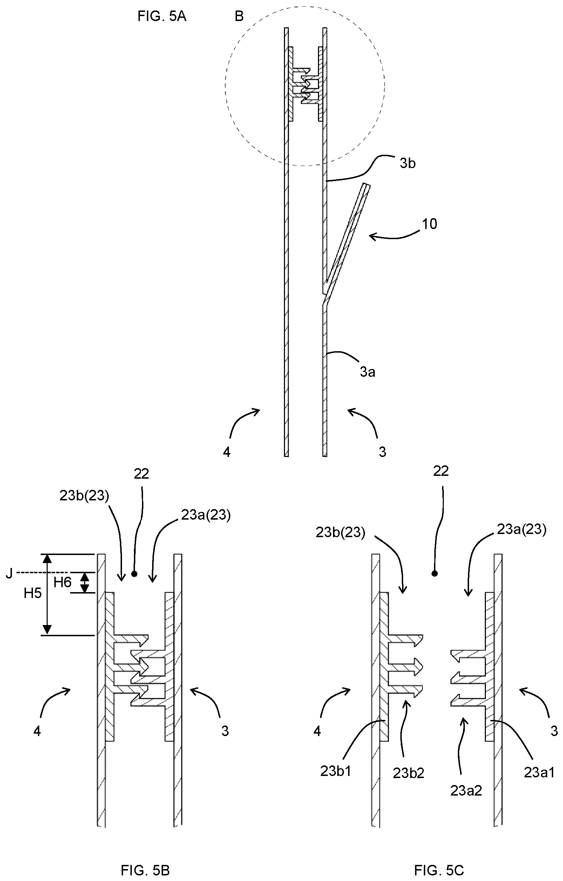

The opening/closing member 23 is configured to be capable of opening and closing the opening 22 in the packaging bag 1 whose upper end is opened at the upper opening portion 26. Figs. 5A to 5C are explanatory views of how the opening 22 of the packaging bag 1 is opened and closed by the opening/closing member 23, and the upper ends of the front portion 3 and the back portion 4 in the figures coincide with the formation position of the tear line 26b. In addition, the position J shown in Fig. 5B indicates the position of the lower end of the upper opening portion 26 in the top-bottom direction (in this embodiment, the position J of the lower end of the tear initiation portion 26a shown in Fig. 3A). The opening/closing member 23 includes a front side engagement member 23a and a back side engagement member 23b that can be engaged with each other. The base portion 23a1 of the front side engagement member 23a and the base portion 23b1 of the back side engagement member 23b are fixed by being welded to the inner surfaces of the front portion 3 and the back portion 4, respectively. As shown in Fig. 5B, the opening 22 is closed by engaging the hook portion 23a2 of the front side engagement member 23a and the hook portion 23b2 of the back side engagement member 23b, and the opening 22 is opened by releasing the engagement as shown in Fig. 5C.

The entire surfaces of the base portions 23a1 and 23b1 may be welded to the front portion 3 and the back portion 4, respectively, but it is preferable that the surfaces located above and below the hook portions 23a2 and 23b2 are welded to the front portion 3 and the back portion 4, respectively. Furthermore, for the base portion 23b1 of the back side engagement member 23b, the surface located above and below the hook portion 23b2 is welded to the inner surface of the back portion 4, and for the front side engagement member 23a welded to the front portion 3 where the fin seal portion 10 is provided, it is more preferable that the surface above the hook portion 23a2 is welded to the inner surface of the front portion 3, and the surface below the hook portion 23a2 is not welded to the front portion 3. In other words, it is more preferable to provide an unsealed portion with the front portion 3 so as to extend from the lower end of the base portion 23a1 to the upper end of the hook portion 23a2. In this case, when the internal pressure of the heated packaging bag 1 increases and the packaging bag 1 expands, it becomes difficult for the force in the direction of opening the opening/closing member 23 to be applied to the opening/closing member 23, and leakage of contents and steam from the opening/closing member 23 is suppressed.

In addition, as shown in Fig. 5B, the distance H5 in the top-bottom direction between the upper end of the hook portions 23a2 and 23b2 located on the upper side (in this embodiment, the upper end of the hook portion 23b2 of the back side engagement member 23b) and the peripheral edge of the opening 22 (in other words, the tear line 26b of the upper opening portion 26) is, for example, 3 mm or more and 20 mm or less, preferably 5 mm or more, and can be, for example, 10 mm. The distance H6 in the top-bottom direction between the upper end of the opening/ closing member 23 (in other words, the upper ends of the base portions 23a1 and 23b1) and the lower end of the upper opening portion 26 (in this embodiment, the lower end of the tear initiation portion 26a)is, for example, 0.5 mm or more and 7 mm or less, preferably 1 mm or more, and can be, for example, 2 mm. By setting the distances H5 and H6 as described above, a sufficiently large margin for placing a finger on the upper end of the packaging bag 1 when opening the opening 22 with the opening/closing member 23 can be secured.

The opening portion 24 is a portion for opening the packaging bag 1. In this embodiment, the opening portion 24 includes a tear initiation portion 24a that serves as a starting point for tearing the peripheral surface portion 21, and a tear line 24b on which a line indicating a portion to be cut out is printed. The packaging bag 1 may be opened by tearing the peripheral surface portion 21 starting from the tear initiation portion 24a, or may be opened by cutting the peripheral surface portion 21 along the tear line 24b using a cutting tool such as scissors. The tear initiation portion 24a is configured by, for example, a notch or a cut. Instead of the tear line 24b, a half-cut line extending in the circumferential direction of the peripheral surface portion 21 may be provided, or a band-shaped film may be arranged by welding so as to extend in the circumferential direction of the peripheral surface portion 21, and the peripheral surface portion 21 may be configured to be tearable along the band-shaped film by pulling the band-shaped film from the end portion.

As shown in Figs. 1 and 2A, the packaging bag 1 includes an upper to-be-removed portion 5 and a lower main body 6 in the top-bottom direction with the opening portion 24 as a boundary. By tearing the peripheral surface portion 21 in the circumferential direction at the opening portion 24 and removing the to-be-removed portion 5 above the opening portion 24, the main body 6 having the opening 7 as shown in Fig. 2B is obtained. The main body 6 is used as tableware when eating the contents in the packaging bag 1.

As shown in Fig. 2A, the opening portion 24 is provided at a position closer to the bottom portion 2 than the opening/closing member 23. That is, the opening/closing member 23 is provided on the to-be-removed portion 5. Therefore, when the to-be-removed portion 5 is removed during opening, the opening/closing member 23 is also removed together. Therefore, the opening/closing member 23 does not get in the way when eating the contents.

The opening portion 24 is provided at a position closer to the bottom portion 2 than the fin seal portion 10. That is, the fin seal portion 10 is provided on the to-be-removed portion 5. Therefore, when the to-be-removed portion 5 is removed during opening, the fin seal portion 10 is also removed together. Therefore, the fin seal portion 10 does not get in the way when eating the contents.

As shown in Fig. 3A, a steam vent seal portion 11 is formed in the peripheral surface portion 21 of the packaging bag 1. The steam vent seal portion 11 of this embodiment is provided on the fin seal portion 10. The steam vent seal portion 11 is a welded portion with a lower welding strength than other welded portions. In the steam vent seal portion 11, when the internal pressure of the packaging bag 1 increases due to steam generated inside by heating the packaging bag 1, a steam flow path is formed accordingly. The steam inside the packaging bag 1 is discharged to the outside from the steam vent seal portion 11.

As shown in Figs. 3A and 3B, a side end welded portion 12 that welds the front portion 3 and the back portion 4 is provided at the side end of the packaging bag 1. Thereby, the front portion 3 and the back portion 4 are fixed in the front-back direction. Furthermore, a lower end welded portion 13 that welds the bottom portion 2 and the front portion 3, and the bottom portion 2 and the back portion 4, respectively, is provided at the lower end of the packaging bag 1. The lower end welded portion 13 welds the bottom portion 2 and the front portion 3, and the bottom portion 2 and the back portion 4, respectively, at the side end and the lower end of the packaging bag 1 (area surrounded by the alternate long and short dash line in Fig. 3A).

As shown in Fig. 3A, the lower end welded portion 13 includes a pair of sloped portions 13c and a central portion 13d. The sloped portions 13c are portions welded with a slope (obliquely) from the side end of the packaging bag 1 toward the central portion lower end. The central portion 13d is provided between the pair of sloped portions 13c and is formed in a straight line shape. By providing the central portion 13d in a straight line shape, it becomes easy to use the main body 6 as tableware. An air pocket 14 is provided outside the sloped portions 13c. The air pocket 14 is formed in a triangular shape and is a space where air that could not be completely discharged to the outside by welding in the lower end welded portion 13 remains. By providing the air pocket 14, the residual air in the lower end welded portion 13 gathers in the air pocket 14, and the welding strength is improved.

As shown in Figs. 1 and 3B, the bottom portion 2 is provided with a reinforcing member 27 that reinforces the bottom portion 2 so as to suppress bending of the bottom film 20a. In this embodiment, as shown in Fig. 4, the bottom film 20a bent in a V-shape at the center line E1 is inserted between the front portion 3 and the back portion 4 to form a bag shape, and then the bottom film 20a is developed, and a plate-shaped reinforcing member 27 is attached to the entire lower surface 20a2 of the bottom film 20a (the outer surface of the bottom film 20a among its two opposing surfaces, which faces the outside of the packaging bag 1) as shown in Figs. 1 and 3B.

As shown in Figs. 1 and 3, in the state where the bottom film 20a is developed and the reinforcing member 27 is attached, a valley-folded fold line 31 is formed in the front portion 3, and the inner surface of the portion of the lower front portion 3a below the fold line 31 in the top-bottom direction of the packaging bag 1 approaches the upper surface 20a1 of the bottom film 20a. In addition, a valley-folded fold line 41 (see Fig. 6) is formed in the back portion 4, and the inner surface of the portion (lower back portion 4a) of the back portion 4 below the fold line 41 in the top-bottom direction of the packaging bag 1 approaches the upper surface 20a1 of the bottom film 20a.

The reinforcing member 27 preferably has higher rigidity than the bottom film 20a. The rigidity in this disclosure indicates the difficulty of bending a member when a force is applied to bend the member, and is represented by, for example, indicators such as bending rigidity, elastic modulus (bending elastic modulus, Young's modulus), and bending strength. By providing the reinforcing member 27 having higher rigidity than the bottom film 20a on the bottom portion 2, when heating is performed by a microwave oven with the bottom portion 2 grounded and the peripheral surface portion 21 inclined as described later, it is possible to effectively prevent the bottom film 20a from bending in the front-back direction (short direction) so that the bottom portion 2 is separated from the grounded surface G as the packaging bag 1 expands.

Furthermore, the reinforcing member 27 of this embodiment has flexibility to allow bending such as curving or bending in the left-right direction (longitudinal direction) of the bottom film 20a as the packaging bag 1 expands and the front portion 3 and the back portion 4 separate from each other in the front-back direction. By curving the bottom film 20a in the left-right direction, the fold line 31 of the front portion 3 and the fold line 41 of the back portion 4 can be unfolded as shown in Fig. 2B, and the volume of the sealed space S of the packaging bag 1 expands near the bottom portion 2, improving the self-standing stability of the packaging bag 1.

The material of the reinforcing member 27 is not particularly limited as long as it can achieve high rigidity enough to suppress the curving of the bottom film 20a, and examples thereof include paper, synthetic paper, plastic, cardboard, nonwoven fabric, foam (e.g., sponge), and a composite material of paper and plastic. Since cardboard and foam have excellent heat insulating properties, when the reinforcing member 27 is made of cardboard or foam, it is easy to place the packaging bag 1 on the palm of the hand when using it as tableware. When paper is used as the material, it is preferable to use paperboard such as one for paper containers or cardboard. The thickness of the paper constituting the reinforcing member 27 is, for example, 0.2 mm or more and 5 mm or less, preferably 0.3 mm or more and 3 mm or less, and more preferably 0.4 mm or more and 2 mm or less. Specifically, this thickness can be, for example, any value of 0.2, 0.3, 0.4, 0.5, 0.6, 0.7, 0.8, 0.9, 1, 1.5, 2.5, 3, 3.5, 4, 4.5, 5 (unit: mm), and may be within the range between any two of the numerical values exemplified here, for example, 0.68 mm. The basis weight of the paper constituting the reinforcing member 27 is, for example, 200 g/m² or more and 900 g/m² or less, preferably 250 g/m² or more and 800 g/m² or less, and more preferably 300 g/m² or more and 600 g/m² or less. Specifically, this basis weight can be, for example, any value of 200, 250, 300, 350, 400, 450, 500, 550, 600, 650, 700, 750, 800, 850, 900 (unit: g/m²), and may be within the range between any two of the numerical values exemplified here, for example, 415 g/m².

The reinforcing member 27 may be processed to allow bending in the left-right direction while suppressing bending of the bottom film 20a in the front-back direction. For example, when paper is used as the material of the reinforcing member 27, the reinforcing member 27 may be processed to form fold lines 27b that are easy to fold in a mountain fold along the front-back direction near both edges in the left-right direction, so that the bottom film 20a is bent in the left-right direction as the packaging bag 1 expands. The fold line 27b preferably has a deviation of 0 to 3 cm from the starting point 13c1 on the central portion 13d side of the sloped portion 13c in the left-right direction. Specifically, this deviation is, for example, 0.0, 0.5, 1.0, 1.5, 2.0, 2.5, 3.0 cm, and may be within the range between any two of the numerical values exemplified here. Where the distance in the top-bottom direction between the inner edge 13e of the lower end welded portion 13 and the fold line 31 is H7, the fold line 27b is preferably provided at a position of α × H7 from the inner edge 12a of the side end welded portion 12. α is, for example, 0.7 to 1.3, and specifically, for example, 0.7, 0.8, 0.9, 1.0, 1.1, 1.2, 1.3, and may be within the range between any two of the numerical values exemplified here.

The reinforcing member 27 may be attached to the bottom film 20a with an adhesive. Alternatively, when plastic is used as the reinforcing member 27, or when paper whose attachment surface is coated with a resin film is used, the reinforcing member 27 may be attached by welding. The adhesive is preferably a heat-resistant adhesive. In this case, even when the contents become hot due to heating and heat is transferred to the adhesive, peeling of the reinforcing member 27 is suppressed. The reinforcing member 27 is preferably attached to the bottom film 20a over the entire surface or the entire circumference of the reinforcing member 27 or the bottom film 20a from the viewpoint of rigidity. On the other hand, the reinforcing member 27 may be locally attached to the bottom film 20a at the four corners of the reinforcing member 27 or the bottom film 20a, as shown by the adhesion portion 27c in Fig. 3B. This configuration is preferable from the viewpoints of productivity and material costs, and also from the viewpoint that heat from the packaging bag 1 is less likely to be transferred to the reinforcing member 27.

The reinforcing member 27 may be provided on the lower surface 20a2 side of the bottom film 20a as in this embodiment, or on the upper surface 20a1 side (the surface of the bottom film 20a of the two opposing surfaces, which surfaces the inside of the packaging bag 1). When the reinforcing member 27 is provided on the lower surface 20a2 side, a wider variety of materials can be used because the reinforcing member 27 does not come into contact with the contents. When the reinforcing member 27 is provided on the upper surface 20a1 side, the reinforcing member 27 may be attached to the bottom film 20a with an adhesive or by welding, but depending on the shape of the reinforcing member 27, it may simply be placed on the bottom portion 2 without being attached.

The reinforcing member 27 may be provided so as to cover the entire lower surface 20a2 or the entire upper surface 20a1 of the bottom film 20a, or may be provided so as to cover a part thereof. From the viewpoint of effectively suppressing the curving of the bottom film 20a, the reinforcing member 27 is preferably provided at least near both ends of the bottom portion 2 in the left-right direction of the packaging bag 1, and more preferably provided at least along the left and right edges of the bottom portion 2.

The reinforcing member 27 is preferably provided so as to cover 20% or more, more preferably 40% or more, of the surface area of the lower surface 20a2 or the upper surface 20a1 of the bottom film 20a, and more specifically, may be any value of 20, 30, 40, 50, 60, 70, 80, 90, 100 (unit: %), and may be within the range between any two of the numerical values exemplified here.

In the packaging bag 1 shown in Fig. 3A, the length H1 of the to-be-removed portion 5 in the top-bottom direction can be, for example, 6 to 14 cm, and is 10 cm in this embodiment. The length H2 of the main body 6 in the top-bottom direction is, for example, 4 to 20 cm, preferably 6 to 18 cm, and 7 cm in this embodiment. If the length H2 is too small, the contents may overflow from the main body 6 when the food in the packaging bag 1 is heated for cooking with cooking liquid (for example, when instant noodles is heated for cooking with water or seasoning), and if it is too large, it becomes difficult to take out the contents.

The length H2 is preferably longer than the length H3 from the center line E1 of the bottom film 20a to the lower end (see Figs. 3A and 4), and more preferably 2 cm or more longer than H3. The value of (H2 - H3) is, for example, 2 to 14 cm, and specifically, for example, 2, 3, 4, 5, 6, 7, 8, 9, 10, 11, 12, 13, 14 cm, and may be within the range between any two of the numerical values exemplified here. If the value of (H2 - H3) is less than 2 cm, the height of the peripheral wall when the packaging bag 1 is opened becomes low, so the amount of contents is limited.

The length H3 is preferably between 3 and 6 cm, and more specifically, it can be any of the following values, for example: 3, 3.5, 4, 4.5, 5, 5.5, or 6 cm. It could also be within a range between any two of these example values, such as 4.5 cm. Since the main body 6 is also used as tableware, it's preferable for it to be around this size.

The front portion 3 and the back portion 4, which make up the peripheral surface portion 21, are designed to be able to incline together towards the front or back of the packaging bag 1 with respect to the bottom portion 2. This design allows the packaging bag 1 to be heated in a microwave oven with the bottom portion 2 on the ground and the peripheral surface portion 21 inclined, as will be explained later. In this embodiment, as shown in Fig. 6, the front portion 3 and the back portion 4 can incline together towards the back of the packaging bag 1. When this happens, the back portion 4 is folded so that the lower back portion 4a and the upper back portion 4b, located below and above the fold line 41 respectively, move closer to each other.

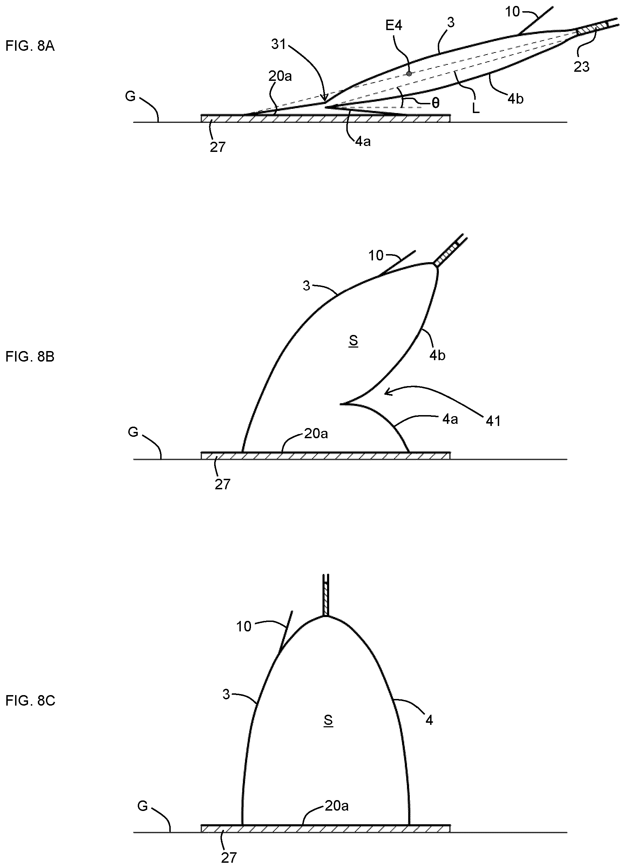

In one example, the front portion 3 has a steam vent seal portion 11 (shown in Fig. 3), and the bottom portion 2 is developable. As shown in Figs. 6 and 8, the peripheral surface portion 21 is in a state where the bottom portion 2 and the back portion 4 are folded inwards (like a valley fold) with the bottom portion 2 developed, and it's also lying down somewhat against the bottom portion 2 (meaning the inclination angle compared to the bottom portion 2 is 30° or less). With this setup, when the packaging bag 1 is placed in a microwave oven so that the bottom portion 2 is on the bottom, the steam vent seal portion 11 on the front portion 3 will naturally placed on the upper side of the packaging bag 1. This helps prevent the contents from leaking out through the steam path in the steam vent seal portion 11 and also allows the contents to be heated efficiently. This inclination angle is, for instance, between 0° and 30°, preferably between 0° and 20°, and even more preferably between 0° and 10°. More specifically, this angle could be any of the following values: 0, 5, 10, 15, 20, 25, or 30 degrees, or it could be within a range between any two of these numbers.

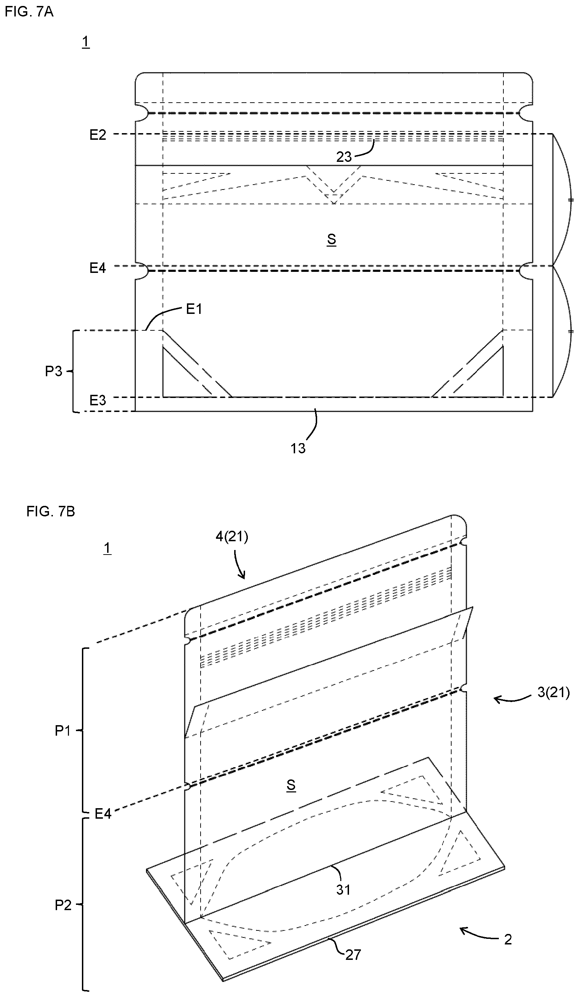

In the present embodiment, by closing the opening/closing member 23, the packaging bag 1 becomes sealed, creating a sealed space S inside where the contents are stored. The upper end E2 of this sealed space S is near the opening/closing member 23, as shown in Fig. 7A. For example, if the entire surfaces of the base portions 23a1 and 23b1 of the opening/closing member 23 are sealed to the front portion 3 and the back portion 4 respectively, then the lower ends of the hook portions 23a2 and 23b2 of the opening/closing member 23 become the upper end of the sealed space S. Alternatively, if there's an unsealed portion between the front portion 3 and the hook portion 23a2, starting from the lower end of the base portion 23a1 and going up to the upper end of the hook portion 23a2 (as mentioned earlier), then as the packaging bag 1 expands, the sealed space S will extend up to this unsealed portion. In that case, the upper end E2 of the sealed space S will be the upper end of the hook portion 23a2. On the other hand, the lower end E3 of the sealed space S is located at the upper end of the part of the lower end welded portion 13 that's at the bottom of the packaging bag 1 (in other words, the lower end of the unsealed portion on the inner surface of the front portion 3), as shown in Fig. 7A.

In Fig. 7A, E4 shows the center line of the sealed space S in the up-down direction of the packaging bag 1. The packaging bag 1 in this embodiment is designed so that the total weight of the lower part of the peripheral surface portion 21 (below the center line E4 of the sealed space S) plus the weight of the bottom portion 2 (the weight of the second portion P2 shown in Fig. 7B) is greater than the weight of the upper part of the peripheral surface portion 21 (above the center line E4, which is the weight of the first portion P1 shown in Fig. 7B). In this embodiment, the weight of the bottom portion 2 is the combined weight of the bottom film 20a and the reinforcing member 27. Where the weight of the first portion P1 is W1 and the weight of the second portion P2 is W2, then the ratio W2/W1 is, for example, between 1.1 and 10, preferably between 1.5 and 7, and more specifically, it could be any of the following values: 1.1, 1.5, 2, 3, 4, 5, 6, 7, 8, 9, or 10. It could also be within a range between any two of these example values.

Furthermore, it's even more preferable if the combined weight of a part of the front portion 3 that is below the center line E1 of the bottom film 20a in a flat view of the packaging bag 1, and a part of the bottom portion 2 that is also below the center line E1 of the bottom film 20a in the flat view (this combined weight is the weight of the third portion P3 shown in Fig. 7A) is greater than the weight of the upper part of the peripheral surface portion 21 that is above the center line E4 (the weight of the first portion P1). Where the weight of the third portion P3 is W3, then the ratio W3/W1 is, for example, between 1.1 and 8, preferably between 1.5 and 5, and more specifically, it could be any of the following values: 1.1, 1.5, 2, 3, 4, 5, 6, 7, or 8. It could also be within a range between any two of these example values.

By designing the packaging bag 1 so that the first portion P1, the second portion P2, and the third portion P3 have the weight relationships described above, it's possible to effectively prevent the bottom portion 2 from curving away from the surface it's grounded on when heated in a microwave oven with the bottom portion 2 grounded and the peripheral surface portion 21 inclined, as will be explained later.

By adjusting the weight of the reinforcing member 27, it becomes possible to design the packaging bag 1 so that the first portion P1, the second portion P2, and the third portion P3 have the weight relationships mentioned. In this configuration, the reinforcing member 27 strengthens the bottom portion to prevent the bottom film 20a from bending due to its weight. In this case, the reinforcing member 27 may have a rigidity higher than the bottom film 20a (as mentioned earlier), or it could have a rigidity equal to or even lower than the bottom film 20a.

The bottom film 20a and the peripheral wall film 20b, which makes up the peripheral surface portion 21, are preferably laminated films with a base layer and a sealant layer. It's even better if they also have an adhesive layer and a printing layer between the base layer and the sealant layer. Films with the same structure and properties can be used for both the bottom film 20a and the peripheral wall film 20b, or films with different structures and properties can be used.

The base layer is positioned so that it's on the outer surface of the packaging bag 1, and the sealant layer is on the inner surface. When the sealant layers are welded together (heat-sealed), they form a welded portion.

The base layer is made of a material that is strong and has high impact resistance. Examples of materials for the base layer include polyamide, polyolefin, polyethylene, and polyester. More specifically, stretched polyethylene terephthalate film, silica-deposited stretched polyethylene terephthalate film, alumina-deposited stretched polyethylene terephthalate film, stretched nylon film, stretched polypropylene film, or a co-extruded, co-stretched film of polypropylene and ethylene-vinyl alcohol copolymer could be used. The base layer could also include a paper layer, be made entirely of a paper layer, or be a combination of a paper layer and the plastic layers mentioned above. For the film that makes up the base layer, it's preferable to use one that has straight-line cutability in the MD (machine direction, the direction the film moves during manufacturing). Antibacterial or antiviral agents (like silver ions) could also be mixed into the base layer, which will be the outermost layer. In particular, by kneading a non-migratory (non-bleeding) antibacterial or antiviral agent into the base layer, when it's heated to a high temperature in a microwave oven, the antibacterial and antiviral treatment on the surface of the base layer will progress, making it more hygienic when it is taken out of the microwave.

The adhesive layer is there to stick the base layer and the sealant layer together. For the adhesive method, extrusion lamination with polyethylene as the adhesive layer, or dry lamination using adhesives like polyvinyl acetate, polyacrylate, cyanoacrylate, ethylene copolymer, cellulose, polyester, polyamide, amino resin, epoxy, or polyurethane could be used.

The sealant layer can be made of a resin that has good welding properties. Examples of resins for the sealant layer include polyolefin resins like polyethylene, polypropylene, ethylene-vinyl acetate copolymer, and ethylene-propylene block copolymer. More specifically, non-stretched polypropylene or linear low-density polyethylene could be used. For the film that makes up the sealant layer, it's preferable to use one that has straight-line cutability in the MD direction.

It's also preferable to use a film for the peripheral wall film 20b that has a first base layer and a second base layer as the base material layers, with a sealant layer laminated in that order with an adhesive layer in between. Then, at least on one of the opening portion 24 or the upper opening portion 26, it's good to apply easy-tear processing to the entire second base layer and part of the sealant layer. This makes it easier to tear the packaging bag 1 straight open at the opening portion 24 and the upper opening portion 26. Especially for the opening portion 24, even if a peripheral wall film 20b with straight-line cutability is used, there tend to occur problems where it becomes difficult to tear straight due to the effects of heating in a microwave oven. By applying the easy-tear processing mentioned above, this problem can be solved even after heating in a microwave.

Easy-tear processing can be, for example, perforation. When performing perforation processing, perforations are formed that are cut into the entire second base layer and part of the sealant layer, running along the direction in which the opening portion 24 and the upper opening portion 26 extend (the left-right direction). In this case, it is preferable for the perforations to be cut from the surface of the sealant layer on the second base layer side up to 5 to 80% of the sealant layer's thickness, and more preferably up to 30 to 60%. The shape of the perforations can be a dashed line parallel to the direction in which the opening portion 24 and the upper opening portion 26 extend, a curved line extending along that direction, or a series of straight lines angled to that direction but aligned along it. Furthermore, multiple rows of perforations may be formed along that direction.

The left-right length H4 at the lower end of the packaging bag 1 shown in Fig. 3A is preferably between 10 and 25 cm, and more preferably 18 cm or more, from the viewpoint of being a size that can be placed on a microwave oven turntable. More specifically, it could be any of the following values: 10, 11, 12, 13, 14, 15, 16, 17, 18, 19, 20, 21, 22, 23, 24, or 25 cm. It could also be within a range between any two of these example values, such as 20 cm.

### 1.2. Cooking Method for Packaged Food

Next, using Figs. 8A to 8C, the cooking method for packaged food containing food in the packaging bag 1 of this embodiment will be explained. Packaged food can be categorized as: (1) food that is pre-packaged in the packaging bag 1 at the factory and can be heated and cooked by the consumer without adding any extra items (like retort foods or frozen foods), (2) food that is pre-packaged in the packaging bag 1 at the factory, and the consumer adds extra items to the packaging bag 1 before heating and cooking, and (3) packaging bag 1 that doesn't contain any product, and the consumer adds food to the packaging bag 1 before heating and cooking. In case (1) above, it's preferable to seal the packaging bag 1 after putting the food inside at the factory. In this case, the opening/closing member 23 can be omitted.

This cooking method includes a heating step. In cases (2) or (3) above, it also includes a storing step before the heating step. Figs. 8A to 8C are diagrams explaining the cooking method for packaged food containing food in the packaging bag 1, and they schematically show a cross-section along the line D-D in Fig. 6 (a cross-section in a plane that passes through the center of the packaging bag 1 in the left-right direction and is parallel to the front-back direction).

In the storing step, food or additional items are put into the packaging bag 1. The food could be, for example, instant noodles, and the additional item could be, for example, cooking liquid. In this case, in the storing step, the cooking liquid is put into the packaging bag 1 so that it touches the food, and then the packaging bag 1 is sealed. For example, if the food is instant noodles, water or liquid seasoning is added as the cooking liquid so that it touches the noodles. In this embodiment, the opening/closing member 23 of the packaging bag 1 is opened, and the cooking liquid is poured into the packaging bag 1 through the opening 22. After adding the cooking liquid, the opening/closing member 23 is closed to seal the packaging bag 1. If there's no need to add cooking liquid when cooking the food, the storing step can be skipped.

In the heating step, the packaged food is heated in a microwave oven. If cooking liquid was added in the storing step, the food and the cooking liquid inside the packaging bag 1 are heated by the microwave oven. At this time, as shown in Fig. 8A, the heating of the food in the packaging bag 1 is started in the microwave oven with the bottom portion 2 on the bottom of the oven and the peripheral surface portion 21 inclined at an angle θ of 30° or less to the horizontal surface (meaning it's lying down). In this embodiment, the bottom portion 2 is grounded on a roughly horizontal surface G, such as the turntable inside the microwave. Microwave ovens are generally designed so that the microwaves are concentrated in the lower center of the oven. By starting the heating with the peripheral surface portion 21 lying down, it becomes possible to heat the food inside the packaging bag 1 efficiently.

The inclination angle θ refers to the smaller angle between the peripheral surface portion 21 and the horizontal surface. Also, when the peripheral surface portion 21 is inclined, if the front portion 3 and the back portion 4, which make up the peripheral surface portion 21, are separated due to the contents, it refers to the angle between the lower one of the front portion 3 and the back portion 4 and the horizontal surface. In this embodiment, the angle between the upper back portion 4b of the back portion 4 and the horizontal surface is the inclination angle θ. Specifically, as shown in Fig. 8A, it's the angle between the horizontal surface and a straight line L connecting the upper end of the back portion 4 and the fold line 41 in the top-bottom direction of the packaging bag 1. Also, the state where the peripheral surface portion 21 is inclined at an angle θ of 30° or less includes the state where the peripheral surface portion 21 is completely lying down so that the inclination angle is 0° (in other words, the peripheral surface portion 21 is horizontal).

The inclination angle θ is, for example, 0° or more and 30° or less, preferably 0° or more and 20° or less, and even more preferably 0° or more and 10° or less. The inclination angle θ can be more specifically, for example, any of the following values: 0, 5, 10, 15, 20, 25, or 30 degrees, and it can also be within a range between any two of these example values.

The peripheral surface portion 21 can be inclined towards either the front or the back of the packaging bag 1, but it is preferable to incline it towards the side of the front portion 3 and the back portion 4 where the steam vent seal portion 11 is not located (in this embodiment, towards the back portion 4 side). In this case, since the peripheral surface portion 21 is inclined so that the steam vent seal portion 11 faces upward, it becomes difficult for the steam to be blocked from escaping the steam vent seal portion 11 during heating.

In this embodiment, the front portion 3 and the back portion 4 are integrally inclined backward with respect to the bottom portion 2. By inclining the peripheral surface portion 21, the food inside the packaging bag 1 can come into contact with the cooking liquid over a wider area, allowing for more efficient cooking. Especially in the case of food items with a relatively flat shape, like instant noodles, the contact area with the cooking liquid can be increased compared to when the peripheral surface portion 21 is not inclined.

When heating starts, the pressure inside the packaging bag 1 increases, causing the packaging bag 1 to expand, and a steam path is formed in the steam vent seal portion 11, allowing steam to escape. At this time, from the state shown in Fig. 8A, as the internal pressure rises, the front portion 3 is pushed upward from the inside, applying a force that curves the front end portion of the bottom film 20a, which makes up the bottom portion 2, upward. In this embodiment, the reinforcing member 27 provided on the bottom portion 2 suppresses the front-back curvature of the bottom film 20a, maintaining the state where the bottom portion 2 is in contact with the surface G during the heating process. Also, as the packaging bag 1 expands, the peripheral surface portion 21 rises, and the contents gradually gather near the bottom portion 2, further suppressing the front-back curvature of the bottom portion 2 due to the weight of the contents.

Also, when steam is generated near the bottom portion 2 of the packaging bag 1 due to heating, the part of the front portion 3 on the bottom portion 2 side expands, applying a force that curves the front end side of the bottom portion 2 upward. In this embodiment, in addition to the reinforcing member 27 suppressing the curvature of the bottom film 20a, the weight of the second portion P2, which is located below the center line E4 of the sealed space S in the packaging bag 1, is greater than the weight of the first portion P1, which is located above the center line E4. This suppresses the front end side of the bottom portion 2 from lifting upward. Furthermore, as the packaging bag 1 expands, the peripheral surface portion 21 rises, and the contents gradually gather near the bottom portion 2, while the steam moves towards the upper part of the packaging bag 1, further suppressing the curvature of the bottom portion 2 as described above.

When the packaging bag 1 expands further, the front portion 3 and the back portion 4 move away from each other in the front-back direction, and their side ends move closer together. This applies a force that curves both left and right edges of the bottom film 20a upward. In this embodiment, the reinforcing member 27 has enough flexibility to allow this left-right curvature of the bottom film 20a, so the left and right sides of the bottom film 20a curve, and as shown in Fig. 8B, the fold line 31 of the front portion 3 and the fold line 41 of the back portion 4 unfold. This causes the peripheral surface portion 21 to rise upward from its inclined backward position. Then, when heating is complete, as shown in Fig.8C, the peripheral surface portion 21 becomes upright with respect to the bottom portion 2. In this way, the peripheral surface portion 21 moves during heating, and as the contents also move during this displacement, the contents are stirred, and the distribution of microwaves irradiated onto the contents changes, improving the uniformity of heating.

After heating is complete, preferably, the packaging bag 1 becomes self-standing with the bottom portion 2 on the bottom. In this case, after heating, the packaging bag 1 can be easily taken out of the microwave oven in its self-standing state. Also, by opening the self-standing packaging bag 1 at the opening portion 24, the contents inside can be eaten using the packaging bag 1 as a dish.

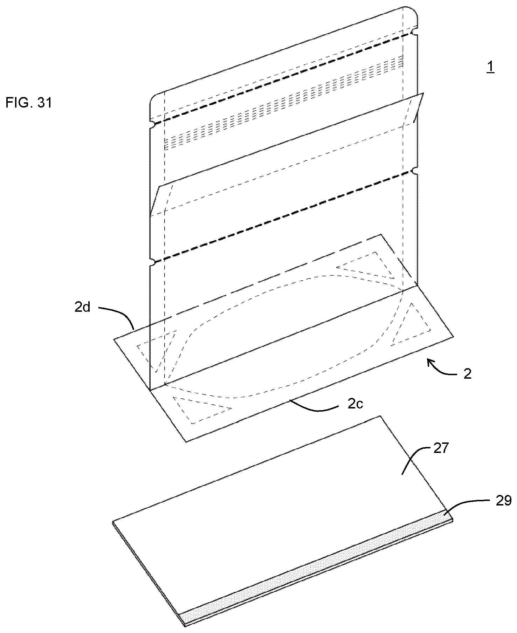

By the way, as mentioned above, when the packaging bag 1 expands, the part of the front portion 3 on the bottom portion 2 side expands, applying a force that curves the front end side of the bottom portion 2 upward. On the other hand, almost no upward curving force is applied to the back end side of the bottom portion 2. For this reason, as shown in Fig. 31, the reinforcing member 27 can be fixed to the bottom portion 2 only on the front edge 2c side by the fixing means 29 provided along the front edge 2c of the bottom portion 2, with the back edge 2d side left unfixed. Note that of the pair of front and back edges of the bottom portion 2, the one that is below the back portion 4 when the peripheral surface portion 21 is laid down before heating is the back edge 2d, and the other edge is the front edge 2c.

### 1.3. Method for Manufacturing Packaging Bag

Next, the method for manufacturing the packaging bag 1 with the reinforcing member 27 of this embodiment will be explained. This manufacturing method includes a reinforcing member attaching step. In the reinforcing member attaching step, the reinforcing member 27 is attached to the bottom portion 2 in a state where the bottom portion 2 of the packaging bag 1 is developed.

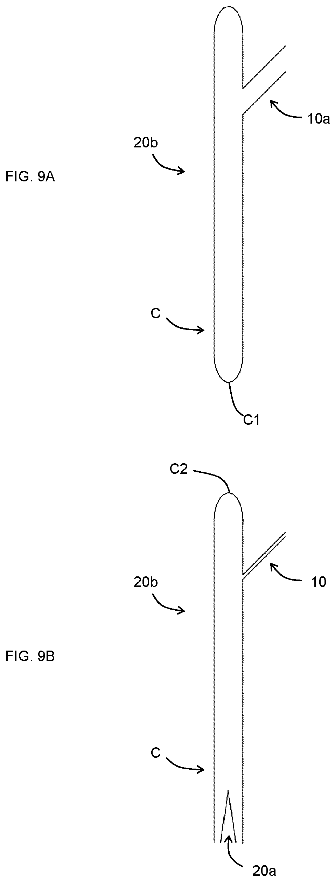

The packaging bag 1 can be manufactured by a bag-making process. In the bag-making process, the packaging bag 1 is manufactured from a flexible film. First, as shown in Fig. 9A, the inner surfaces of the end portions of a single peripheral wall film 20b are overlapped to form an overlapping portion 10a. Then, as shown in Fig. 9B, the overlapping portion 10a is welded to form a fin seal portion 10, and the remaining part forms an elliptical loop C.

Next, as shown in Figs. 9A to 9B, one end C1 of the loop C is cut, and a bottom film 20a, folded in a V-shape at the center line E1, is inserted. Subsequently, as shown in Figs. 9B to 10A, the bottom film 20a and the peripheral wall film 20b are welded together, and the other end C2 of the loop C is cut off, thereby forming the bottom portion 2, the front portion 3, and the back portion 4.

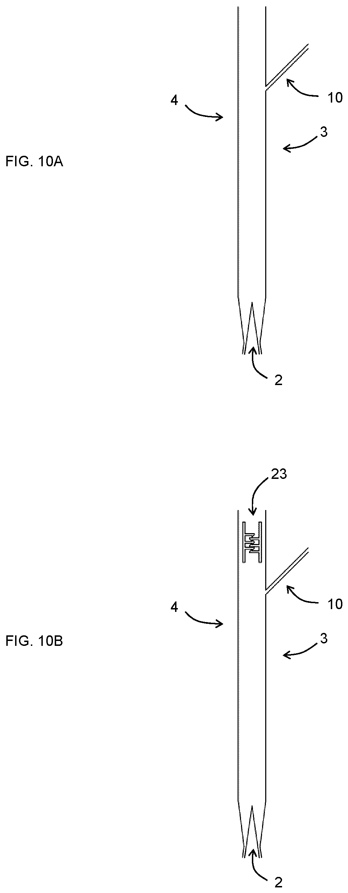

Next, as shown in Fig. 10B, near the other end C2 of the loop C (near the upper ends of the front portion 3 and the back portion 4), an opening/closing member 23 is inserted between the front portion 3 and the back portion 4. The opening/closing member 23 is welded to the respective inner surfaces of the front portion 3 and the back portion 4, and the upper ends of the front portion 3 and the back portion 4 are welded together, thereby manufacturing the packaging bag 1. The contents, such as food, may be filled during the bag-making process or after the packaging bag 1 has been made.

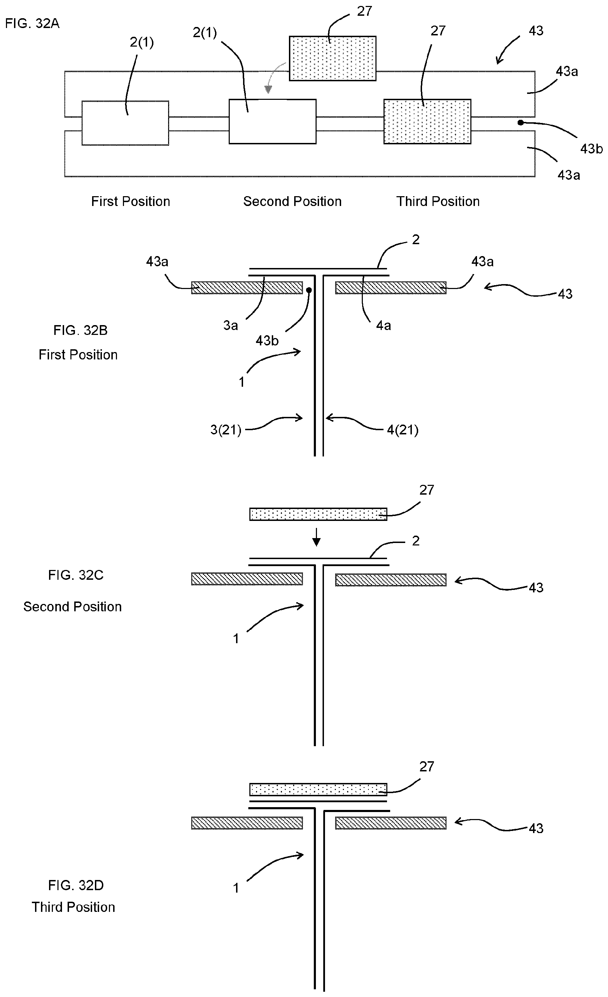

In the reinforcing member attaching step, the reinforcing member 27 is provided on the bottom portion 2 of the manufactured packaging bag 1. In this embodiment, as an example, the folded bottom film 20a is developed, and the reinforcing member 27 is attached to its lower surface 20a2 side using adhesive or welding. This step can be carried out using a conveyor 43 with a gap 43b between a pair of conveying portions 43a, as shown in Fig. 32. Specifically, first, at the first position shown in Fig. 32A and 32B, the packaging bag 1 is placed on the conveyor 43 with the bottom portion 2 facing upward and the peripheral surface portion 21 placed in the gap 43b, and with the lower front portion 3a and the lower back portion 4a, which face the bottom portion 2, directed towards the conveying portion 43a. The conveyor 43 transports the packaging bag 1 towards the right in Fig. 32A. At the second position shown in Figs. 32A and 32C, the reinforcing member 27 is attached to the bottom portion 2 of the packaging bag 1. Next, as shown in Figs.32A and 32D, the packaging bag 1 with the reinforcing member 27 attached is transported by the conveyor 43 to a third position downstream of the second position. When the reinforcing member 27 is provided on the upper surface 20a1 side of the bottom film 20a, after bag-making and before filling with contents, the reinforcing member 27 may be attached to the bottom film 20a using adhesive or welding, or it may be inserted into the packaging bag 1 without attaching and placed on the bottom portion 2.

The reinforcing member attaching step is preferably performed after the bag-making process. It is conceivable to attach the reinforcing member 27 to the bottom film 20a before performing the bag-making process, and then perform the bag-making process. However, in that case, the bag-making process may become difficult, so it is preferable to perform the reinforcing member attaching step after the bag-making process. Also, when attaching the reinforcing member 27, it is preferable that the bottom portion 2 is developed and that the peripheral surface portion 21 is in a laid-down state. This is because the reinforcing member 27 is then easier to attach.

Further, when a contents filling step of filling the packaging bag 1 with contents and sealing it is included, the reinforcing member attaching step may be performed before or after the contents filling step. Performing it before the contents filling step has the advantage that the reinforcing member 27 is easy to attach. On the other hand, if the reinforcing member 27 is attached before the contents filling step, it may be difficult to fill the contents depending on the apparatus used in the contents filling step. In that case, it is preferable to perform the reinforcing member attaching step after the contents filling step.

### 2. Second Embodiment

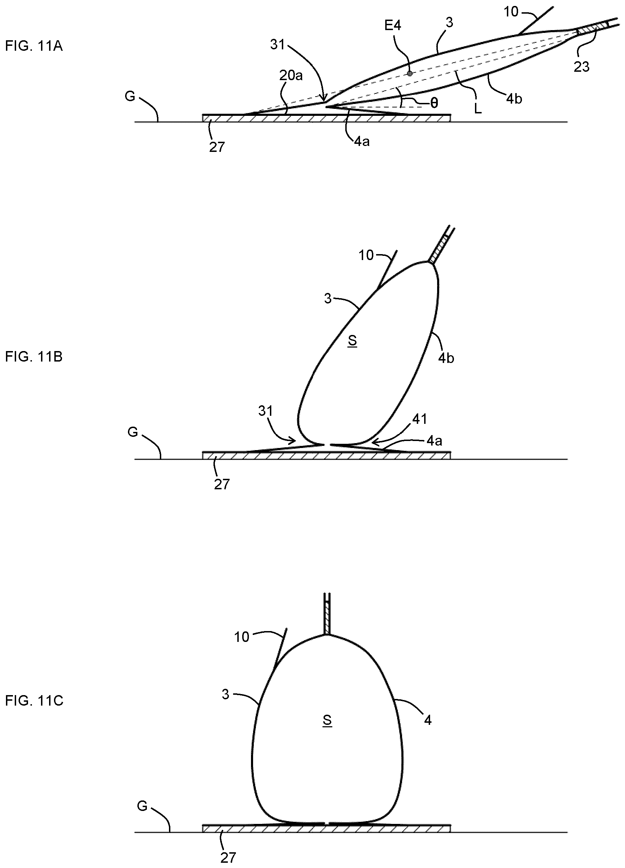

Next, the packaging bag 1 of the second embodiment of the present invention will be described with reference to Figs. 11A to 12. The packaging bag 1 of the second embodiment differs from the first embodiment in that the reinforcing member 27 has a high rigidity sufficient to suppress curvature not only in the front-back direction but also in the left-right direction of the bottom film 20a. Hereinafter, the description will focus on the differences from the first embodiment.

Figs. 11A to 11C are explanatory views of a cooking method for packaged food containing food in the packaging bag 1 according to the second embodiment. When the packaging bag 1 expands due to heating from the state shown in Fig. 11A, the front-back curvature of the bottom film 20a is suppressed by the reinforcing member 27, similarly to the first embodiment. When the packaging bag 1 further expands, and the front portion 3 and the back portion 4 move away from each other in the front-back direction and their side ends approach each other, a force is applied to curve both left and right edges of the bottom film 20a upward.

At this time, in this embodiment, the left-right curvature of the bottom film 20a is suppressed by the reinforcing member 27, and the state where the bottom portion 2 is in contact with the surface G is maintained. Therefore, as shown in Fig. 11B, the portions of the front portion 3 and the back portion 4 above the fold lines 31 and 41 of the packaging bag 1 expand while the fold lines 31 and 41 are maintained, and the peripheral surface portion 21 rises upward from its inclined backward state. Then, when heating is complete, as shown in Fig. 11C, the portions of the peripheral surface portion 21 above the fold lines 31 and 41 become upright with respect to the bottom portion 2.

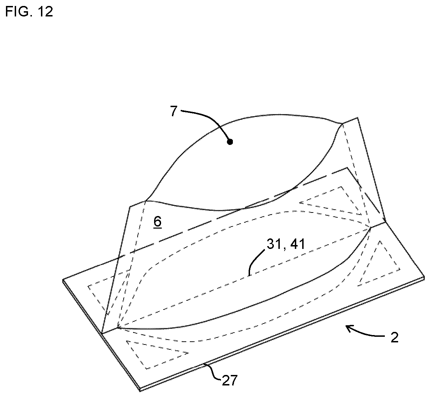

After heating, by tearing the peripheral surface portion 21 in the circumferential direction at the opening portion 24 and removing the to-be-removed portion 5, a main body 6 having an opening 7 is obtained as shown in Fig. 12. By suppressing the front-back and left-right curvature of the bottom film 20a with the reinforcing member 27, the entire lower surface of the bottom portion 2 can be brought into contact with the ground, allowing the packaging bag 1 to stand. When using the packaging bag 1 as tableware and eating the contents, the left-right direction (longitudinal direction) of the reinforcing member 27 may be curved or folded to unfold the fold lines 31 and 41. This enlarges the volume inside the packaging bag 1 near the bottom portion 2 and improves self-standing stability.

### 3. Third Embodiment

The shape and arrangement of the reinforcing member 27 are not limited to the examples of the above-described embodiments. Here, modified examples of the reinforcing member 27 will be described.

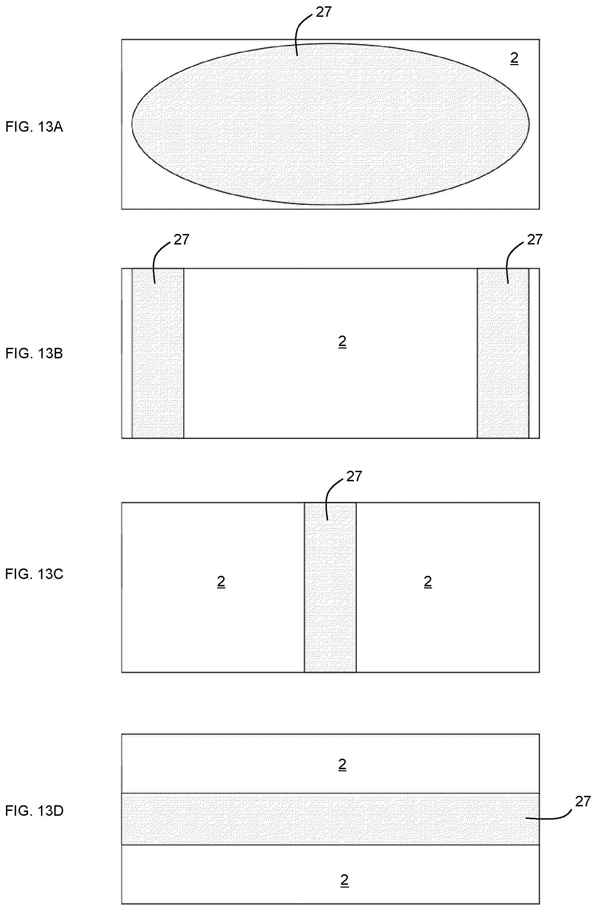

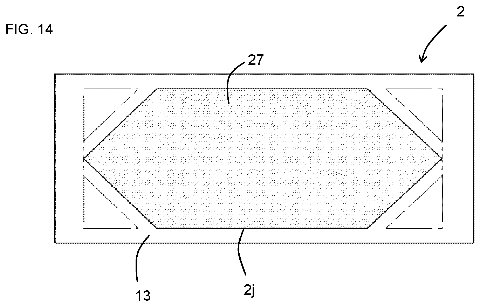

The shape of the reinforcing member 27 is arbitrary and can be, for example, plate-shaped, film-shaped, rod-shaped, or cylindrical. The flat surface shape of the reinforcing member 27 in the case of a plate or film, or the cross-sectional shape of the outer surface of the reinforcing member 27 in the case of a rod or cylinder, can be a polygon (e.g., a quadrilateral such as a rectangle, square, or trapezoid) or a curved shape (e.g., an ellipse, oval, or circle). In one example, the reinforcing member 27 can be elliptical as shown in Fig. 13A. The reinforcing member 27 may also have a shape along the inner edge 2j of the lower end welded portion 13 provided on the bottom portion 2, as shown in Fig. 14.

The arrangement and the number of members of the reinforcing member 27 can also be changed as appropriate. As an example, the reinforcing member 27 may have a rectangular frame shape arranged along the peripheral edge of the bottom film 20a. As another example, the reinforcing member 27 may be composed of a plurality of members. For example, as shown in Fig. 13B, the reinforcing member 27 may be composed of two long plate-shaped members arranged along the left and right edges of the bottom portion 2, or three long plate-shaped members arranged along the left and right edges of the bottom portion 2 and along the center in the left-right direction of the bottom portion 2. The reinforcing member 27 may also be provided near the center of the bottom portion 2 in the left-right direction of the packaging bag 1, as shown in Fig. 13C. Furthermore, the reinforcing member 27 may be provided near the center of the bottom portion 2 in the front-back direction of the packaging bag 1, as shown in Fig. 13D. In this case, the reinforcing member 27 preferably has an elongated shape extending in the left-right direction of the packaging bag 1. This tends to improve the self-standing property of the packaging bag 1 because the front-back balance of the packaging bag 1 is improved.

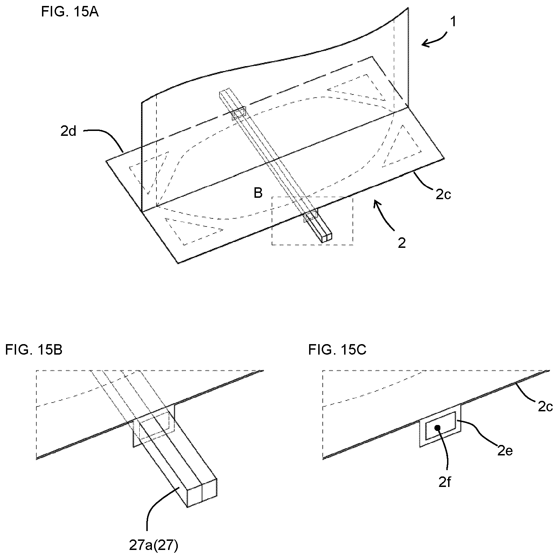

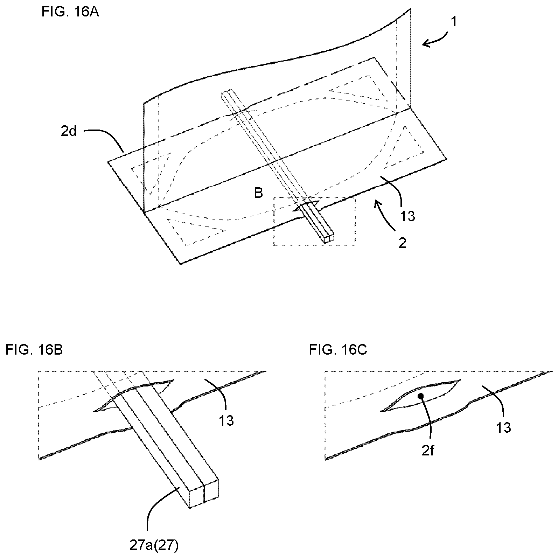

Also, eating utensils such as chopsticks (e.g., disposable chopsticks), spoons, and forks may be used as the reinforcing member 27. In this case, after cooking the food inside the packaging bag 1, the eating utensil can be removed from the packaging bag 1 and used to eat the food. In one example, the reinforcing member 27 is disposable chopsticks 27a, as shown in Fig. 15. Protruding pieces 2e with openings 2f are provided on the front edge 2c and the back edge 2d of the bottom portion 2, and the disposable chopsticks 27a may be arranged on the bottom portion 2 by inserting the disposable chopsticks 27a through the pair of openings 2f. In this case, the disposable chopsticks 27a are detachable from the bottom portion 2. For example, when heating the contents of the packaging bag 1, the disposable chopsticks 27a can be inserted into the openings 2f to function as the reinforcing member 27, and after heating is complete, the disposable chopsticks 27a can be pulled out from the openings 2f and used to eat the contents. Instead of providing the openings 2f in the protruding pieces 2e, they may be provided by forming cuts or holes in the lower end welded portion 13, as shown in Fig. 16.

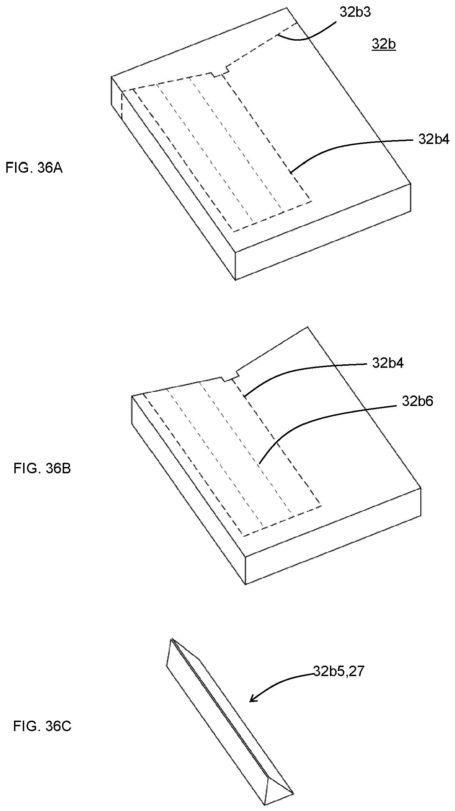

The method of holding the disposable chopsticks 27a shown here can also be applied to reinforcing members 27 other than disposable chopsticks 27a. Fig. 36A shows a box-shaped outer packaging body 32b for housing the packaging bag 1. The outer packaging body 32b is provided with first and second easy-to-cut portions 32b3 and 32b4 made of perforations or the like. The outer packaging body 32b is cut along the first easy-to-cut portion 32b3 and opened as shown in Fig. 36B. Then, by cutting the outer packaging body 32b along the second easy-to-cut portion 32b4, a cut-out piece 32b5 is partially cut out from the outer packaging body 32b. This cut-out piece 32b5 can be folded along the folding line 32b6 shown by the dotted line, for example, into the triangular prism shape shown in Fig. 36C, to create an elongated reinforcing member 27. The reinforcing member 27 created in this way can be inserted into the opening 2f and placed on the bottom portion 2, similarly to the disposable chopsticks 27a, as shown in Figs. 15 and 16.

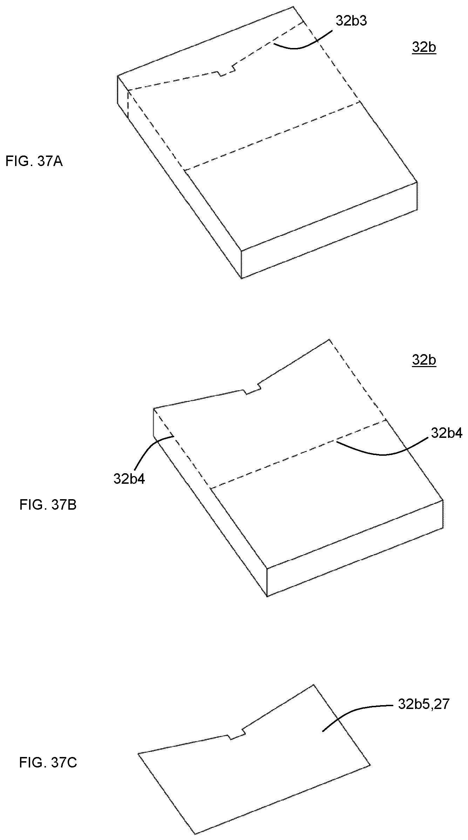

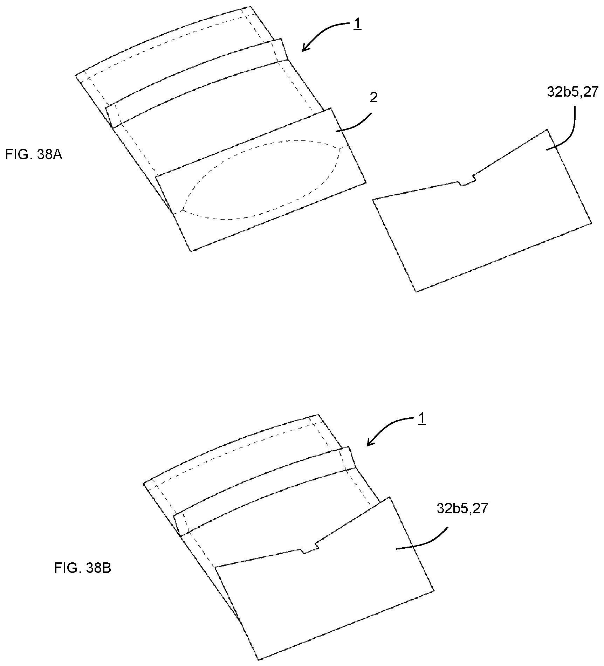

Also, as shown in Fig. 37A, the outer packaging body 32b may be provided with first and second easy-to-cut portions 32b3 and 32b4. In this case, the outer packaging body 32b is cut along the first easy-to-cut portion 32b3 and opened as shown in Fig. 37B. Then, by cutting the outer packaging body 32b along the second easy-to-cut portion 32b4, a cut-out piece 32b5 is formed by partially cutting out the outer packaging body 32b, as shown in Fig. 37C. The cut-out piece 32b5 can be used as the reinforcing member 27 as is, and can be fixed to the bottom portion 2 of the packaging bag 1 as shown in Figs. 38A to 38B. It is preferable to provide fixing means such as double-sided tape on either the bottom portion 2 or the cut-out piece 32b5 (preferably on the one with the smaller surface area). In this case, the user can easily attach the reinforcing member 27 to the bottom portion 2.

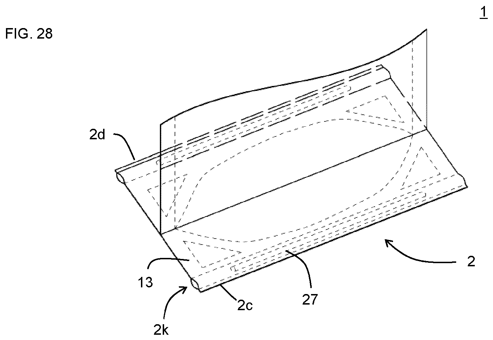

Also, as shown in Fig. 28, the reinforcing member 27 may be attached along the front edge 2c and the back edge 2d of the bottom portion 2 so as to reinforce the bottom portion 2. In this case, the reinforcing member 27 can be a columnar object such as a straw. Pockets 2k extending along the front edge 2c and the back edge 2d are provided in the lower end welded portion 13, and the reinforcing member 27 can be inserted into the pockets 2k after the packaging bag 1 is manufactured, thereby attaching it so as to reinforce the bottom portion 2 along the front edge 2c and the back edge 2d. When the packaging bag 1 tries to rise during heating as shown in Fig. 8, the bottom portion 2 tends to curve so that both left and right ends of the bottom portion 2 lift up as shown in Fig. 2B. If the curvature of the bottom portion 2 becomes excessive, the contact with the ground at the bottom portion 2 becomes unstable, making it difficult for the packaging bag 1 to rise. On the other hand, as shown in Fig. 28, reinforcing the front edge 2c and the back edge 2d of the bottom portion 2 suppresses the curvature where both left and right ends of the bottom portion 2 lift up, making it easier for the packaging bag 1 to rise.

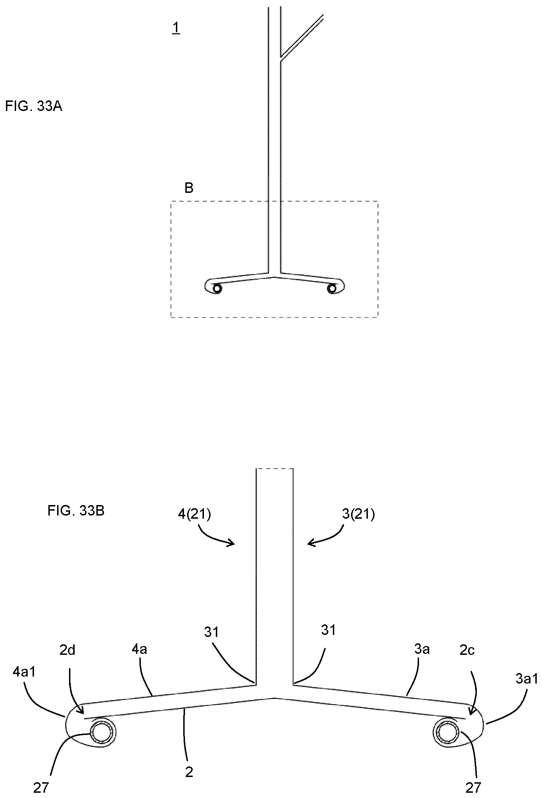

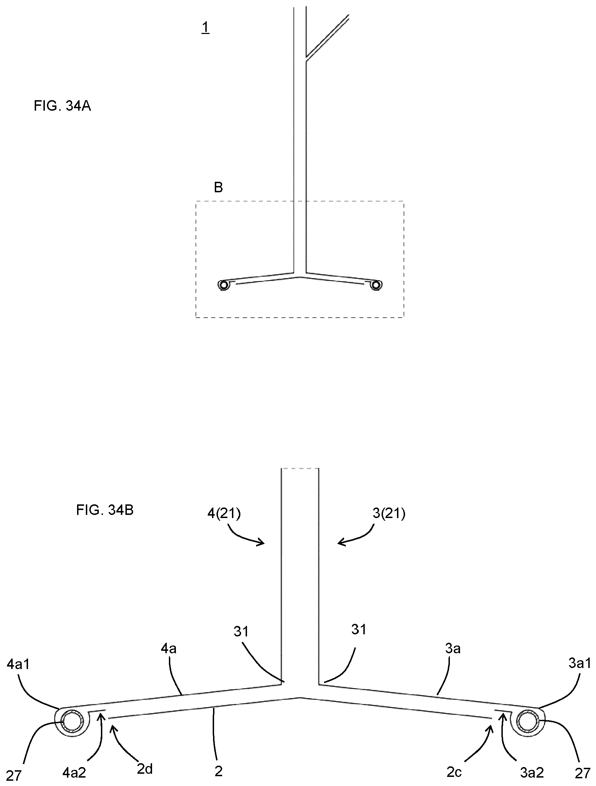

Also, as shown in Fig. 33, the reinforcing member 27 may be fixed by extending the lower front portion 3a and the lower back portion 4a of the front portion 3 and the back portion 4 below the fold line 31 beyond the bottom portion 2 to form extension portions 3a1 and 4a1, and then fixing the extension portions 3a1 and 4a1 to the bottom portion 2 in a state where the extension portions 3a1 and 4a1 surround the reinforcing member 27. Furthermore, as shown in Fig. 34, the reinforcing member 27 may be fixed by forming overlapping portions 3a2 and 4a2 on the respective extension portions 3a1 and 4a1 in a state where the extension portions 3a1 and 4a1 surround the reinforcing member 27, and then forming welded portions on the overlapping portions 3a2 and 4a2. In the overlapping portions 3a2 and 4a2, the sealant layers of the films face each other, making it easy to form welded portions.

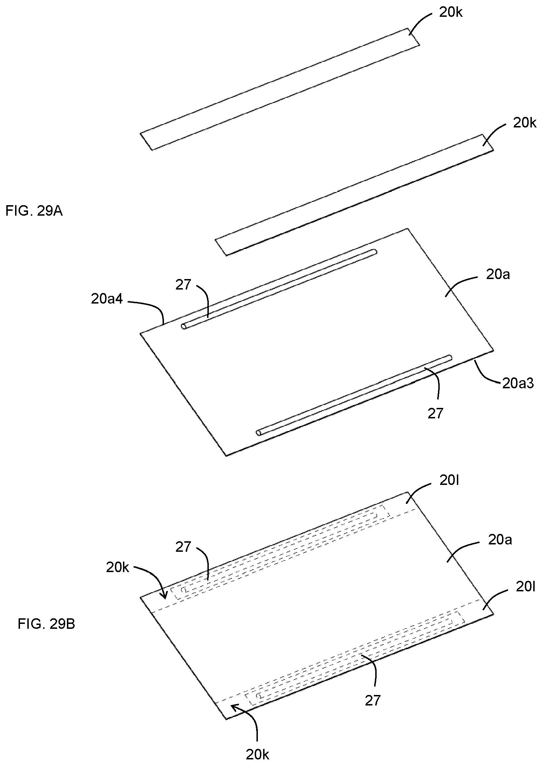

The reinforcing member 27 that reinforces the bottom portion 2 along the front edge 2c and the back edge 2d may be attached to the bottom film 20a, as shown in Fig. 29B. In this case, by manufacturing the packaging bag 1 using the bottom film 20a with the reinforcing member 27 attached, a packaging bag 1 can be obtained in which the bottom portion 2 is reinforced by the reinforcing member 27 along the front edge 2c and the back edge 2d. As a method for attaching the reinforcing member 27 to the bottom film 20a, as shown in Fig. 29A, the reinforcing member 27 is arranged along the front edge 20a3 and the back edge 20a4 of the bottom film 20a, and with the bottom film 20a and the cover film 20k overlapped, a welded portion 20l is formed around the reinforcing member 27, as shown in Fig. 29B. Although the cover film 20k is shown as a strip in Fig. 29A, the cover film 20k can have any shape that allows the reinforcing member 27 to be fixed to the bottom film 20a.

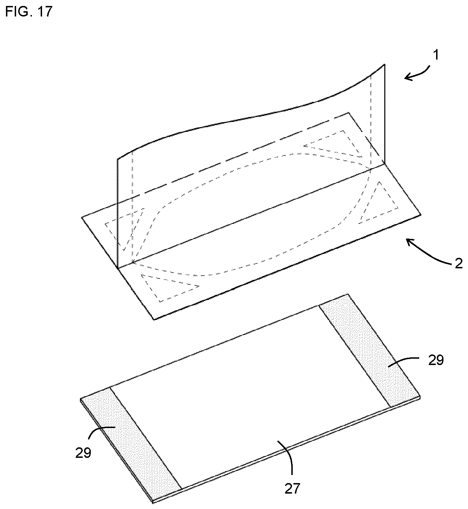

The reinforcing member 27 can be attached by any suitable method. Examples of methods for attaching the reinforcing member 27 to the bottom portion 2 include adhesion, gluing, welding, clamping, and engagement. In one example, as shown in Fig. 17, the reinforcing member 27 can be attached to the bottom portion 2 using fixing means 29 such as adhesive tape, adhesive, or clips.

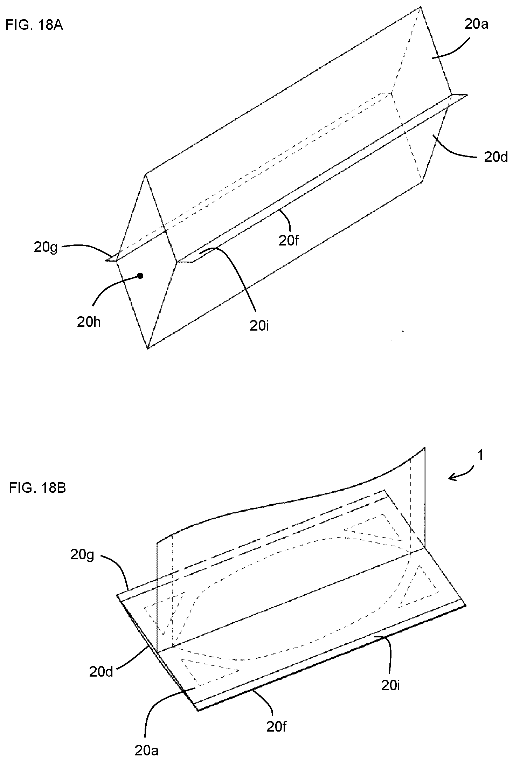

In one example, as shown in Fig. 18A, the reinforcing member 27 can be made of a reinforcing member film 20d having the same structure as the bottom film 20a. In this case, the reinforcing member film 20d as the reinforcing member 27 and the bottom film 20a can be joined by welded portions 20i provided on the front edge 20f and the back edge 20g, thereby attaching the reinforcing member 27 to the bottom portion 2. This results in a packaging bag 1 having a structure in which the reinforcing member film 20d is superimposed on the bottom film 20a constituting the bottom portion 2, as shown in Fig. 18B. In this case, a pocket 20h is formed between the bottom film 20a and the film 20d, so another reinforcing member may be inserted into this pocket 20h. Note that a tubular film may be flattened and treated as a film where the bottom film 20a and the reinforcing member film 20d are joined at the front edge 20f and the back edge 20g.

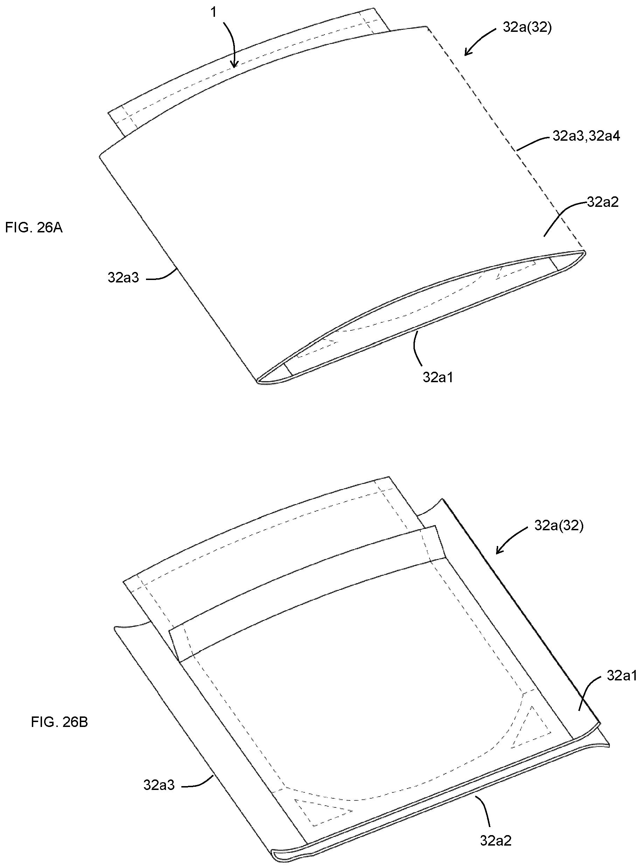

The reinforcing member 27 may be pre-attached to the bottom portion 2 at the factory, or the reinforcing member 27 and the packaging bag 1 may be separate when shipped from the factory, and the consumer may attach the reinforcing member 27 to the bottom portion 2. The latter has the advantage that the consumer can choose whether or not to attach the reinforcing member 27 to the bottom portion 2. The packaging bag 1 and the reinforcing member 27 can be packaged together using an outer packaging body 32 as shown in Figs. 26 to 27.

In one example, retort foods or frozen foods with food sealed inside the packaging bag 1 may be able to be cooked by boiling in hot water in addition to using a microwave oven. In such a case, if the reinforcing member 27 is made of a non-water-resistant material and is pre-attached to the bottom portion 2, there is a problem that boiling in hot water cannot be selected as a cooking method for the food. On the other hand, if the consumer can choose whether or not to attach the reinforcing member 27 to the bottom portion 2, by choosing not to attach the reinforcing member 27, cooking by boiling in hot water becomes possible even if the reinforcing member 27 is made of a non-water-resistant material. From another perspective, if the reinforcing member 27 is pre-attached to the bottom portion 2, it is necessary to form the reinforcing member 27 from a water-resistant material to enable cooking by boiling in hot water. However, by making the reinforcing member 27 separate from the packaging bag 1, it becomes possible to form the reinforcing member 27 from a non-water-resistant material, reducing the manufacturing cost of the reinforcing member 27.

Also, it is preferable that the reinforcing member 27 is detachable from the packaging bag 1. In this case, the food inside the packaging bag 1 can be cooked with the reinforcing member 27 attached to the packaging bag 1, and then the reinforcing member 27 can be removed and attached to another packaging bag 1 to cook the food inside that packaging bag 1. By repeatedly using the reinforcing member 27, the manufacturing cost of the packaging bag 1 with the reinforcing member 27 can be reduced. As a configuration for making the reinforcing member 27 detachable from the packaging bag 1, there are methods such as attaching the reinforcing member 27 to the packaging bag 1 with a removable adhesive tape, holding the reinforcing member 27 to the packaging bag 1 using an openable/closable holding member such as a clip, or engaging the reinforcing member 27 with an engaging portion provided on the packaging bag 1. Examples of configurations for engaging the reinforcing member 27 with the engaging portion include a configuration where the reinforcing member 27 is stored in a pocket provided on the bottom portion 2 (for example, a configuration like the pocket 20h in Fig. 18), or a configuration where the reinforcing member 27 is inserted through an opening 2f, as shown in Fig. 15 or Fig. 16.

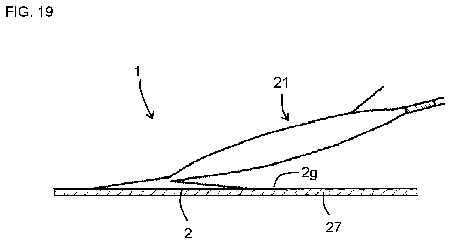

Furthermore, the reinforcing member 27 may be provided so as to fit within the bottom portion 2, or it may be provided so as to protrude from the bottom portion 2, as shown in Fig. 19. When the reinforcing member 27 protrudes from the bottom portion 2, it is preferable that the reinforcing member 27 protrudes on the side where the peripheral surface portion 21 is inclined. In this case, since the reinforcing member 27 overlaps the peripheral surface portion 21 in a plan view, even if the reinforcing member 27 protrudes, the overall size of the packaging bag 1 with the reinforcing member 27 does not easily become larger. Also, when the packaging bag 1 is filled with food and sealed and then heated, the inclined peripheral surface portion 21 tries to rise. At that time, a downward torque is applied to the portion 2g of the bottom portion 2 on the side where the peripheral surface portion 21 is inclined, trying to rotate the bottom portion 2. However, by making the reinforcing member 27 protrude from the bottom portion 2, it becomes easier to withstand this downward torque, so the peripheral surface portion 21 becomes easier to rise during heating. Furthermore, since the protruding portion does not easily become hot even after the contents are heated, it is easy to grip the protruding portion and pull the packaging bag 1 out of the microwave oven.

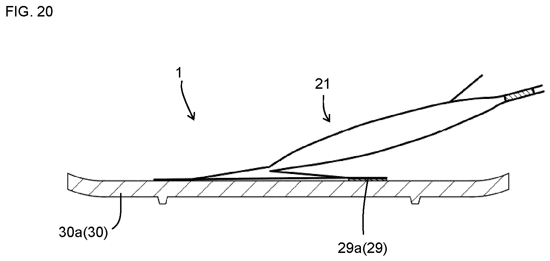

Furthermore, as shown in Fig. 20, fixing means 29 (e.g., adhesive means such as double-sided tape 29a) may be provided on the bottom portion 2, and the bottom portion 2 may be fixed to a non-dedicated member 30 (a member not prepared as the reinforcing member 27) using the fixing means 29, and this non-dedicated member 30 may be used as the reinforcing member 27. Examples of the non-dedicated member 30 include tableware such as a plate 30a, a plate placed inside the microwave oven, or the floor surface inside the oven. The fixing means 29 can be provided, for example, in a portion including the center in the left-right direction of the bottom portion 2.

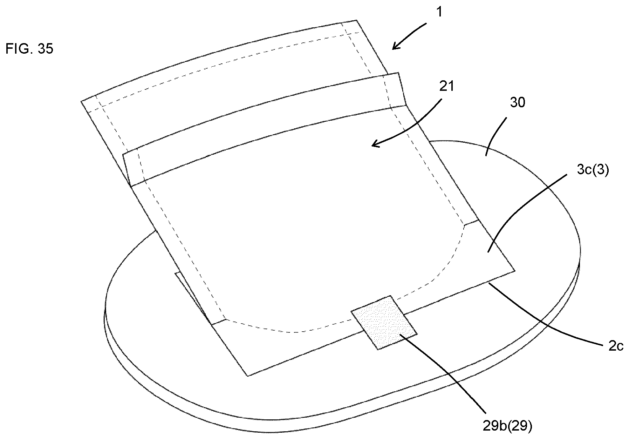

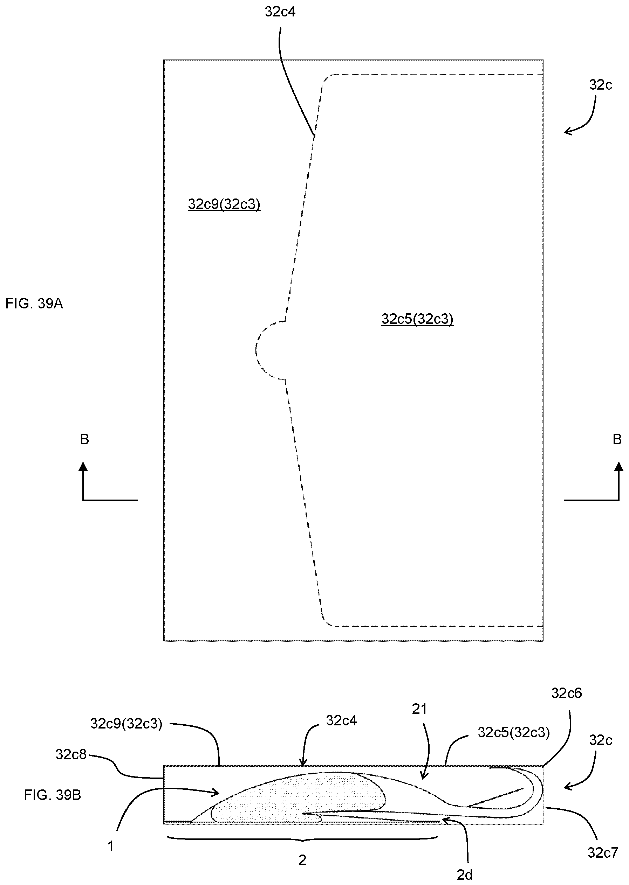

Furthermore, as shown in Fig. 35, fixing means 29 may be provided so as to span the front facing portion 3c of the front portion 3 that faces the bottom portion 2 and the non-dedicated member 30. As the fixing means 29, it is preferable to use something like adhesive tape 29b that can fix the front edge 2c of the bottom portion 2 to the non-dedicated member 30 by being attached to both the front facing portion 3c and the non-dedicated member 30. The fixing means 29 is preferably attached, for example, to a portion including the center in the left-right direction of the front facing portion 3c. When the packaging bag 1 expands, the part of the front portion 3 on the bottom portion 2 side expands, which can cause the front edge 2c of the bottom portion 2 to lift up, easily hindering the rise of the peripheral surface portion 21. However, by fixing the front facing portion 3c to the non-dedicated member 30 with the fixing means 29, the lifting of the front edge 2c can be suppressed, promoting the rise of the peripheral surface portion 21. As the adhesive tape 29b, a re-stickable tape is preferable. In this case, for example, if the adhesive tape 29b is attached to the packaging bag 1, the user can peel off the adhesive tape 29b from the packaging bag 1 and use it as the fixing means 29. Also, the lifting of the front edge 2c may be suppressed by bringing a locking member into contact with the front facing portion 3c. The locking member only needs to be able to contact the front facing portion 3c and suppress the lifting of the front edge 2c, and does not need to be fixed to the front facing portion 3c. As will be described later, the outer packaging body 32c shown in Figs. 39 to 40 is configured to suppress the lifting of the front edge 2c by bringing the edge 32c2 of the opening 32c1 into contact with the front facing portion 3c, thereby promoting the rise of the peripheral surface portion 21. Therefore, the outer packaging body 32c functions as a locking member.

### 4. Fourth Embodiment

Among the various aspects constituting the present invention, the reinforcing member 27 may not be essential in aspects that do not require the reinforcing member 27. In the above-described embodiments, the reinforcing member 27, which is a separate member, was attached to the bottom film 20a constituting the bottom portion 2 by pasting or the like. However, in aspects that do not require the reinforcing member 27, the reinforcing member 27 can be omitted.

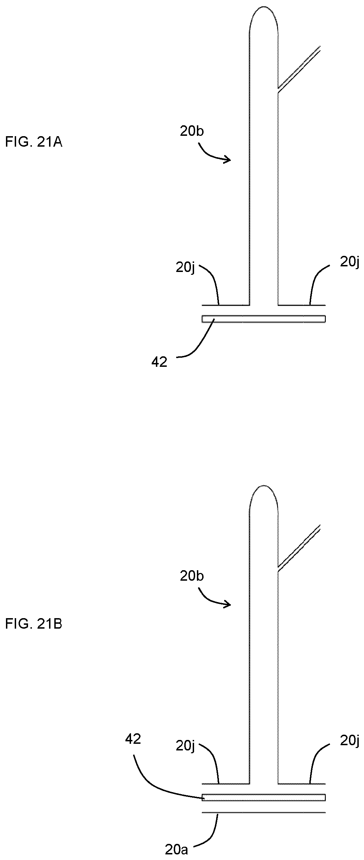

In this case, the bottom portion 2 itself may be made of a member having rigidity sufficient to prevent at least front-back curvature as the packaging bag 1 expands. For example, as shown in Fig. 21A, the bottom portion 2 can be made of a plate-shaped member 42 having relatively high rigidity. In this case, in the bag-making process of the method for manufacturing the packaging bag 1, in the peripheral wall film 20b where one end C1 of the loop C is cut as shown in Fig. 9B, as shown in Fig. 21A, the respective lower end portions 20j of the two opposing films at the cut portion are bent outward by 90 degrees by a length H3. Then, with the inner surfaces of the two films both facing downward due to the bending, the packaging bag 1 can be made into a bag shape by fixing the plate-shaped member 42 constituting the bottom portion 2 to these inner surfaces. The two films become the front portion 3 and the back portion 4, respectively. Also, the plate-shaped member 42 may be folded in half as shown in Fig. 9B and inserted between the two opposing films of the peripheral wall film 20b, and the plate-shaped member 42 may be welded to the peripheral wall film 20b, thereby manufacturing a packaging bag 1 in which the plate-shaped member 42 is fixed to the front portion 3 and the back portion 4. The plate-shaped member 42 is preferably made of resin. Also, the plate-shaped member 42 can be fixed to the film by welding.

As shown in Fig. 8A, the plate-shaped member 42 starts heating in the microwave oven with the peripheral surface portion 21 of the packaging bag 1 containing contents laid down, and as the packaging bag 1 expands due to the increase in internal pressure during heating in the microwave oven as shown in Figs. 8B to 8C, it preferably has rigidity sufficient for the peripheral surface portion 21 to rise. This makes it possible for the peripheral surface portion 21 to rise during heating without separately providing the reinforcing member 27. When the plate-shaped member 42 is difficult to curve in the front-back direction, the force generated when the packaging bag 1 expands tends to work in the direction of causing the peripheral surface portion 21 to rise, so it is particularly preferable that the plate-shaped member 42 is difficult to curve in the front-back direction.

The thickness of the plate-shaped member 42 is, for example, 0.3 to 5 mm, preferably 0.5 to 3 mm, and more preferably 0.7 to 2 mm. This thickness is specifically, for example, 0.3, 0.4, 0.5, 0.6, 0.7, 0.8, 0.9, 1.0, 1.5, 2.0, 2.5, 3.0, 3.5, 4.0, 4.5, or 5.0 mm, and may be within a range between any two of the numerical values exemplified here.

Examples of the layer structure of the plate-shaped member 42 include (a) a single-layer structure of resin, (b) a laminated structure having a sealant layer and a resin layer, and (c) a laminated structure having a sealant layer and a paper layer. In cases (b) and (c), a laminated structure further including a barrier layer may be used. The configurations of (a) to (c) will be described in detail below.

### (a) Single-layer resin structure

The plate-shaped member 42 can, in one example, have a single-layer resin structure. This resin is preferably a resin with excellent weldability, such as polyolefin resins like polyethylene, polypropylene, ethylene-vinyl acetate copolymer, and ethylene-propylene block copolymer, and more preferably non-stretched polypropylene or linear low-density polyethylene.

### (b) Laminated structure having a sealant layer and a resin layer

The plate-shaped member 42 can, in one example, have a laminated structure including a sealant layer and a resin layer. The sealant layer can be made of a resin with excellent weldability, and by providing the sealant layer, the plate-shaped member 42 can be easily welded to the front portion 3 and the back portion 4. Examples of resins constituting the sealant layer include polyolefin resins such as polyethylene, polypropylene, ethylene-vinyl acetate copolymer, and ethylene-propylene block copolymer, and more specifically, non-stretched polypropylene and linear low-density polyethylene. The resin layer is a layer made of a resin other than the sealant layer, and can be made of, for example, a resin with excellent strength and high impact resistance. Examples of resins constituting the resin layer include polyamide, polyolefin, polyethylene, and polyester.

The laminated structure having a sealant layer and a resin layer can be formed by extrusion laminating or dry laminating a film constituting the sealant layer and a film constituting the resin layer. Such a laminated structure may also be formed by coating the resin constituting the sealant layer onto the film constituting the resin layer.

The thickness of the sealant layer is, for example, 10 to 100 µm, specifically, for example, 10, 20, 30, 40, 50, 60, 70, 80, 90, or 100 µm, and may be within a range between any two of the numerical values exemplified here.

### (c) Laminated structure having a sealant layer and a paper layer

The plate-shaped member 42 can, in one example, have a laminated structure including a sealant layer and a paper layer. The description of the sealant layer is the same as in "(b) Laminated structure having a sealant layer and a resin layer". The basis weight of the paper layer is preferably 50 g/m² or more, and more preferably 80 g/m² or more. The basis weight of the paper layer is, for example, 300 g/m² or less, preferably 300 g/m² or less, more preferably 250 g/m² or less, and even more preferably 200 g/m² or less. This basis weight is specifically, for example, 50, 60, 70, 80, 90, 100, 110, 120, 130, 140, 150, 160, 170, 180, 190, 200, 210, 220, 230, 240, 250, 260, 270, 280, 290, 300, 350, 400, 450, or 500 g/m², and may be within a range between any two of the numerical values exemplified here, or any one of them or more.

The paper layer has a Taber stiffness (bending moment) of, for example, 2 mN·m or more, preferably 4 mN·m or more. In this case, the rigidity of the plate-shaped member 42 is high, and the peripheral surface portion 21 becomes easier to rise during heating in a microwave oven. The Taber stiffness is, for example, 2 to 20 mN·m, specifically, for example, 2, 3, 4, 5, 6, 7, 8, 9, 10, 11, 12, 13, 14, 15, 16, 17, 18, 19, or 20 mN·m, and may be within a range between any two of the numerical values exemplified here, or any one of the numerical values exemplified here or more.

The laminated structure having a sealant layer and a paper layer can be formed by extrusion laminating or dry laminating a film constituting the sealant layer and paper constituting the paper layer. Such a laminated structure may also be formed by coating the resin constituting the sealant layer onto the paper constituting the paper layer.

Also, as shown in Fig. 21B, the bottom film 20a may be fixed to the back surface side of the plate-shaped member 42. In this case, the plate-shaped member 42 functions as a reinforcing member that suppresses the curvature of the bottom film 20a.

### 5. Fifth Embodiment

In the fifth embodiment, a modified example of the steam vent seal portion 11 will be described.

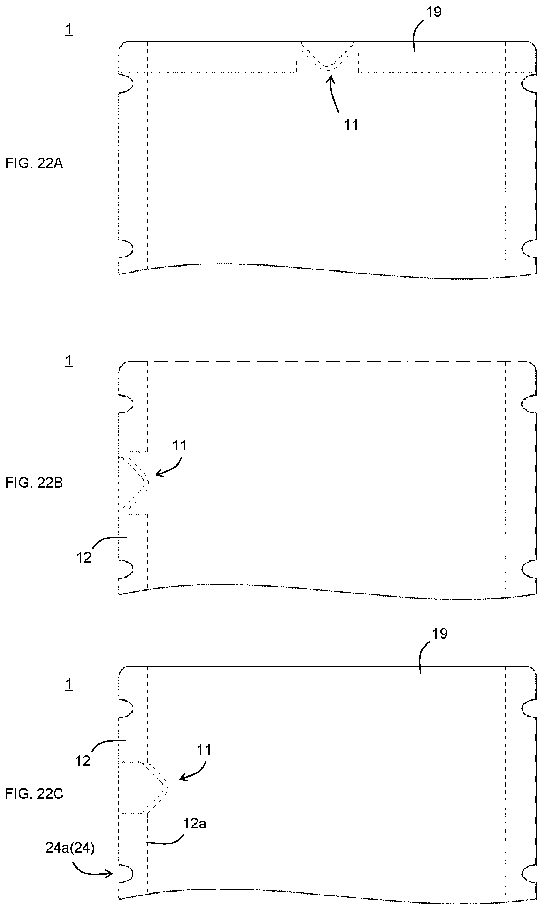

As the steam vent seal portion 11, any configuration that forms a steam flow path as the internal pressure of the packaging bag 1 increases can be adopted. In the first embodiment, the steam vent seal portion 11 is provided on the fin seal portion 10, but it is not essential to provide the fin seal portion 10 on the packaging bag 1, and the steam vent seal portion 11 may be provided, for example, on the upper end welded portion 19 as shown in Fig. 22A, or on the side end welded portion 12 as shown in Fig. 22B. The steam vent seal portion 11 may also be provided so as to protrude from the inner edge 12a of the side end welded portion 12, as shown in Fig. 22C. When the steam vent seal portion 11 is provided on the upper end welded portion 19, it is preferable that the opening/closing member 23 is kept open, or that the packaging bag 1 does not include the opening/closing member 23. When the steam vent seal portion 11 is provided on the upper end welded portion 19 or the side end welded portion 12, the shape of the steam vent seal portion 11 may be a substantially V-shape tapered toward the inside of the packaging bag 1, as in the first embodiment, or it may have other shapes.

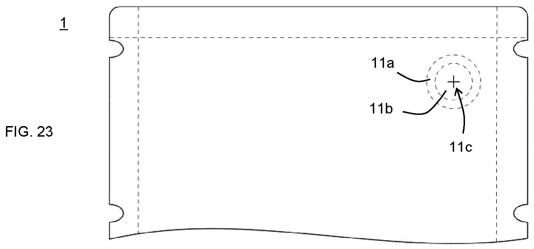

The steam vent seal portion 11 may also be provided on a portion other than the upper end welded portion 19 or the side end welded portion 12. For example, as shown in Fig. 23, the front portion 3 and the back portion 4 may be donut-shaped welded to form a donut-shaped steam vent seal portion 11a, and a ventilation portion 11c such as a cut or notch may be provided in the central unsealed portion 11b of the donut-shaped steam vent seal portion 11a. In this case, a steam flow path is formed by at least partially peeling off the donut-shaped steam vent seal portion 11a as the internal pressure of the packaging bag 1 increases, and steam is discharged to the outside through the ventilation portion 11c.

Also, instead of providing the steam vent seal portion 11, an opening may be provided in the packaging bag 1 that allows steam to escape but does not allow contents to leak. Such an opening may be formed, for example, by slightly tearing the peripheral surface portion 21 before starting heating.

### 6. Sixth Embodiment

In the sixth embodiment, a modified example of the cooking method for packaged food will be described.

In the above embodiment, the case where the peripheral surface portion 21 stands upright when heating is completed has been described. However, among the various aspects constituting the present invention, in aspects that do not require the peripheral surface portion 21 to be upright as an essential configuration, the peripheral surface portion 21 may not be upright when heating is completed, but it is preferable that the bottom portion 2 is developable. In this case, by heating with the bottom portion 2 developed and grounded, the food as contents becomes easier to move within the packaging bag 1, and uneven heating is likely to be reduced. Also, after heating is completed, by developing and grounding the bottom portion 2, the packaging bag 1 becomes easier to use as tableware.

Furthermore, among the various aspects constituting the present invention, in aspects that do not require the bottom portion 2 to be grounded at the start of heating as an essential configuration, the bottom portion 2 may not be grounded at the start of heating, but it is preferable that the peripheral surface portion 21 stands upright when heating is completed. Even in this case, uneven heating of the food as contents is likely to be reduced by the displacement of the peripheral surface portion 21 during heating.

### 7. Seventh Embodiment

In the seventh embodiment, a modified example of the method for manufacturing the packaging bag 1 will be described.

In the first embodiment, the packaging bag 1 was manufactured using the bottom film 20a and the peripheral wall film 20b. However, in the method of this embodiment, the packaging bag 1 can be manufactured using a single film 20c.

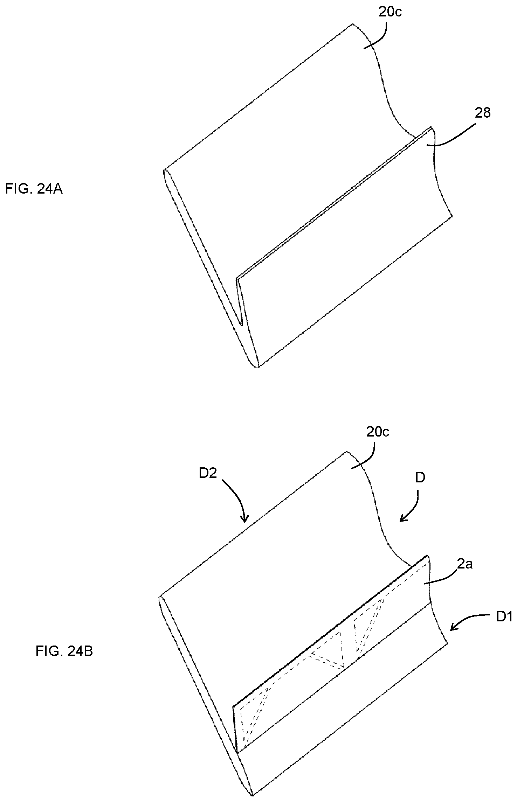

First, as shown in Fig. 24A, the inner surfaces of the end portions of a single film 20c are overlapped to form an overlapping portion 28. Then, as shown in Fig. 24B, the inner surfaces of the overlapping portion 28 are welded together to form a first bottom portion 2a, and the remaining portion forms a loop D.

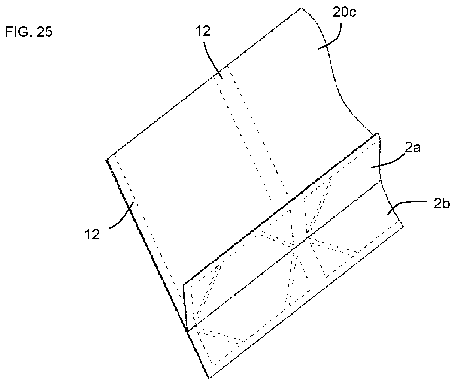

Next, as shown in Figs. 24B to 25, the inner surfaces of the film 20c are welded together at a portion D1 of the loop D adjacent to the first bottom portion 2a to form a second bottom portion 2b, and a portion corresponding to the side end welded portion 12 is welded. Also, the film 20c is cut at an end portion D2 of the loop D opposite to the second bottom portion 2b.

Through the above steps, the packaging bag 1 is obtained. When the film 20c is long, a packaging bag 1 can be separated by performing a step of separating the packaging bag 1 from the film 20c. The packaging bag 1 can be separated from the film 20c, for example, by cutting the film 20c along the side end welded portion 12. Note that the first bottom portion 2a and the second bottom portion 2b may be formed simultaneously, and then the side end welded portion 12 may be formed.

The packaging bag 1 obtained by the method of the first embodiment has the bottom film 20a in a folded state immediately after manufacturing, so it is necessary to develop the bottom portion 2 to attach the reinforcing member 27. On the other hand, the packaging bag 1 obtained by the method of this embodiment has the bottom portion 2, which is composed of the first and second bottom portions 2a and 2b, in an developed state, so there is an advantage that the step of developing the bottom portion 2 is unnecessary. Also, in the method of this embodiment, the packaging bag 1 can be manufactured with a single film 20c, so the manufacturing equipment can be simplified compared to the method of the first embodiment.

In the above description, the steam vent seal portion 11 was omitted, but the steam vent seal portion 11 can be formed similarly to the first and fifth embodiments. Also, it is preferable that the steam vent seal portion 11 is provided on a portion other than the fin seal portion 10, as described in the fifth embodiment.

### 8. Eighth Embodiment

In the eighth embodiment, the outer packaging body and its modified examples will be described.

An outer packaging body may be provided so as to cover at least a part of the outer surface of the packaging bag 1. For example, the packaging bag 1 may be stored inside an outer packaging body made of a material such as paper or resin and having an overall box shape. By providing the outer packaging body, the packaging bag 1 can be made to stand more stably on its own. Also, after cooking by heating, the outer packaging body covering the outer surface of the packaging bag 1 functions as a heat insulator, making it difficult for the food to cool down. Furthermore, even if the food inside the packaging bag 1 is hot, it becomes easy to hold, incline, or lift the packaging bag 1 by holding the outer packaging body. When cooking the packaged food, the food stored in the packaging bag 1 may be heated with the outer packaging body removed, or the food stored in the packaging bag 1 may be heated together with the outer packaging body.

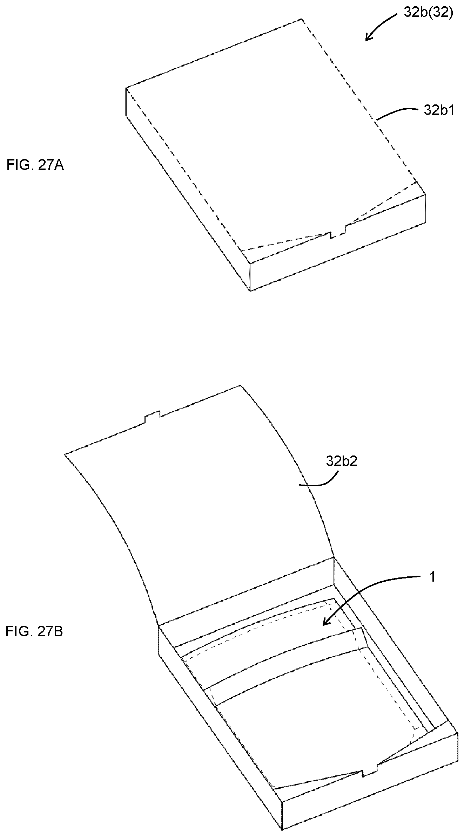

Furthermore, as shown in Figs. 26 to 27, the outer packaging body 32 covering the packaging bag 1 in which food is stored can be used as the reinforcing member 27. Examples of the outer packaging body 32 include a tubular outer packaging body 32a as shown in Fig. 26A and a box-shaped outer packaging body 32b as shown in Fig. 27A.

The tubular outer packaging body 32a includes a first covering portion 32a1 covering the bottom portion 2 and a second covering portion 32a2 facing the first covering portion 32a1. The bottom portion 2 is fixed to the first covering portion 32a1 or is configured to be fixed by a consumer to the first covering portion 32a1. The first covering portion 32a1 and the second covering portion 32a2 are connected at both left and right edges 32a3 and are cylindrical. By cutting the outer packaging body 32a at the edge 32a3, for example, the cylinder opens and the outer packaging body 32a becomes band-shaped. It is preferable to provide an easy-to-cut portion 32a4 such as a perforation in the portion where the outer packaging body 32a is cut.

As shown in Fig. 26B, the band-shaped outer packaging body 32a can, for example, have the second covering portion 32a2 folded back at the edge 32a3 and overlapped with the first covering portion 32a1. In this case, the overlapping first covering portion 32a1 and second covering portion 32a2 can be used as the reinforcing member 27, making it easier for the packaging bag 1 to stand stably on its own. Note that the first covering portion 32a1 alone may be used as the reinforcing member 27 without using the second covering portion 32a2.

In another form, the first covering portion 32a1 and the second covering portion 32a2 may be connected at one edge 32a3 and not connected at the other edge 32a3. In this case, the outer packaging body 32a is originally band-shaped. In this case, it is preferable that the second covering portion 32a2 is fixed to the packaging bag 1 to prevent the second covering portion 32a2 from dangling. In this case, the second covering portion 32a2 can be folded back by releasing the fixation between the second covering portion 32a2 and the packaging bag 1.

The box-shaped outer packaging body 32b stores the packaging bag 1 inside. The bottom portion 2 of the packaging bag 1 is preferably fixed to the bottom surface of the outer packaging body 32b or configured so that the consumer can fix it. The outer packaging body 32b is preferably provided with an easy-to-cut portion 32b1 such as a perforation, making it easy to open the outer packaging body 32b, as shown in Fig. 27B. Since the outer packaging body 32b functions as the reinforcing member 27, the outer packaging body 32b can be used for heating and cooking by placing the outer packaging body 32b inside a microwave oven with the upper portion 32b2 of the outer packaging body 32b opened.

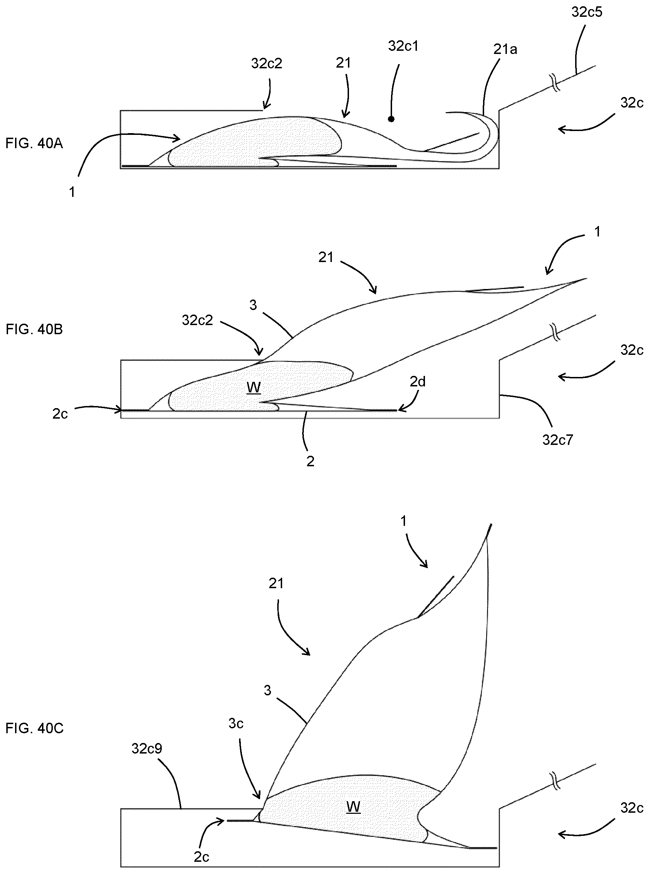

The packaging bag 1 may be stored in an outer packaging body 32c having the shape shown in Fig. 39. The outer packaging body 32c has a rectangular parallelepiped shape, and the packaging bag 1 is stored inside the outer packaging body 32c without being fixed to it. The top portion 32c3 of the outer packaging body 32c is provided with an easy-to-cut portion 32c4 such as a perforation. By cutting the top portion 32c3 along the easy-to-cut portion 32c4, a lid portion 32c5 surrounded by the easy-to-cut portion 32c4 can be opened, as shown in Fig. 40A. The portion of the top portion 32c3 other than the lid portion 32c5 becomes a covering portion 32c9 that covers the packaging bag 1. The lid portion 32c5 is preferably connected to one side surface portion 32c7 of the outer packaging body 32c at one side edge 32c6 of the top portion 32c3.

Inside the outer packaging body 32c, the bottom portion 2 is in a state shifted towards the other side surface portion 32c8 inside the outer packaging body 32c. The other side surface portion 32c8 is the side surface part facing the one side surface portion 32c7. The peripheral surface portion 21 is in a state of being folded down towards the back edge 2d side. The contents W are arranged in a position biased towards the other side surface portion 32c8 side. Near the upper end of the peripheral surface portion 21, a folded-back portion 21a where the peripheral surface portion 21 is folded back is provided, and the packaging bag 1 is compactly stored inside the outer packaging body 32c.

During heating, as shown in Fig. 40A, the lid portion 32c5 is opened to create an opening 32c1, and the packaging bag 1 and the outer packaging body 32c are placed in the microwave oven to start heating. When the packaging bag 1 expands due to the steam generated from the contents W, the folded-back portion 21a unfolds, and the peripheral surface portion 21 rises and tries to go out of the outer packaging body 32c through the opening 32c1, as shown in Fig. 40B. At this time, the front portion 3 comes into contact with the edge 32c2 of the opening 32c1, and as the packaging bag 1 further expands in this state, a force acts to move the bottom portion 2 towards the one side surface portion 32c7 side (the right side in Fig. 40B). This force causes the bottom portion 2 to move towards the one side surface portion 32c7. As a result, most of the bottom portion 2 is arranged in a position facing the opening 32c1, and only a part of the bottom portion 2 near the front edge 2c is covered by the covering portion 32c9. Preferably, the bottom portion 2 moves until the back edge 2d of the bottom portion 2 reaches the one side surface portion 32c7. Also, as shown in Fig. 2B, the packaging bag 1 expands while the bottom portion 2 curves so that both left and right ends lift up.

As shown in Fig. 40C, when the packaging bag 1 further expands, the peripheral surface portion 21 tries to rise further, and at that time, the front edge 2c tries to lift up. However, since the front edge 2c is arranged in a position covered by the covering portion 32c9, when the front edge 2c lifts up, a portion of the front portion 3 adjacent to the front edge 2c (e.g., the front facing portion 3c) comes into contact with the edge 32c2 of the opening 32c1. This suppresses the lifting of the front edge 2c and promotes the rise of the peripheral surface portion 21.

Thus, according to this embodiment, the rise of the peripheral surface portion 21 can be promoted by the outer packaging body 32c without fixing the packaging bag 1 to the outer packaging body 32c. Also, since the rise of the peripheral surface portion 21 is promoted by the outer packaging body 32c, it is not necessary to attach the reinforcing member 27 to the packaging bag 1.

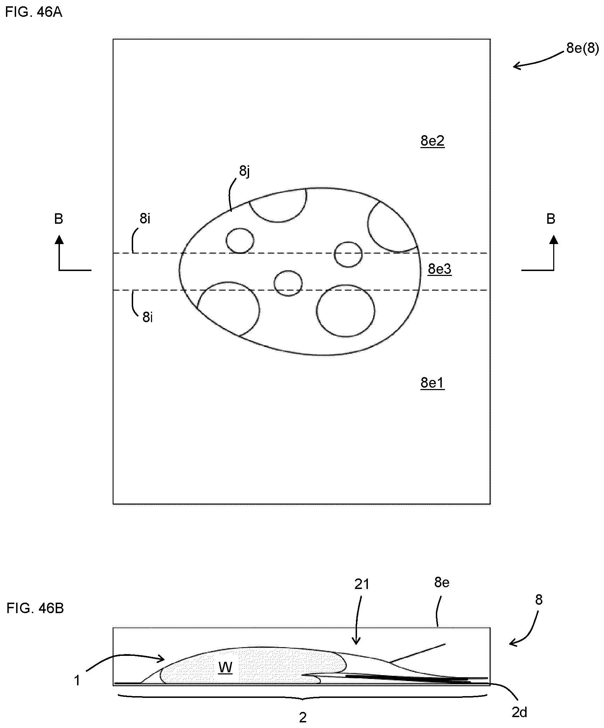

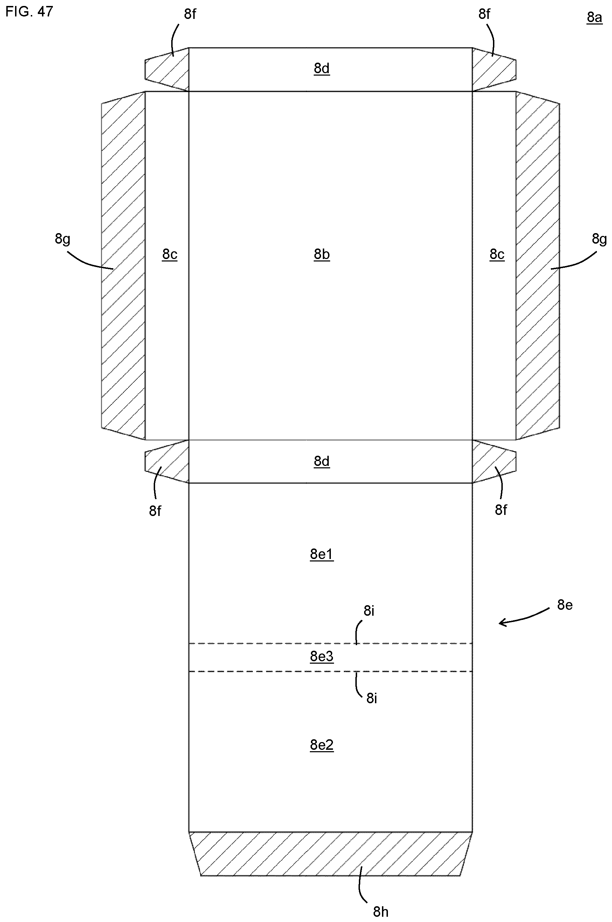

The packaging bag 1 may be stored in an outer packaging body 8 having the shape shown in Fig. 46. The outer packaging body 8 has a rectangular parallelepiped shape, and the packaging bag 1 is stored inside the outer packaging body 8 without being fixed to it. The outer packaging body 8 can be made from the sheet 8a of the developed view shown in Fig. 47. The outer packaging body 8 includes a bottom portion 8b, a long side portion 8c, a short side portion 8d, and a top portion 8e. The bottom portion 8b is connected to the long side portion 8c and the short side portion 8d. The bottom portion 8b and the top portion 8e are connected via the short side portion 8d. A pair of first adhesive margins 8f are connected to each short side portion 8d. A second adhesive margin 8g is connected to each long side portion 8c. A third adhesive margin 8h is connected to the top portion 8e. The long side portion 8c and the short side portion 8d can be joined to each other by adhering them with the first adhesive margin 8f. The top portion 8e can be joined to the long side portion 8c by adhering it with the second adhesive margin 8g. The top portion 8e can be joined to the short side portion 8d at the third adhesive margin 8h. In this way, the outer packaging body 8 can be manufactured from the sheet 8a by adhesion at the first to third adhesive margins 8f, 8g, and 8h.

As will be described later, the top portion 8e is assumed to peel off from the second adhesive margin 8g as the contents inside the packaging bag 1 are heated. For this reason, the adhesive member (adhesive, glue, double-sided tape, etc.) for adhering the top portion 8e to the second adhesive margin 8g should have an adhesive strength that prevents peeling during transportation but allows peeling as the packaging bag 1 expands. It is also preferable that this adhesive member has an adhesive strength that decreases at high temperatures and contains components that generate heat with microwaves. Examples of such components include inorganic materials such as indium oxide, aluminum, tin, nickel, and carbon, and conductive organic compounds such as polyanilines and polypyrroles.

The top portion 8e of the outer packaging body 8 is provided with an easy-to-cut portion 8i such as a perforation. By cutting the top portion 8e along the easy-to-cut portion 8i, the top portion 8e can be divided into first and second top portions 8e1 and 8e2. In this embodiment, a pair of easy-to-cut portions 8i are provided, and by cutting the top portion 8e along the pair of easy-to-cut portions 8i, a band-shaped portion 8e3 between the pair of easy-to-cut portions 8i can be removed. The first and second top portions 8e1 and 8e2 are adhered to the second adhesive margin 8g in the state before heating.

As shown in Fig. 46, inside the outer packaging body 8, the bottom portion 2 is arranged so as to cover almost the entire bottom portion 8b. The peripheral surface portion 21 is folded down towards the back edge 2d side.

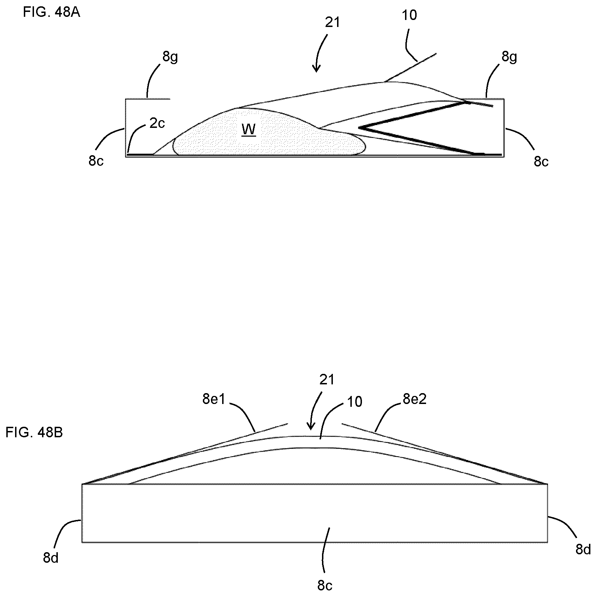

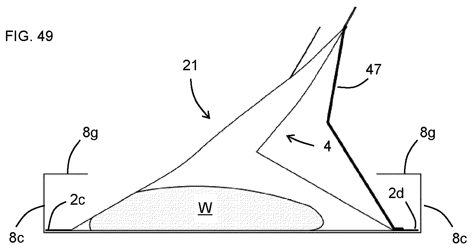

Upon heating, the top portion 8e is cut along the easy-to-cut portion 8i to remove the band-shaped portion 8e3. After that, the packaging bag 1 and the outer packaging body 8 are placed in the microwave oven to start heating. When the packaging bag 1 expands due to the steam generated from the contents W, the peripheral surface portion 21 rises and pushes up the first and second top portions 8e1 and 8e2, thereby peeling the first and second top portions 8e1 and 8e2 from the second adhesive margin 8g, as shown in Fig. 48. The packaging bag 1 tends to lift its front edge 2c and fall over in the initial stage of expansion, but in the initial stage of expansion, the lifting of the front edge 2c is suppressed by the first and second top portions 8e1 and 8e2. Therefore, according to the configuration of this embodiment, the packaging bag 1 is prevented from falling over during heating. As shown in Fig. 49, when the packaging bag 1 further expands, the peripheral surface portion 21 rises further, and the back portion 4 opens.

By the way, in the packaging bag 1 where the peripheral surface portion 21 is folded down towards the back edge 2d side, the back portion 4 is not visible before heating. However, when the back portion 4 unfolds as heating progresses, the back portion 4 becomes visible. For this reason, by printing an illustration on the back portion 4 or attaching a sheet 47 with such an illustration to the back portion 4, the illustration can appear on the back portion 4 side as the peripheral surface portion 21 rises, enhancing the design appeal of the packaging bag 1.

Also, the illustration that appears on the back portion 4 can be linked with the illustration 8j displayed on the outer packaging body 8. For example, if the illustration 8j on the outer packaging body 8 is an animal's egg (e.g., a dinosaur egg), and the illustration that appears on the back portion 4 is the animal hatching from that egg, a story of the animal hatching from the egg as heating progresses can be created, greatly enhancing the design appeal.

### 9. Ninth Embodiment

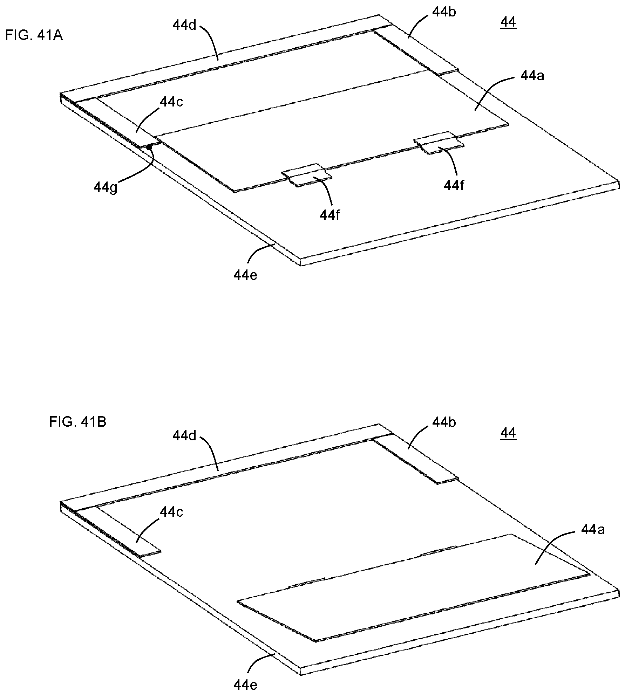

In the ninth embodiment, the method and apparatus for attaching the reinforcing member 27 will be described using Fig. 41 to 45.

The packaging bag 1 to which the reinforcing member 27 is attached can be manufactured by the method described in "1.3. Method for Manufacturing Packaging Bag," for example. In this method, as shown in Figs. 4 and 9 to 10, the bottom film 20a is folded in a V-shape along the center line E1 and inserted between the film that will become the front portion 3 and the film that will become the back portion 4, and then welded. Therefore, a fold line due to the center line E1 is likely to be formed in the bottom portion 2. Although this method has advantages such as easily forming the sloped portion 13c shown in Fig. 3, it also tends to have a problem that it is difficult to attach the reinforcing member 27 if a fold line exists in the bottom portion 2. In order to solve this problem, in this embodiment, the reinforcing member 27 is attached while the four sides of the bottom portion 2 are supported using the holding jig 44 shown in Fig. 41. Therefore, even if a fold line exists in the bottom portion 2, the reinforcing member 27 can be attached with high precision and high efficiency.

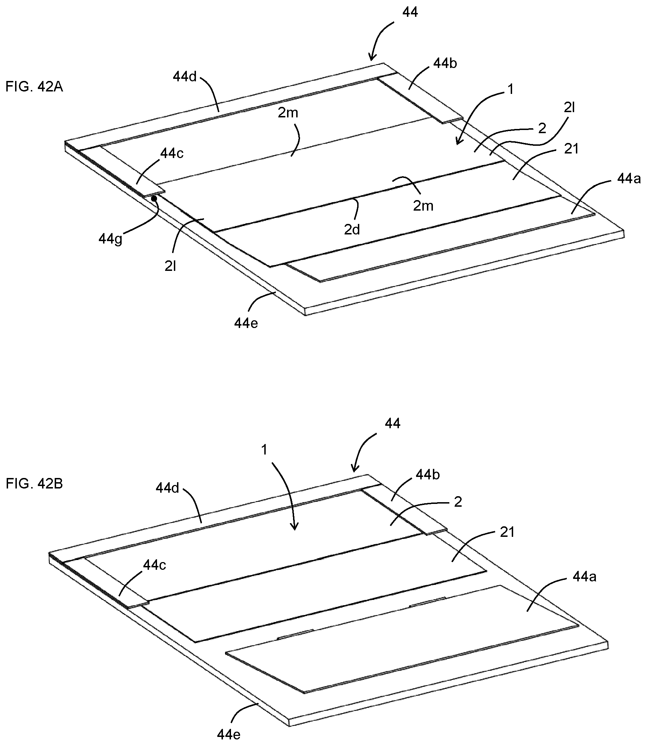

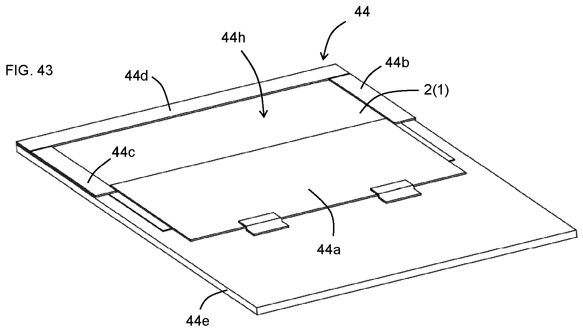

Fig. 41 shows a holding jig 44 that holds the packaging bag 1 when attaching the reinforcing member 27. The holding jig 44 includes first to fourth support portions 44a to 44d, a base 44e, and a hinge 44f. The first support portion 44a is rotatable about the hinge 44f, and can be moved between the holding state shown in Fig. 41A and the released state shown in Fig. 41B. The second to fourth support portions 44b to 44d are fixed to the base 44e such that a gap 44g is provided between them and the base 44e. As shown in Figs. 42A to 42B, the bottom portion 2 of the packaging bag 1 can be inserted into the gap 44g. The second and third support portions 44b and 44c are arranged parallel to each other with a space between them, and are configured to support a pair of short side portions 2l of the bottom portion 2. The fourth support portion 44d is arranged between the second and third support portions 44b and 44c so as to extend perpendicular to the second and third support portions 44b and 44c. The fourth support portion 44d is configured to support one of the long side portions 2m of the bottom portion 2. The other long side portion 2m of the bottom portion 2 is configured to be supported by the first support portion 44a in the holding state, as shown in Figs. 41A and 43. The short side portions 2l and the long side portions 2m are portions adjacent to the short sides and the long sides, respectively, of the rectangular bottom portion 2.

The packaging bag 1 is held by the holding jig 44 with the peripheral surface portion 21 folded down towards the back edge 2d side and the bottom portion 2 facing upward, as shown in Fig. 42A. When holding the bottom portion 2 of the packaging bag 1 with the holding jig 44, first, as shown in Fig. 42A, the first support portion 44a is set to the released state. In this state, the bottom portion 2 is pushed into the gap 44g from the ends of the second and third support portions 44b and 44c, so that three sides of the bottom portion 2 are supported by the second to fourth support portions 44b to 44d, as shown in Fig. 42B. Next, as shown in Fig. 43, the first support portion 44a is rotated to the holding state. As a result, the four sides of the bottom portion 2 are supported by the first to fourth support portions 44a to 44d. The bottom portion 2 is exposed through the opening 44h surrounded by the first to fourth support portions 44a to 44d. The overlapping width between the first to fourth support portions 44a to 44d and the bottom portion 2 is, for example, 1 to 10 mm, preferably 2 to 8 mm (5 mm in this embodiment). This value is specifically, for example, 1, 2, 3, 4, 5, 6, 7, 8, 9, or 10 mm, and may be within a range between any two of the numerical values exemplified here. The opening 44h has a shape in which the bottom portion 2 is narrowed by the overlapping width.

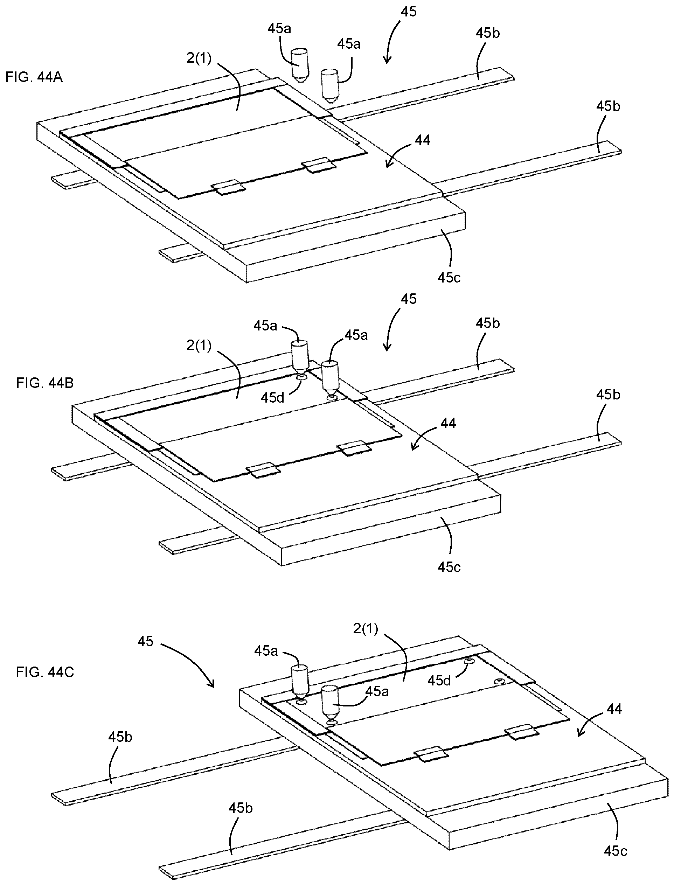

Next, as shown in Fig. 44A, the holding jig 44 with the packaging bag 1 held is installed in the adhesive application device 45. The adhesive application device 45 includes a nozzle 45a capable of discharging adhesive 45d, a guide rail 45b, and a conveying table 45c. The conveying table 45c is configured to be movable along the guide rail 45b. The holding jig 44 is placed on the conveying table 45c. The holding jig 44 can be fixed to the conveying table 45c by a clamp mechanism, for example.

In the adhesive application step, first, the conveying table 45c with the holding jig 44 fixed is moved to the first position shown in Fig. 44B. At the first position, the adhesive 45d is discharged from the nozzle 45a and applied to the bottom portion 2. In this embodiment, the adhesive 45d is applied from two nozzles 45a to two locations adjacent to one short side portion 2l of the bottom portion 2. It is preferable to perform positioning at the first position using a positioning mechanism (not shown). As the positioning mechanism, for example, a mechanism that engages with a protrusion and a recess when the conveying table 45c reaches the first position is preferable. Furthermore, it is preferable that this protrusion-recess engagement is released when a force exceeding a predetermined threshold is applied to the conveying table 45c. According to such a configuration, after the application of the adhesive 45d at the first position is completed, the conveying table 45c can be quickly moved to the second position.

Next, the conveying table 45c is moved along the guide rail 45b to the second position shown in Fig. 44C. At the second position, the adhesive 45d is discharged from the nozzle 45a and applied to the bottom portion 2. In this embodiment, the adhesive 45d is applied from two nozzles 45a to two locations adjacent to the other short side portion 2l of the bottom portion 2. Through the above steps, the adhesive 45d can be applied to the four corners of the bottom portion 2. Positioning at the second position is preferably performed using a positioning mechanism (not shown). As the positioning mechanism, for example, a mechanism that abuts against the conveying table 45c when it reaches the second position and prevents further movement can be used.

After this, the conveying table 45c is moved from the second position to the installation position shown in Fig. 44A, and then the holding jig 44 is removed from the adhesive application device 45. If the adhesive 45d has high viscosity, such as a hot-melt adhesive, stringing may occur in the adhesive 45d when moving the holding jig 44 from the first position to the second position or from the second position to the installation position. If the thread-shaped resin generated by this stringing protrudes from the bottom portion 2, the appearance of the packaging bag 1 will be significantly deteriorated. However, in this embodiment, in both the movement from the first position to the second position and the movement from the second position to the installation position, the nozzle 45a moves relative to the center in the longitudinal direction of the bottom portion 2. Therefore, even if stringing occurs, the thread-shaped resin generated by the stringing is suppressed from protruding from the bottom portion 2.

Note that the adhesive 45d may be applied by another method. For example, after applying the adhesive 45d to two locations adjacent to one long side portion 2m of the bottom portion 2, the adhesive 45d may be applied to two locations adjacent to the other long side portion 2m of the bottom portion 2. In this case, in both the movement from the first position to the second position and the movement from the second position to the installation position, the nozzle 45a moves relative to the center in the transverse direction of the bottom portion 2. However, even in this case, the thread-shaped resin is suppressed from protruding from the bottom portion 2.

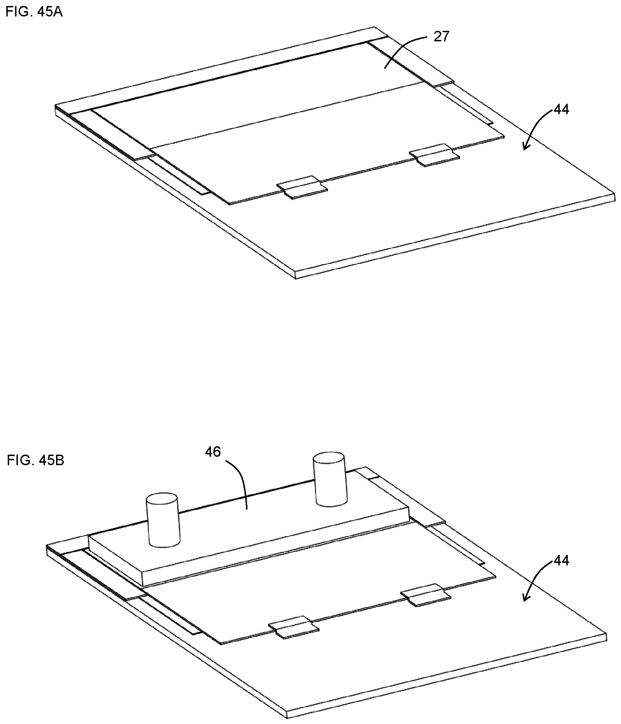

Next, as shown in Fig. 45A, the reinforcing member 27 is overlaid on the bottom portion 2 after the adhesive 45d has been applied. The reinforcing member 27 preferably has the same shape as the opening 44h, or a shape in which the opening 44h is slightly narrowed (e.g., by 0.1 to 5 mm). The width by which the opening 44h is narrowed is specifically, for example, 0.1, 0.5, 1.0, 1.5, 2, 3, 4, or 5 mm, and may be within a range between any two of the numerical values exemplified here. The reinforcing member 27 is preferably arranged so as to overlap the adhesive 45d applied onto the bottom portion 2.

Next, as shown in Fig. 45B, the pressing portion 46 is placed on the reinforcing member 27, and the pressing portion 46 presses the reinforcing member 27 against the bottom portion 2. This spreads the adhesive 45d and increases the adhesion between the reinforcing member 27 and the bottom portion 2, completing the step of attaching the reinforcing member 27. This step is preferably performed before the adhesive 45d hardens. The description of the shape of the pressing portion 46 is the same as the description of the shape of the reinforcing member 27.

### 10. Tenth Embodiment

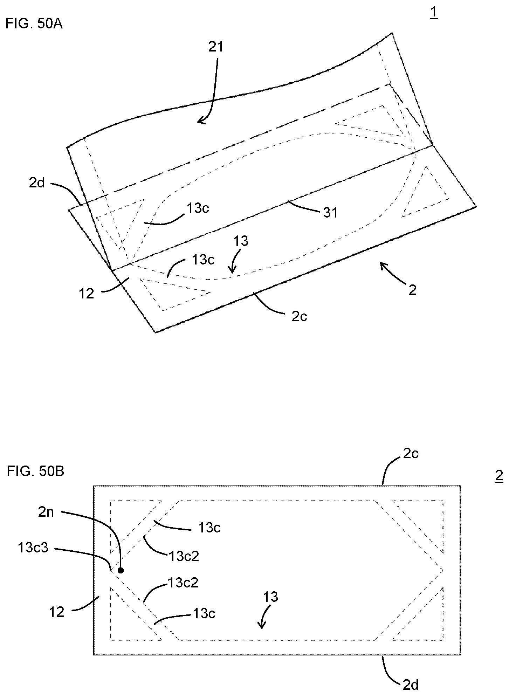

In the tenth embodiment, modified examples of the lower end welded portion 13 will be described using Figs. 50 to 52.

Fig. 50 shows a packaging bag 1 having a lower end welded portion 13 with the same shape as in the first embodiment. Although the reinforcing member 27 is not provided in Fig. 50, it may be provided. In this embodiment, in both the sloped portion 13c on the front edge 2c side and the sloped portion 13c on the back edge 2d side, the inner edge 13c2 of the sloped portion 13c reaches the side end welded portion 12 at the position of the fold line 31. That is, in the side end welded portion 12, the end points 13c3 of the inner edge 13c2 of the sloped portion 13c on the front edge 2c side and the back edge 2d side coincide. Therefore, near the side end welded portion 12, the front-back gap 2n between the inner edges 13c2 of the sloped portion 13c on the front edge 2c side and the back edge 2d side is very narrow.

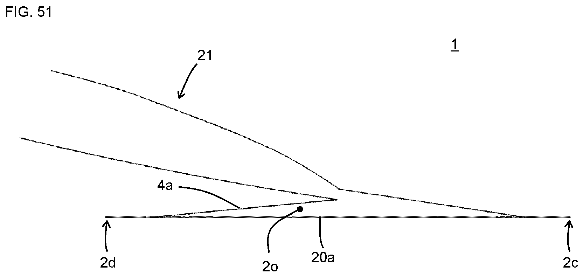

The packaging bag 1 is configured such that the peripheral surface portion 21 is folded down towards the back edge 2d side as shown in Fig. 51, and the peripheral surface portion 21 rises as steam enters the space 2o between the bottom film 20a and the lower back portion 4a during heating. However, when the reinforcing member 27 is not provided, or when the contents are solid matter, or when the arrangement of the contents is not favorable for the rise of the peripheral surface portion 21, sufficient steam may not enter the space 2o, making it difficult for the peripheral surface portion 21 to rise.

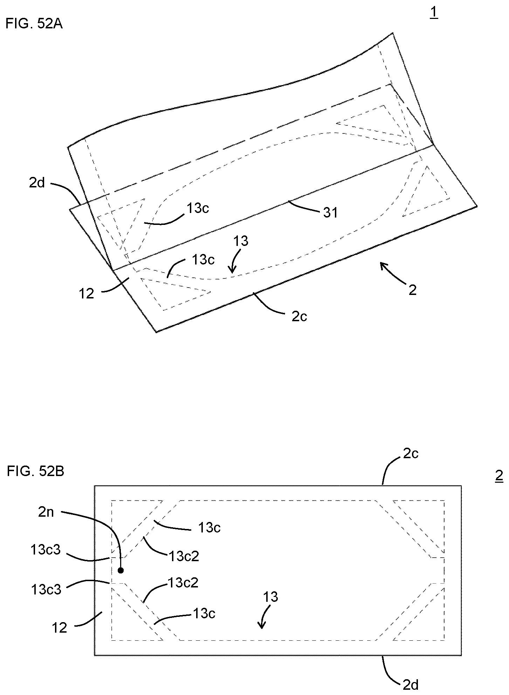

The embodiment of Fig. 52 solves this problem. In at least one of the sloped portion 13c on the front edge 2c side and the back edge 2d side, the end point 13c3 reaches the side end welded portion 12 before the fold line 31. Therefore, near the side end welded portion 12, the front-back gap 2n between the inner edges 13c2 of the sloped portion 13c on the front edge 2c side and the back edge 2d side is larger than in the embodiment of Fig. 50, allowing steam to flow through the gap 2n and easily enter the space 2o. Therefore, according to the embodiment of Fig. 52, the peripheral surface portion 21 becomes easier to rise.

### 11. Eleventh Embodiment

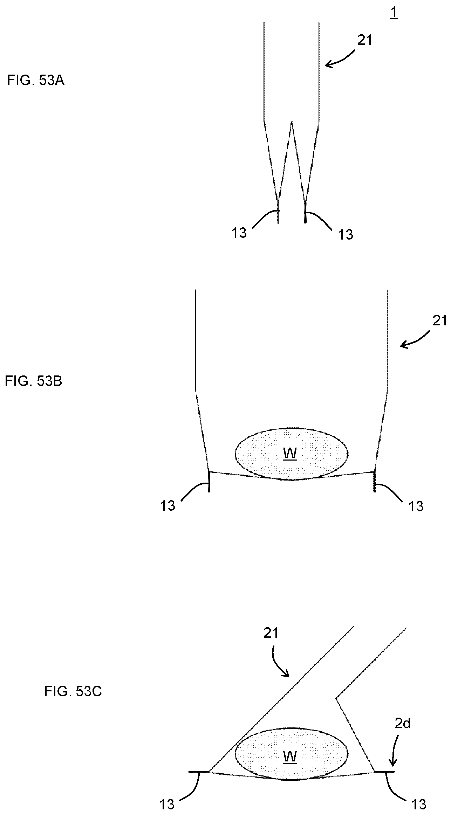

In the eleventh embodiment, another modified example of the lower end welded portion 13 will be described using Figs. 53 to 54.

Immediately after forming the welded portions other than the upper end welded portion 19, the packaging bag 1 is in the state shown in Fig. 53A. From this state, the contents W are filled as shown in Fig. 53B, and then the peripheral surface portion 21 is folded down towards the back edge 2d side, allowing for manufacturing.

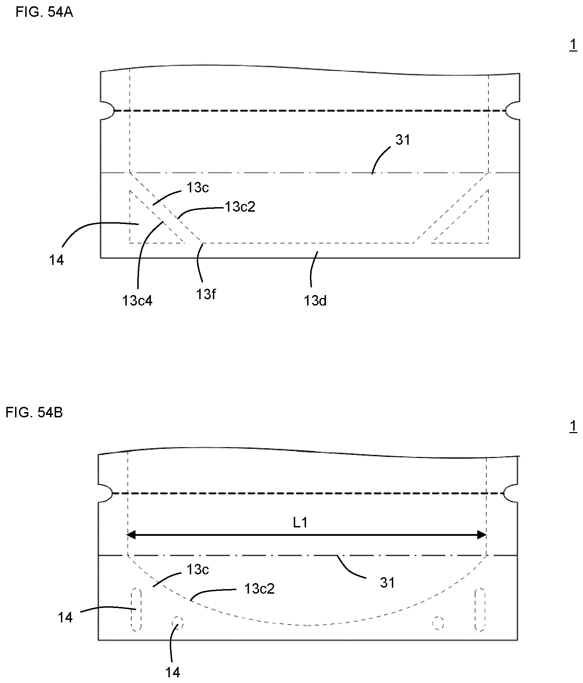

When filling the contents W, the lower end welded portion 13 faces downward as shown in Fig. 53B. When folding the peripheral surface portion 21 towards the back edge 2d side, it is necessary to invert (i.e., rotate outward) the lower end welded portion 13 so that the lower end welded portion 13 faces the horizontal direction, as shown in Fig. 53C. It is desirable for this inversion to be performed smoothly. However, as shown in Fig. 54A, when the inner edge 13c2 of the sloped portion 13c of the lower end welded portion 13 is linear, the intersection point 13f of the inner edge of the sloped portion 13c and the inner edge of the central portion 13d has an sharp-cornered shape, which may make it difficult to invert the lower end welded portion 13.

The embodiment of Fig. 54B solves this problem, and the inner edge 13c2 of the sloped portion 13c has a downwardly convex curved shape. Therefore, there is no sharp-cornered shape in the lower end welded portion 13, and the lower end welded portion 13 can be inverted smoothly. Also, the inner edge 13c2 is preferably a downwardly convex curved shape over the entire inner edge 13c2 of the lower end welded portion 13. In this case, there is no linear central portion 13d, and the entire inner edge 13c2 of the lower end welded portion 13 becomes the sloped portion 13c.

Where the left-right length of the inner edge 13c2 of the lower end welded portion 13 is L1, and the left-right length of the linear central portion 13d is L2, then L2/L1 is, for example, 0 to 0.5, and more preferably 0 to 0.4. In the form of Fig. 54A, L2/L1 is about 0.6, and the larger the L2/L1, the steeper the slope of the sloped portion 13c tends to be, making it more difficult to invert the lower end welded portion 13. In the form of Fig. 54B, since there is no central portion 13d, L2/L1 = 0. The value of L2/L1 is specifically, for example, 0.0, 0.1, 0.2, 0.3, 0.4, or 0.5, and may be within a range between any two of the numerical values exemplified here.

Also, in the form of Fig. 54A, the outer edge 13c4 of the sloped portion 13c is parallel to the inner edge 13c2, and the air pocket 14 has a triangular shape with an sharp-cornered apex. Such a shape also tends to hinder the inversion of the lower end welded portion 13. Therefore, as shown in Fig. 54B, it is preferable that the lower end welded portion 13 does not have an outer edge parallel to the inner edge 13c2 of the sloped portion 13c, and the air pocket 14 preferably has a curved shape on the lower end side of the packaging bag 1. The air pocket 14 is more preferably arc-shaped on the lower end side of the packaging bag 1. Also, the air pocket 14 preferably has a shape without an sharp-cornered apex, and is more preferably circular, elliptical, or oval. It is preferable to provide a plurality of air pockets 14 at positions adjacent to the left end and the right end of the packaging bag 1, respectively.

### (Fifth Aspect)

### 1. Packaging Bag Unit 50 of the First Embodiment

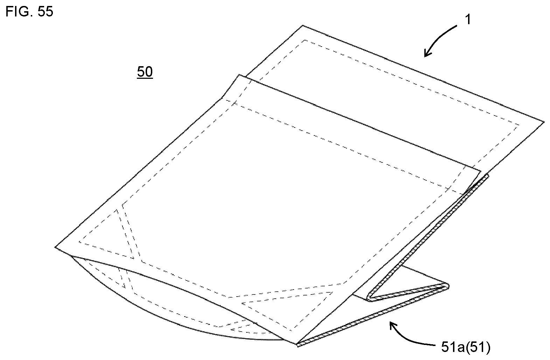

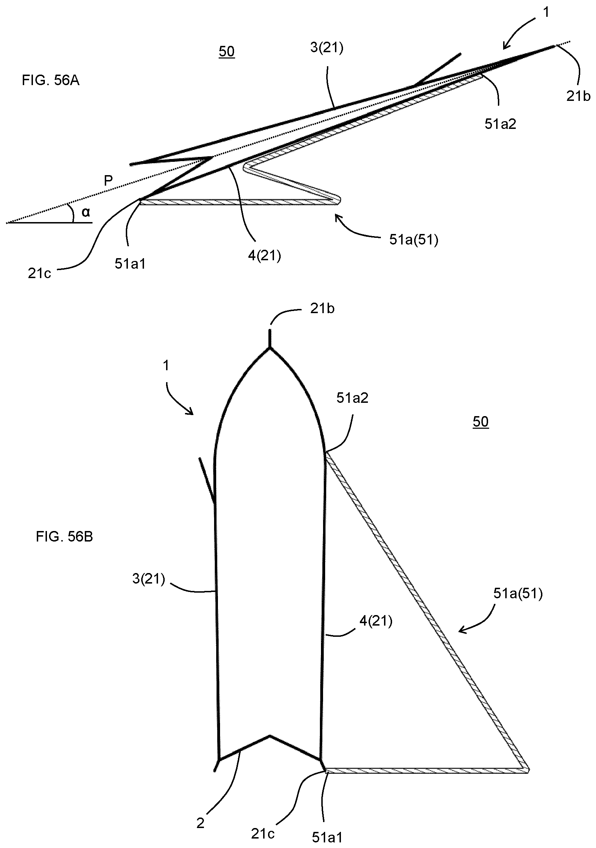

The packaging bag unit 50 according to the first embodiment of the present invention will be described using Figs. 55 to 59. As shown in Figs. 55 to 56, the packaging bag unit 50 of this embodiment includes a packaging bag 1 and a displacement assisting portion 51. The packaging bag 1 includes a peripheral surface portion 21 having a front portion 3 and a back portion 4 that face each other. The displacement assisting portion 51 is configured to deform and change the inclination angle of the peripheral surface portion 21 when the packaging bag unit 50 is heated in a microwave oven, as shown in Figs. 56A to 56B. Each component will be described below.

### 1-1. Packaging Bag 1

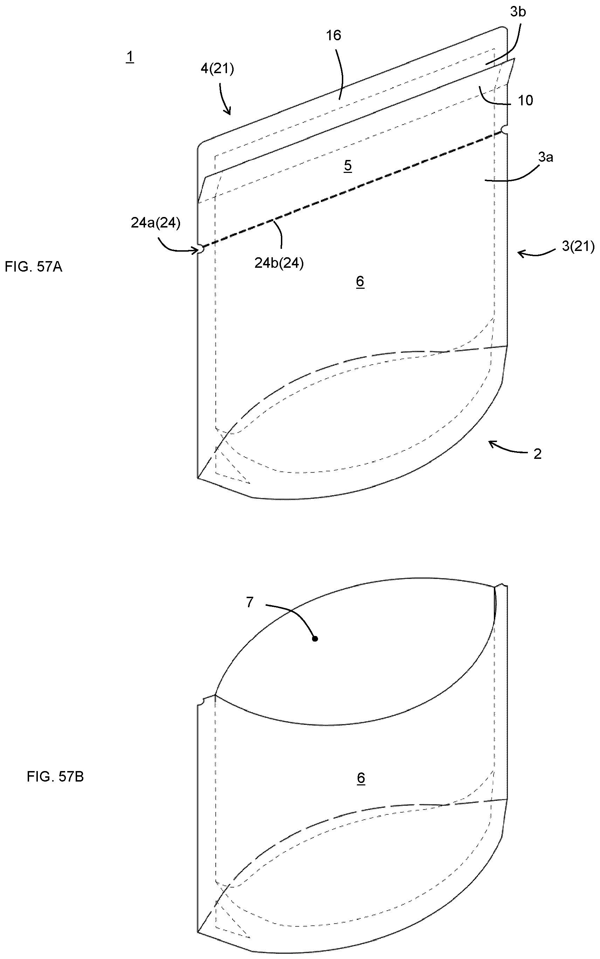

As shown in Figs. 57 to 59, the packaging bag 1 is a self-standing packaging bag for a microwave oven, made of a flexible film formed into a bag shape. The packaging bag 1 includes a bottom portion 2 and a peripheral surface portion 21 provided so as to stand from the bottom portion 2. The peripheral surface portion 21 includes a front portion 3 and a back portion 4 that face each other. The front portion 3 and the back portion 4 are welded together at their left-right end portions (hereinafter also referred to as side ends). The bottom portion 2 is welded (heat-sealed) to the front portion 3 and the back portion 4. In this way, the film is formed into a bag shape by welding the bottom portion 2, the front portion 3, and the back portion 4 together. As shown in Fig. 57A, when contents are stored inside, an upper end welded portion 16 is provided at the upper end of the packaging bag 1, and the packaging bag 1 is sealed.

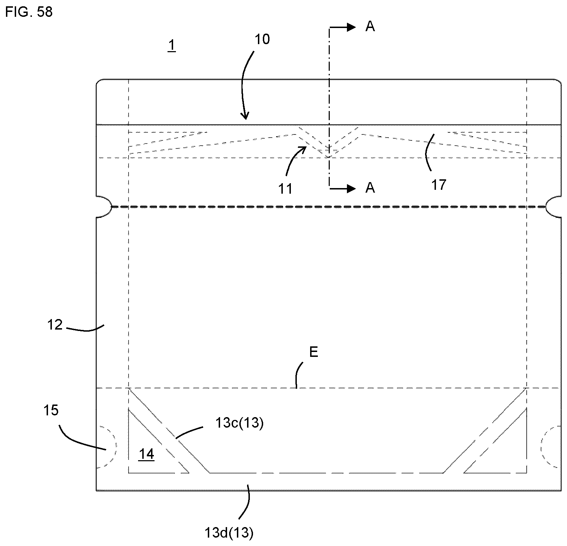

In this disclosure, the top, bottom, left, and right in Fig. 58 will be used to describe the top, bottom, left, and right of the packaging bag 1. Specifically, the bottom portion 2 side is the back surface, and the front portion 3 (and back portion 4) side is the front surface. Also, the left and right when the front portion 3 is placed in the foreground are the left and right of the packaging bag 1. Furthermore, the front portion 3 side is the front side, and the back portion 4 side is the back side.

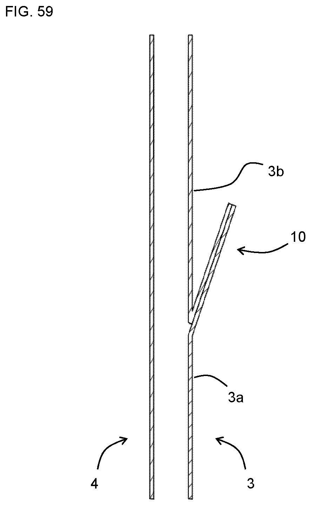

The front portion 3 includes a lower front portion 3a and an upper front portion 3b. The lower front portion 3a is welded to the bottom portion 2. As shown in Fig. 59, the lower front portion 3a and the upper front portion 3b are folded back on each other, and their inner surfaces are overlapped and welded together at a fin seal portion 10.

As shown in Figs. 57 to 58, an opening portion 24 is provided in the peripheral surface portion 21 of the packaging bag 1. The opening portion 24 is a portion for opening the packaging bag 1. In this embodiment, the opening portion 24 includes a tear initiation portion 24a that serves as a starting point for tearing the peripheral surface portion 21, and a tear line 24b on which a line indicating the portion to be cut open is printed. The packaging bag 1 can be opened by tearing the peripheral surface portion 21 starting from the tear initiation portion 24a.

The packaging bag 1 has a to-be-removed portion 5 and a main body 6. The to-be-removed portion 5 is placed upper in the top-bottom direction, with the opening portion 24 as the boundary. By tearing the peripheral surface portion 21 in the circumferential direction at the opening portion 24 and removing the to-be-removed portion 5, a container-shaped main body 6 is obtained. As shown in Fig. 57B, an opening 7 is formed in the main body 6. The main body 6 is used as tableware for eating the contents inside the packaging bag 1.

The opening portion 24 is provided closer to the bottom portion 2 than the fin seal portion 10. That is, the fin seal portion 10 is provided in the to-be-removed portion 5. Therefore, when the to-be-removed portion 5 is removed during opening, the fin seal portion 10 is also removed together. Accordingly, the fin seal portion 10 does not get in the way when eating the contents.

Fig. 58 is a plan view showing the packaging bag 1. The plan view means viewing the packaging bag 1 from a direction perpendicular to the front portion 3 with the packaging bag 1 flattened in a state where it does not contain contents. As shown in Fig. 58, the packaging bag 1 is formed so as to be bilaterally symmetrical with respect to the left-right center line.

A steam vent seal portion 11 is formed in the packaging bag 1. The steam vent seal portion 11 is provided in the fin seal portion 10. The steam vent seal portion 11 is a welded portion with a lower welding strength than other welded portions. In the steam vent seal portion 11, when the internal pressure inside the packaging bag 1 increases due to steam generated by heating the packaging bag 1, a steam flow path is formed accordingly. The steam inside the packaging bag 1 is discharged to the outside from the steam vent seal portion 11. The steam vent seal portion 11 is connected to the side end welded portion 12 via an end seal portion 17.

At the side end of the packaging bag 1, a side end welded portion 12 for welding the front portion 3 and the back portion 4 is provided. This fixes the front portion 3 and the back portion 4 in the front-back direction. Furthermore, at the lower end of the packaging bag 1, a lower end welded portion 13 for welding the bottom portion 2 and the front portion 3, and the bottom portion 2 and the back portion 4 is provided.

The lower end welded portion 13 is a welded portion provided on the lower end side of the center line E. At the side end and the lower end of the packaging bag 1 (the area surrounded by the dashed-dotted line in Fig. 58), it welds the bottom portion 2 and the front portion 3, and the bottom portion 2 and the back portion 4. Also, on the lower end side of the center line E, a fixing portion 15 is provided in the side end welded portion 12. In the fixing portion 15, an opening is provided in the bottom portion 2, and the front portion 3 and the back portion 4 are welded together. With such a structure, as shown in Fig. 55, the packaging bag 1 can have its lower end of the central portion in the left-right direction (hereinafter also referred to as the central portion lower end) open in the front-back direction, but the lower end of the side portions in the left-right direction (hereinafter also referred to as the side portion lower end) does not open in the front-back direction.

As shown in Fig. 58, the lower end welded portion 13 includes a pair of sloped portions 13c and a central portion 13d. The sloped portion 13c is a part that is welded with a slope (obliquely) from the side end of the packaging bag 1 towards the lower end of the central portion. By providing the sloped portion 13c in this way, the distance from the center line E to the lower end welded portion 13 gradually increases from the side end towards the left-right central portion.

The central portion 13d is provided between the pair of sloped portions 13c and is formed in a straight line. By providing the central portion 13d in a straight line, it becomes easier to use the main body 6 as tableware.

An air pocket 14 is provided outside the sloped portion 13c. The air pocket 14 is formed in a triangular shape and is a space where air that could not be completely discharged to the outside upon welding in the lower end welded portion 13 remains. By providing the air pocket 14, the residual air in the lower end welded portion 13 gathers in the air pocket 14, improving the strength of the welding.

The film constituting the peripheral surface portion 21 and the film constituting the bottom portion 2 can be the same as those used in the first embodiment of the first to fourth aspects. As an example, in this embodiment, the structure is: base material layer: stretched nylon (25 µm) / printing layer / adhesive layer (dry lamination) / sealant layer: LLDPE (60 µm).

### 1-2. Displacement Assisting Portion 51

The displacement assisting portion 51 is configured to deform and change the inclination angle of the peripheral surface portion 21 when the packaging bag unit 50 is heated in a microwave oven. The displacement assisting portion 51 may or may not be fixed to the packaging bag 1, and may be fixed at one point or at two or more points. In this embodiment, the displacement assisting portion 51 includes a shape memory member 51a having the property of returning to its original shape when heated above its recovery temperature. The shape memory member 51a can be made of a shape memory material. The shape memory material is a material having shape memory properties and is made of shape memory alloy, shape memory polymer, or the like.

The original shape of the shape memory member 51a is a shape that allows the packaging bag 1 to stand, as shown in Fig. 56B, and its secondary shape is a folded shape, as shown in Fig. 56A. When the packaging bag unit 50 is heated in a microwave oven, the shape memory member 51a is also heated and reaches its recovery temperature or higher. Then, the shape memory member 51a changes from the secondary shape to the original shape. At this time, by the shape memory member 51a pushing up the peripheral surface portion 21, the inclination angle of the peripheral surface portion 21 can be changed. The recovery temperature is, for example, 50 to 100°C, specifically, for example, 50, 55, 60, 65, 70, 75, 80, 85, 90, 95, or 100°C, and may be within a range between any two of the numerical values exemplified here. If the recovery temperature is too low, the shape memory member 51a may return to its original shape before heating starts, and if the recovery temperature is too high, the shape memory member 51a may not return to its original shape during heating.

As shown in Fig. 56A, the inclination angle α of the peripheral surface portion 21 means the inclination angle of the center surface P of the front portion 3 and the back portion 4 with respect to the horizontal surface. The inclination angle of the peripheral surface portion 21 at the start of heating is, for example, 0 to 45 degrees, preferably 5 to 40 degrees, and more preferably 10 to 35 degrees. The inclination angle α is specifically, for example, 0, 5, 10, 15, 20, 25, 30, 35, 40, or 45 degrees, and may be within a range between any two of the numerical values exemplified here. Also, the inclination angle of the peripheral surface portion 21 when heating is completed is, for example, 50 to 130 degrees, preferably 60 to 120 degrees, and more preferably 70 to 110 degrees, specifically, for example, 50, 60, 70, 80, 90, 100, 110, 120, or 130 degrees, and may be within a range between any two of the numerical values exemplified here.

Also, the packaging bag 1 is in a deflated state at the start of heating, as shown in Fig. 56A, and as shown in Fig. 56B, as heating progresses, the contents vaporize, increasing the internal pressure inside the packaging bag 1 and causing it to expand.

Therefore, when the packaging bag unit 50 of this embodiment is heated in a microwave oven, the peripheral surface portion 21 is pushed up by the shape memory member 51a while the packaging bag 1 gradually expands, reaching the state shown in Fig. 56B. At this time, by changing the inclination angle of the peripheral surface portion 21, the contents of the packaging bag 1 are displaced or deformed, or the intensity distribution of microwaves irradiated onto the contents changes, thereby improving the uniformity of heating of the contents. Also, since the packaging bag 1 is self-standing, after heating is completed, it becomes easy to eat the contents using the packaging bag 1 as tableware.

The shape memory member 51a may or may not be fixed to the packaging bag 1, and may be fixed at one point or at two or more points. In one example, one end 51a1 of the shape memory member 51a is fixed near the lower end 21c of the peripheral surface portion 21, and the other end 51a2 is fixed at a position closer to the upper end 21b of the peripheral surface portion 21 than the one end 51a1. The fixing position of the other end 51a2 is preferably on the upper end 21b side of the center between the lower end 21c and the upper end 21b. Only one end 51a1 or the other end 51a2 of the shape memory member 51a may be fixed to the packaging bag 1.

### 2. Packaging Bag Unit 50 of the Second Embodiment

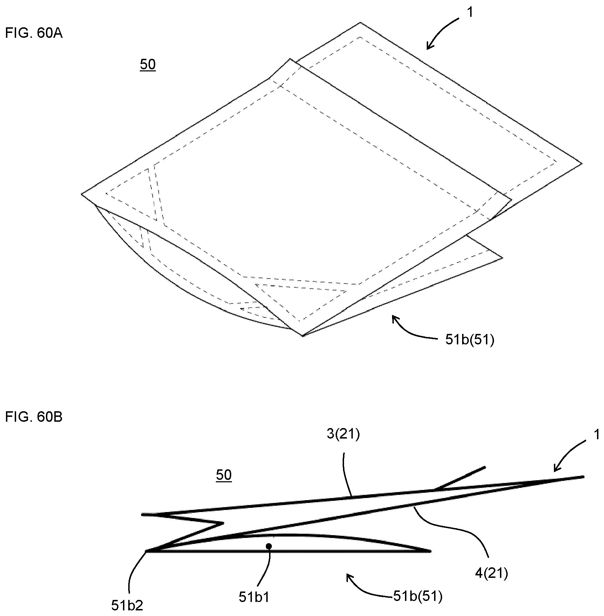

The second embodiment of the present invention will be described using Figs. 60 to 61. The main difference between the packaging bag unit 50 of this embodiment and the first embodiment is the configuration of the displacement assisting portion 51, and other points are similar to the first embodiment. Therefore, the description in the first embodiment can also be applied to this embodiment unless it contradicts the spirit thereof.

In this embodiment, the displacement assisting portion 51 includes an expandable member 51b having the property of expanding upon heating. By the expandable member 51b expanding as it is heated in a microwave oven, the inclination angle of the peripheral surface portion 21 can be changed.

Examples of the expandable member 51b include an inflatable bag and a foamable member. The inflatable bag is a bag that can expand upon heating, and an example is a bag in which a substance that generates gas upon heating is sealed inside 51b1. Examples of substances that generate gas upon heating include substances that vaporize upon heating and substances that decompose upon heating to generate gas. To ensure that it does not expand when not heated but expands when heated, the boiling point or decomposition temperature is preferably 50 to 100°C, specifically, for example, 50, 55, 60, 65, 70, 75, 80, 85, 90, 95, or 100°C, and may be within a range between any two of the numerical values exemplified here. Examples of substances that vaporize upon heating include water and alcohol (e.g., methanol or ethanol). The bag may be slack when not expanded and expand as the slack is eliminated, or it may not be slack when not expanded and expand as the bag stretches when expanded. In the latter case, the bag is made of, for example, rubber. The foamable member is a member whose volume increases by foaming upon heating. In either case, by the expandable member 51b pushing up the peripheral surface portion 21, the inclination angle of the peripheral surface portion 21 can be changed.

The expansion ratio of the expandable member 51b upon heating is, for example, 2 to 20 times, preferably 3 to 10 times. This ratio is specifically, for example, 2, 3, 4, 5, 6, 7, 8, 9, 10, 11, 12, 13, 14, 15, 16, 17, 18, 19, or 20 times, and may be within a range between any two of the numerical values exemplified here.

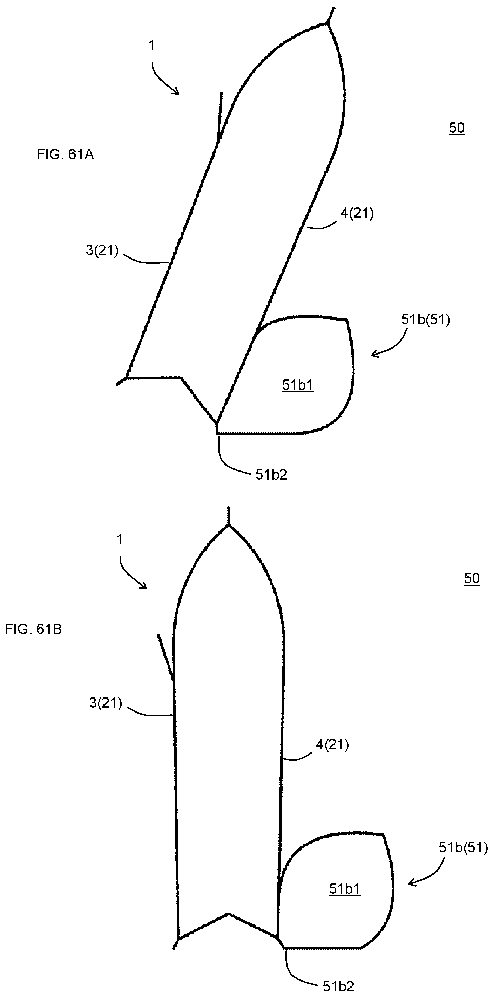

The packaging bag unit 50 of this embodiment is in the state shown in Fig. 60B before heating. When the packaging bag unit 50 is heated in a microwave oven, the packaging bag 1 and the expandable member 51b each expand, and the peripheral surface portion 21 is pushed up by the expandable member 51b while the packaging bag 1 gradually expands, passing through the state shown in Fig. 61A and reaching the state shown in Fig. 61B. At this time, by changing the inclination angle of the peripheral surface portion 21, the contents of the packaging bag 1 are displaced or deformed, or the intensity distribution of microwaves irradiated onto the contents changes, thereby improving the uniformity of heating of the contents. Also, since the packaging bag 1 is self-standing, after heating is completed, it becomes easy to eat the contents using the packaging bag 1 as tableware.

The expandable member 51b may or may not be fixed to the packaging bag 1, and may be fixed at one point or at two or more points. In one example, one end 51b2 of the expandable member 51b is fixed near the lower end 21c of the peripheral surface portion 21.

### 3. Packaging Bag Unit 50 of the Third Embodiment

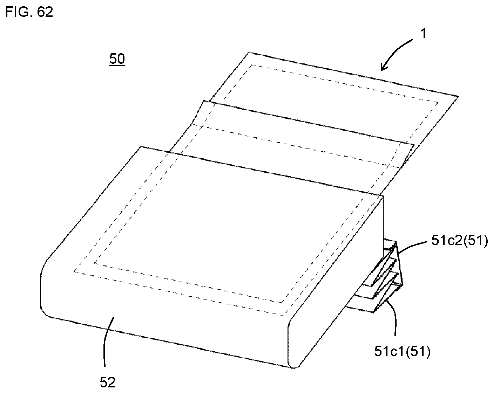

The third embodiment of the present invention will be described using Figs. 62 to 63. The main difference between the packaging bag unit 50 of this embodiment and the first embodiment is the configuration of the packaging bag 1 and the displacement assisting portion 51, and other points are similar to the first embodiment. Therefore, the description in the first embodiment can also be applied to this embodiment unless it contradicts the spirit thereof.

In this embodiment, the packaging bag 1 does not have a bottom portion 2, and the front portion 3 and the back portion 4 are directly welded together even at the lower end of the packaging bag 1. This packaging bag 1 is not self-standing on its own, but an outer packaging 52 surrounding the packaging bag 1 is provided, and since the outer packaging 52 is self-standing, the packaging bag 1 can stand by being placed inside the outer packaging 52. The configuration of the steam vent seal portion 11 is the same as in the first embodiment.

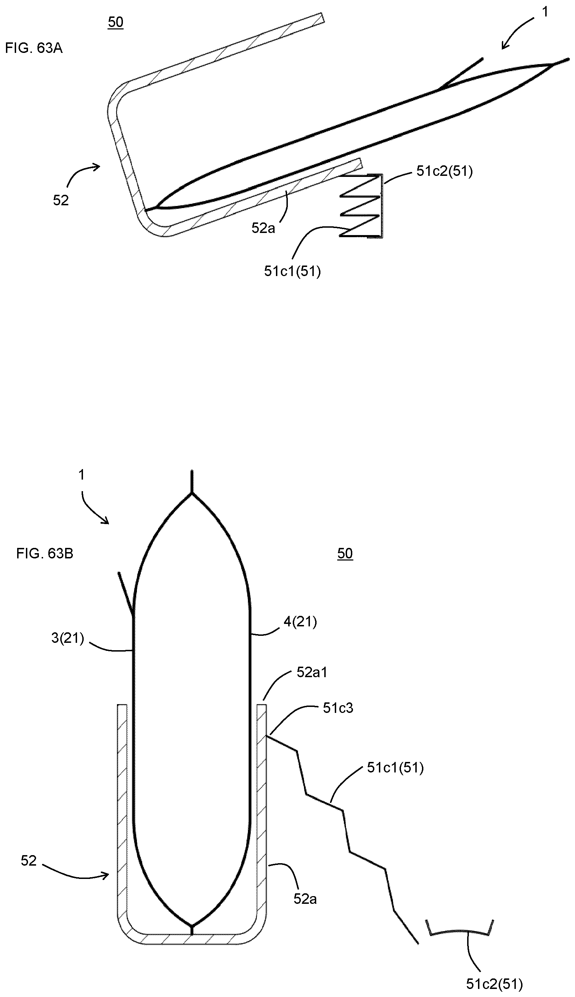

The displacement assisting portion 51 includes an elastic member 51c1 deformed from its original shape, and a restricting member 51c2 that restricts the recovery of the elastic member 51c1. The original shape of the elastic member 51c1 is a shape that allows the packaging bag 1 to stand, as shown in Fig. 63B, and its secondary shape is a shape deformed from the original shape, as shown in Fig. 63A. The elastic member 51c1 may be compressed or stretched from its original shape. In either case, the elastic member 51c1 tries to return to its original shape due to its restoring force. The restricting member 51c2 restricts the recovery of the elastic member 51c1 to its original shape. In one example, as shown in Figs. 62 and 63A, the elastic member 51c1 is in a compressed state, and a restoring force acts on the elastic member 51c1 to return to its original shape shown in Fig. 63B. On the other hand, since the recovery of the elastic member 51c1 to its original shape is restricted by the restricting member 51c2, the compressed state is maintained.

The restricting member 51c2 is configured to release the restriction by the restricting member 51c2 upon heating in a microwave oven. In one example, the restricting member 51c2 is made of the shape memory material described in the first embodiment. When the temperature of the restricting member 51c2 becomes higher than the recovery temperature due to heating, the restricting member 51c2 returns to its original shape as shown in Fig. 63B. As a result, the engagement between the restricting member 51c2 and the elastic member 51c1 is released, the elastic member 51c1 is no longer restricted, and the elastic member 51c1 returns to its original shape.

In another example, the restricting member 51c2 is made of a material whose rigidity decreases upon heating. When the rigidity of the restricting member 51c2 decreases and it can no longer resist the restoring force of the elastic member 51c1, the restriction by the restricting member 51c2 is released, and the elastic member 51c1 returns to its original shape.

In yet another example, the restricting member 51c2 may be made of an adhesive material, and the recovery of the elastic member 51c1 to its original shape may be restricted by the adhesive force of the restricting member 51c2. In this case, when the adhesive force decreases due to heating and it can no longer resist the restoring force of the elastic member 51c1, the restriction by the restricting member 51c2 is released, and the elastic member 51c1 returns to its original shape.

The temperature at which the restriction by the restricting member 51c2 is released is, for example, 50 to 100°C, specifically, for example, 50, 55, 60, 65, 70, 75, 80, 85, 90, 95, or 100°C, and may be within a range between any two of the numerical values exemplified here.

The packaging bag unit 50 of this embodiment is in the state shown in Figs. 62 and 63A before heating. When the packaging bag unit 50 is heated in a microwave oven, while the packaging bag 1 gradually expands, the restriction by the restricting member 51c2 is released. With this release, the elastic member 51c1 returns to its original shape, and at that time, the peripheral surface portion 52a of the outer packaging 52 is pushed up by the elastic member 51c1, resulting in the state shown in Fig. 63B. At this time, by changing the inclination angle of the peripheral surface portion 21, the contents of the packaging bag 1 are displaced or deformed, or the intensity distribution of microwaves irradiated onto the contents changes, thereby improving the uniformity of heating of the contents. Also, since the packaging bag 1 possesses self-standing ability through the support of the outer packaging 52, after heating is completed, it becomes easy to eat the contents using the packaging bag 1 as tableware.

The elastic member 51c1 may or may not be fixed to the packaging bag 1, and may be fixed at one point or at two or more points. In one example, one end 51c3 of the elastic member 51c1 is fixed near the upper end 52a1 of the peripheral surface portion 52a.

### 4. Packaging Bag Unit 50 of Other Embodiments

While the embodiments have been described above, the technical idea in this disclosure can also be adopted in the following aspects.

The contents of the first to third embodiments can be combined with each other, and the components of each embodiment can be replaced with each other. For example, the packaging bag 1 of the first embodiment and the displacement assisting portion 51 of the third embodiment may be combined, or the packaging bag 1 of the third embodiment and the displacement assisting portion 51 of the first embodiment may be combined.

The displacement assisting portion 51 of the third embodiment may be a shape memory member having the same shape as the elastic member 51c1. In this case, the restricting member 51c2 is unnecessary, and the displacement assisting portion 51 can push up the peripheral surface portion 52a based on the same principle as in the first embodiment.

In the third embodiment, self-standing property is ensured by placing the packaging bag 1 inside the outer packaging 52. However, the outer packaging 52 may be omitted, and the packaging bag 1 may be supported by the displacement assisting portion 51 to have self-standing property.

The packaging bag 1 of the first to second embodiments may be the one disclosed in the third embodiment. In this case, the packaging bag 1 may be supported by the displacement assisting portion 51 to have self-standing property, or the outer packaging 52 may also be adopted together to allow the packaging bag 1 to stand by the outer packaging 52.

As the packaging bag 1 of the first to third embodiments, one having a side surface portion between the front portion 3 and the back portion 4, and in which the front portion 3 and the back portion 4 are respectively welded to the side surface portion (i.e., a gusseted packaging bag) may be adopted.

As the packaging bag 1 of the first to third embodiments, one without the fin seal portion 10 may be adopted.

As the packaging bag 1 of the first to third embodiments, one in which the steam vent seal portion 11 is provided in a portion other than the fin seal portion 10 (for example, one in which the steam vent seal portion 11 is provided in the welded portion of the front portion 3 and the back portion 4) may be adopted.

### 5. Cooking Method for Packaged Food

A cooking method for packaged food according to one embodiment of the present invention includes a heating step. The packaged food to be cooked by this method includes the packaging bag unit 50 of the above embodiment and food stored in the packaging bag 1. In the heating step, heating of the food stored in the packaging bag 1 is started by a microwave oven, and the inclination angle of the peripheral surface portion 21 is changed by deforming the displacement assisting portion 51 during heating. According to this method, the uniformity of heating of the food can be improved.

### (Sixth Aspect)

### 1. Packaging Bag Unit 50 of the First Embodiment

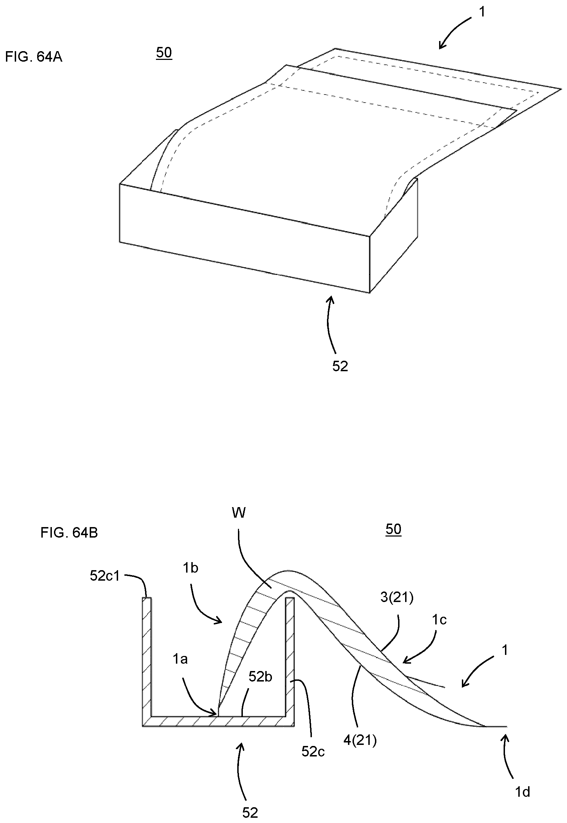

The packaging bag unit 50 according to the first embodiment of the present invention will be described using Figs. 64 to 67. As shown in Figs. 64 to 65, the packaging bag unit 50 of this embodiment includes a packaging bag 1 and an outer packaging 52. The packaging bag 1 includes a peripheral surface portion 21 having a front portion 3 and a back portion 4 that face each other. The packaging bag unit 50 is configured such that the posture of the packaging bag 1 changes as the center of gravity of the contents W of the packaging bag 1 moves when the packaging bag unit 50 is heated in a microwave oven. Each component will be described below. The contents W may be any of a liquid, a solid, or a mixture of liquid and solid. The contents W preferably have a viscosity and size that allow them to move under the action of gravity.

### 1-1. Packaging Bag 1

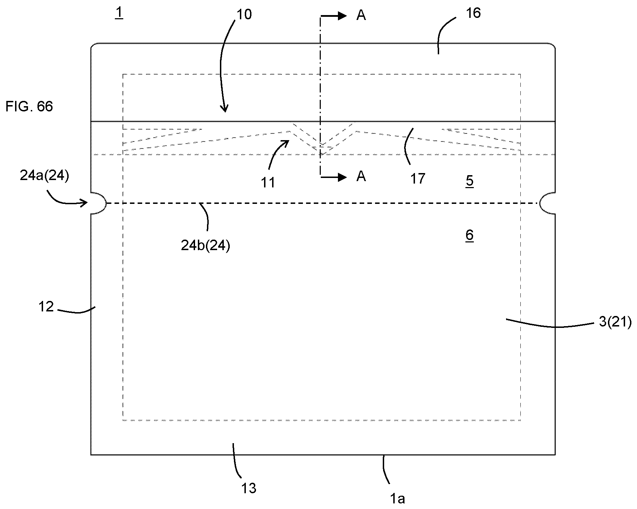

As shown in Figs. 64 to 67, the packaging bag 1 is a packaging bag for a microwave oven made of a flexible film formed into a bag shape. In this disclosure, the top, bottom, left, and right in Fig. 66 will be used to describe the top, bottom, left, and right of the packaging bag 1. As shown in Fig. 66, the left and right when the front portion 3 is placed in the foreground are the left and right of the packaging bag 1.

The peripheral surface portion 21 of the packaging bag 1 has a front portion 3 and a back portion 4. The front portion 3 and the back portion 4 are welded together at the side end welded portions 12 provided at their left-right end portions, the lower end welded portion 13 provided at the lower end, and the upper end welded portion 16 provided at the upper end, and the contents W are sealed inside the packaging bag 1.

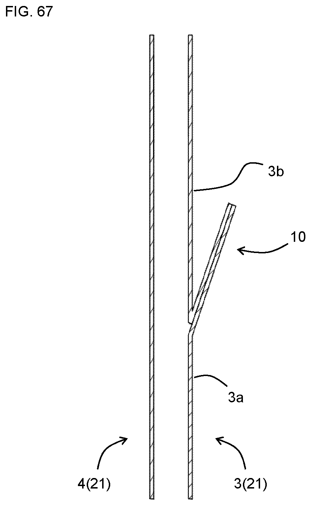

The front portion 3 includes a lower front portion 3a and an upper front portion 3b. As shown in Fig. 67, the lower front portion 3a and the upper front portion 3b are folded back on each other, and their inner surfaces are overlapped and welded together at a fin seal portion 10.

As shown in Fig. 66, an opening portion 24 is provided in the peripheral surface portion 21 of the packaging bag 1. The opening portion 24 is a portion for opening the packaging bag 1. In this embodiment, the opening portion 24 includes a tear initiation portion 24a that serves as a starting point for tearing the peripheral surface portion 21, and a tear line 24b on which a line indicating the portion to be cut open is printed. The packaging bag 1 can be opened by tearing the peripheral surface portion 21 starting from the tear initiation portion 24a.

The packaging bag 1 has an upper to-be-removed portion 5 and a lower main body 6 in the top-bottom direction, with the opening portion 24 as the boundary. By tearing the peripheral surface portion 21 in the circumferential direction at the opening portion 24 and removing the to-be-removed portion 5, a container-shaped main body 6 is obtained. The main body 6 is supported by the outer packaging 52 and can stand, and can be used as tableware for eating the contents inside the packaging bag 1.

The opening portion 24 is provided closer to the lower end 1a of the packaging bag 1 than the fin seal portion 10. That is, the fin seal portion 10 is provided in the to-be-removed portion 5. Therefore, when the to-be-removed portion 5 is removed during opening, the fin seal portion 10 is also removed together. Accordingly, the fin seal portion 10 does not get in the way when eating the contents.

The packaging bag 1 is provided with the same steam vent seal portion 11 as in the first embodiment of the fifth aspect. The film constituting the peripheral surface portion 21 can be the same as that used in the first embodiment of the fifth aspect.

### 1-2. Outer Packaging 52

The outer packaging 52 is configured so as to surround the packaging bag 1. The outer packaging 52 preferably has a rigidity sufficient to support the packaging bag 1 and allow it to stand. In this embodiment, in the state before heating, an outer packaging interior portion 1b including the lower end 1a of the packaging bag 1 is arranged inside the outer packaging 52, and the outer packaging interior portion 1b is preferably fixed to the outer packaging 52. In this embodiment, the lower end 1a is fixed to the inner bottom 52b of the outer packaging 52, but other portions of the outer packaging interior portion 1b may be fixed to the inner bottom 52b or other portions of the outer packaging 52.

The packaging bag 1 is arranged so as to straddle the peripheral wall 52c of the outer packaging 52, and a part of the packaging bag 1 is arranged so as to hang down outside the peripheral wall 52c. The upper portion 1c of the packaging bag 1, which hangs down outside the peripheral wall 52c, is arranged below the upper end 52c1 of the peripheral wall 52c. Where the angle from the horizontal surface of the line connecting the lower end 1a and the upper end 1d in the left-right center cross-section (the cross-section in Fig. 64B) of the packaging bag 1 is defined as the inclination angle of the packaging bag 1, the inclination angle is approximately 0 degrees in the state of Fig. 64B. In the case of a packaging bag (so-called standing pouch) in which the lower end of the packaging bag 1 opens in the front-back direction, the position of the lower end for determining the inclination angle is assumed to be the center of the lower end of the front portion 3 and the lower end of the back portion 4.

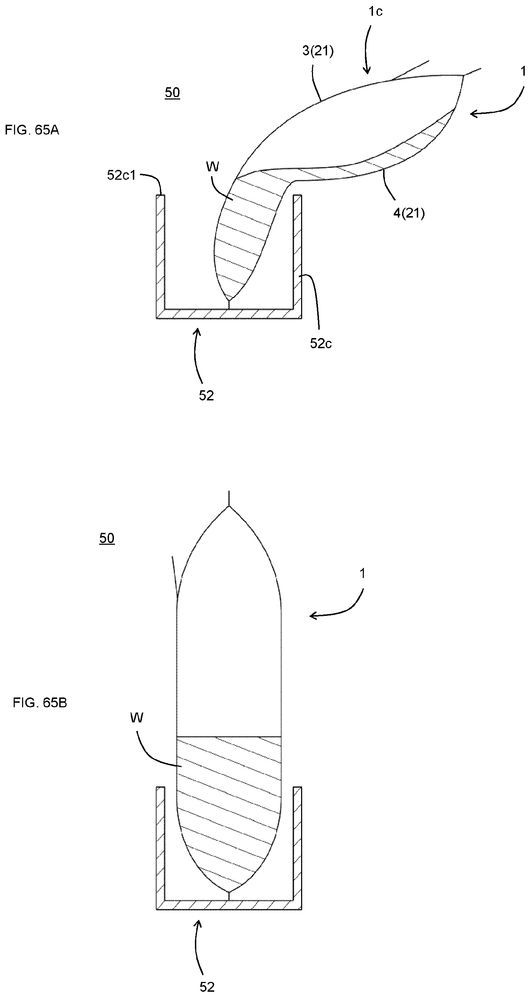

Here, the working principles and effects of the packaging bag unit 50 of this embodiment will be described. When the packaging bag unit 50 is heated in a microwave oven from the state shown in Fig. 64B, the internal pressure of the packaging bag 1 increases, and the packaging bag 1 expands. When the packaging bag 1 expands, as shown in Fig. 65A, the upper portion 1c is lifted by the tension applied to the front portion 3 and the back portion 4, and the upper portion 1c becomes higher than the upper end 52c1. When the upper portion 1c is lifted to this height, the contents W move into the outer packaging interior portion 1b due to gravity. As the contents W move, the upper portion 1c becomes lighter and easier to displace, and it displaces until it reaches the state shown in Fig. 65B. The inclination angle of the packaging bag 1 is approximately 45 degrees in the state of Fig. 65A and 90 degrees in the state of Fig. 65B. The change in inclination angle before and after heating is, for example, 20 to 90 degrees, specifically, for example, 20, 25, 30, 35, 40, 45, 50, 55, 60, 65, 70, 75, 80, 85, or 90 degrees, and may be within a range between any two of the numerical values exemplified here. The inclination angle of the packaging bag before heating is, for example, 0 to 45 degrees, specifically, for example, 0, 5, 10, 15, 20, 25, 30, 35, 40, or 45 degrees, and may be within a range between any two of the numerical values exemplified here.

As described above, in this embodiment, the contents W of the packaging bag 1 that were arranged outside the outer packaging 52 move to the outer packaging interior portion 1b when the packaging bag 1 expands due to heating, and the posture of the packaging bag 1 changes (in other words, the inclination angle of the packaging bag 1 changes) as the center of gravity of the contents W moves. When the posture of the packaging bag 1 changes, the contents W are displaced or deformed, or the intensity distribution of microwaves irradiated onto the contents changes. Therefore, according to this embodiment, the uniformity of heating of the contents W of the packaging bag 1 can be improved.

### 2. Packaging Bag Unit 50 of the Second Embodiment

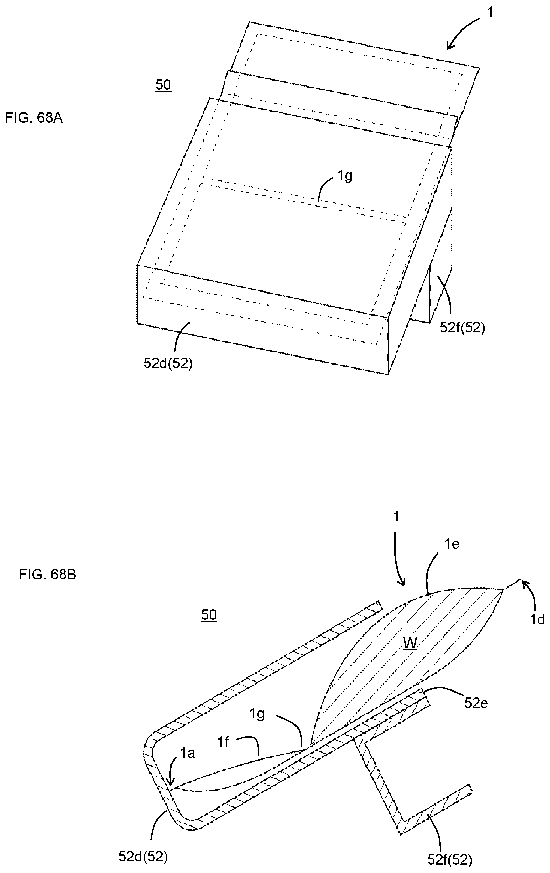

The second embodiment of the present invention will be described using Figs. 68 to 69. The main difference between the packaging bag unit 50 of this embodiment and the first embodiment is the difference in the mechanism for moving the center of gravity of the contents W, and other points are similar to the first embodiment. Therefore, the description in the first embodiment can also be applied to this embodiment unless it contradicts the spirit thereof.

In this embodiment, the packaging bag 1 includes a dividing seal portion 1g that divides the space inside the packaging bag 1 into a first space 1e and a second space 1f. As heating progresses, the dividing seal portion 1g peels off, and the contents W of the first space 1e move to the second space 1f, causing the center of gravity of the contents W to move, thereby changing the posture of the packaging bag 1. The dividing seal portion 1g has a weaker seal strength than the steam vent seal portion 11, and the dividing seal portion 1g peels off before the steam flow path is formed in the steam vent seal portion 11, connecting the first and second spaces 1e and 1f.

The packaging bag 1 is stored inside the outer packaging 52. The outer packaging 52 includes an outer packaging body 52d and an outer packaging lid 52f connected to the outer packaging body 52d via a hinge portion 52e. Before the packaging bag unit 50 is opened, the outer packaging body 52d and the outer packaging lid 52f are integrated and store the packaging bag 1 inside. When heating the packaging bag 1, the portion of the connection between the outer packaging body 52d and the outer packaging lid 52f other than the hinge portion 52e is separated to expose the packaging bag 1, and as shown in Fig. 68B, the outer packaging body 52d is placed in an inclined state using the outer packaging lid 52f as a base. When the packaging bag 1 is stored inside the outer packaging body 52d, the packaging bag 1 also becomes inclined, and the first space 1e is positioned higher than the second space 1f. In Fig. 68B, the entire amount of the contents W is arranged in the first space 1e before heating, but a part of the contents W may be arranged in the second space 1f.

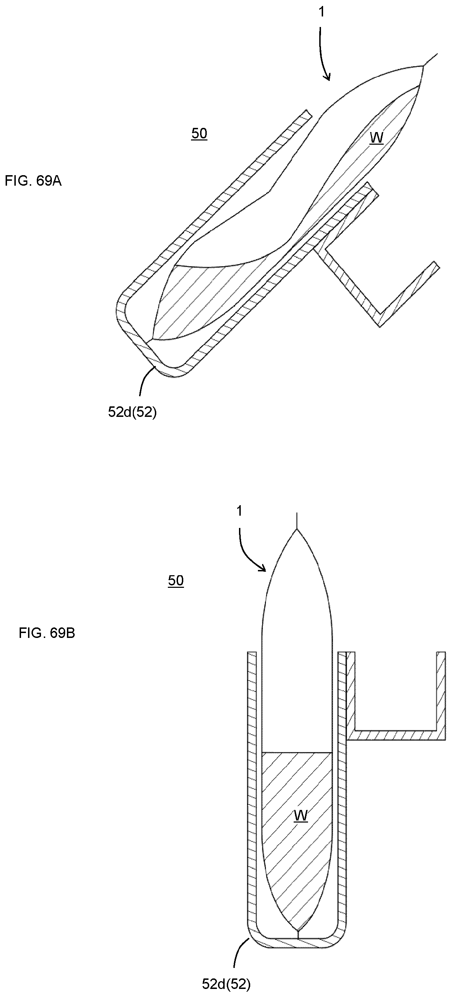

Here, the working principles and effects of the packaging bag unit 50 of this embodiment will be described. When the packaging bag unit 50 is heated in a microwave oven from the state shown in Fig. 68B, the internal pressure of the packaging bag 1 increases, and the packaging bag 1 expands. When the packaging bag 1 expands, as shown in Fig. 69A, the dividing seal portion 1g peels off due to the tension applied to the front portion 3 and the back portion 4, connecting the first and second spaces 1e and 1f. As shown in Fig. 68B, the first space 1e is positioned higher than the second space 1f, and as shown in Fig. 69A, when the first and second spaces 1e and 1f are connected, the contents W in the first space 1e move to the second space 1f due to gravity. As the contents W move, the center of gravity of the contents moves towards the lower side of the packaging bag 1, and as a result, as shown in Figs. 69A to 69B, the packaging bag 1 rises together with the outer packaging 52. The inclination angle of the packaging bag 1 is approximately 30 degrees in the state of Fig. 68B, approximately 45 degrees in the state of Fig. 69A, and 90 degrees in the state of Fig. 69B.

As described above, in this embodiment, as heating progresses, the dividing seal portion 1g peels off, and the contents W of the first space 1e move to the second space 1f, causing the center of gravity of the contents W to move, thereby changing the posture of the packaging bag 1 (in other words, the inclination angle of the packaging bag 1 changes). When the posture of the packaging bag 1 changes, the contents W are displaced or deformed, or the intensity distribution of microwaves irradiated onto the contents changes. Therefore, according to this embodiment, the uniformity of heating of the contents W of the packaging bag 1 can be improved.

### 3. Packaging Bag Unit 50 of the Third Embodiment

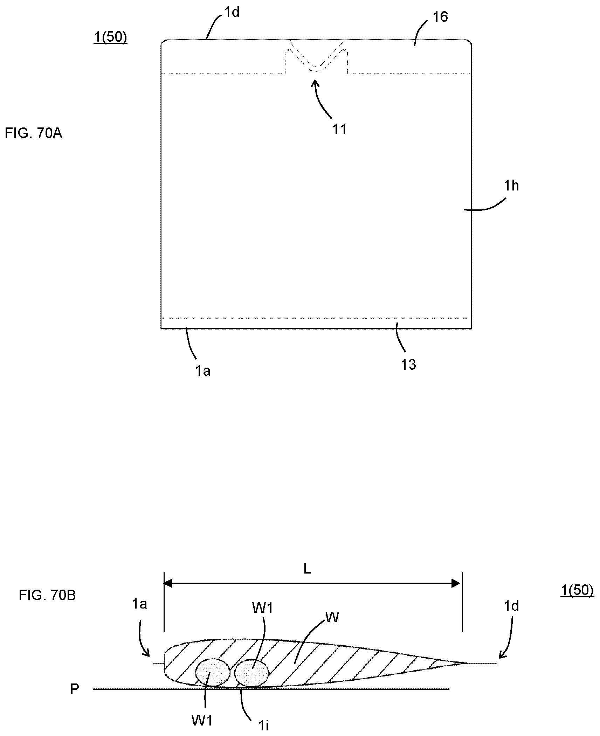

The third embodiment of the present invention will be described using Figs. 70 to 71. The main difference between the packaging bag unit 50 of this embodiment and the first embodiment is the difference in the mechanism for moving the center of gravity of the contents W, and other points are similar to the first embodiment. Therefore, the description in the first embodiment can also be applied to this embodiment unless it contradicts the spirit thereof.

In this embodiment, the packaging bag 1 seals the contents W inside by forming a lower end welded portion 13 and an upper end welded portion 16 along the lower end 1a and the upper end 1d of a tubular film 1h. The contents W preferably include one or more solid matters W1. The value of (weight of each solid matter W1 / weight of the packaging bag 1 without contents W) is preferably greater than 1, more preferably 5 or more, and even more preferably 10 or more. This value is, for example, 1.1 to 100 times, specifically, for example, 1.1, 1.5, 2, 3, 4, 5, 10, 20, 30, 40, 50, or 100, and may be within a range between any two of the numerical values exemplified here, or any one of them or more. Movement of the solid matter W1 facilitates the movement of the center of gravity. As shown in Fig. 70B, when the packaging bag 1 is laid down, where the horizontal length in the inner edge of the packaging bag 1 is L, and the length from the inner edge on the lower end 1a side of the packaging bag 1 to the center of gravity of all solid matter is L1, then L1/L is preferably 0.5 or less, and more preferably 0.3 or less. By arranging the solid matter W1 biased towards the lower end 1a side in this way, the packaging bag 1 becomes easier to rise during heating. L1/L is preferably 0.1 to 0.5, more preferably 0.15 to 0.45, and specifically, for example, 0.10, 0.15, 0.20, 0.25, 0.30, 0.35, 0.40, 0.45, or 0.50, and may be within a range between any two of the numerical values exemplified here, or any one of them or less.

The upper end welded portion 16 is provided with a steam vent seal portion 11. The lower end welded portion 13 preferably has a short top-bottom length (length in the top-bottom direction) so as not to impede the rise of the packaging bag 1. The top-bottom length of the lower end welded portion 13 is, for example, 1 to 10 mm, preferably 2 to 8 mm. This length is specifically, for example, 1, 2, 3, 4, 5, 6, 7, 8, 9, or 10 mm, and may be within a range between any two of the numerical values exemplified here. The top-bottom length of the lower end welded portion 13 is preferably shorter than the top-bottom length of the upper end welded portion 16.

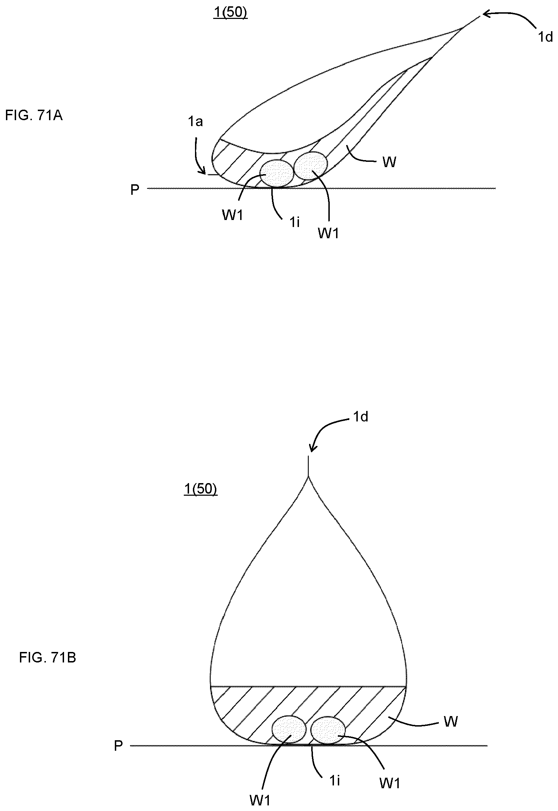

Here, the working principles and effects of the packaging bag unit 50 of this embodiment will be described. When the packaging bag unit 50 is heated in a microwave oven from the state shown in Fig. 70B, the internal pressure of the packaging bag 1 increases, and the packaging bag 1 expands. Since the area near the lower end 1a of the packaging bag 1 of this embodiment is easily deformable, when the packaging bag 1 expands, it rises while the contents W of the packaging bag 1 move towards the lower end 1a, as shown in Fig. 71A. Therefore, as the center of gravity of the contents W moves towards the lower end 1a, the ground contact portion 1i with the placement surface P on which the packaging bag 1 is placed also moves towards the lower end 1a, and finally, as shown in Fig. 71B, the packaging bag 1 rises. In this way, the packaging bag 1 of this embodiment is configured to rise while the ground contact portion 1i gradually moves. To facilitate the movement of the ground contact portion 1i, the area between the ground contact portion 1i and the lower end 1a in the state before heating is preferably curved outward in a convex shape from before heating, or configured to curve outward in a convex shape due to the expansion of the packaging bag 1 upon heating. The inclination angle of the packaging bag 1 is 0 degrees in the state of Fig. 70B, approximately 30 degrees in the state of Fig. 71A, and 90 degrees in the state of Fig. 71B.

### 4. Packaging Bag Unit 50 of Other Embodiments

While the embodiments have been described above, the technical idea in this disclosure can also be adopted in the following aspects.

As the packaging bag 1 of the first to third embodiments, one having a side surface portion between the front portion 3 and the back portion 4, and in which the front portion 3 and the back portion 4 are respectively welded to the side surface portion (i.e., a gusseted packaging bag) may be adopted.

As the packaging bag 1 of the first to second embodiments, one without the fin seal portion 10 may be adopted.

As the packaging bag 1 of the first to second embodiments, one in which the steam vent seal portion 11 is provided in a portion other than the fin seal portion 10 (for example, one in which the steam vent seal portion 11 is provided in the welded portion of the front portion 3 and the back portion 4) may be adopted.

As the packaging bag 1 of the first to third embodiments, a self-standing one (so-called standing pouch) may be adopted.

As the packaging bag 1 of the third embodiment, the steam vent seal portion 11 may be provided in a portion other than the upper end welded portion 16.

The packaging bag 1 of the second embodiment may be inclined without using the outer packaging 52. For example, the packaging bag 1 may be inclined by placing the upper side of the packaging bag 1 on a base other than the outer packaging 52, or by suspending it with another member.

The contents W of the packaging bag 1 of the first and second embodiments may include the solid matter W1, similarly to the third embodiment.

### 5. Cooking Method for Packaged Food

A cooking method for packaged food according to one embodiment of the present invention includes a heating step. The packaged food to be cooked by this method includes the packaging bag unit 50 of the above embodiment and food stored in the packaging bag 1. In the heating step, heating of the food stored in the packaging bag 1 is started by a microwave oven, and the posture of the packaging bag 1 is changed by moving the center of gravity during the heating. According to this method, the uniformity of heating of the food can be improved.

### [EXAMPLE]

### 1. Heating Test

### 1-1. Method for Manufacturing Packaging Bag

A packaging bag 1 having the shape shown in Figs. 1 to 3 was manufactured according to the method shown in the first embodiment of the first to fourth aspects. The dimensions H1 to H4 in Fig. 3 were set to 95 mm, 75 mm, 45 mm, and 200 mm, respectively. The reinforcing member 27 was made of paper with the same shape as the bottom portion 2 and a thickness of 0.68 mm, and was attached to the bottom portion 2 with double-sided tape.

### 1-2. Water Heating Test

After putting 200 ml of 5°C water into the packaging bag 1 and sealing it, it was heated in a microwave oven at 500 W, and the time until it started boiling was measured. The time was measured for each of the following conditions: heating with the packaging bag 1 kept upright ("Vertical"), heating with the packaging bag 1 always lying down ("Horizontal"), and starting heating with the bottom portion 2 of the packaging bag 1 grounded and the peripheral surface portion 21 lying down, and allowing the peripheral surface portion 21 to rise as the packaging bag 1 expanded ("Rise"). For the "Horizontal" condition, the heating time was measured for both placing the packaging bag 1 directly on the plate inside the microwave oven ("Normal") and placing the packaging bag 1 on a stand with a height of 60 mm provided on the plate ("60 mm Upward"). The results are shown in Table 1.

As shown in Table 1, in the "Normal" placement, the heating time until boiling was much longer for "Vertical" than for "Horizontal" and "Rise". This result indicates that "Vertical" has lower heating efficiency compared to "Horizontal" and "Rise". Also, the heating time until boiling was much longer for "60 mm Upward" than for "Normal". This result indicates that microwave ovens have particularly high heating efficiency near the plate.

**[Table 1]**

| **Table 1** | | | **Heating time until boiling (100°C)** | | |
|---|---|---|---|---|---|
| **Contents** | **Storage Temperature** | **Heating Height** | **Vertical Placement** | **Horizontal Placement** | **Rise** |
| Water | 5°C | Normal | 3 min 13 sec | 2 min 52 sec | 2 min 57 sec |
| | | 60mm Upward | | 3 min 27 sec | |

### 1-3. Food Heating Test

Next, hamburger (180 g) or fried rice (130 g) was placed in the packaging bag 1, stored at the storage temperature shown in Table 2, and then heated in a microwave oven at 500 W for the heating time shown in Table 2. The time until steam escaped from the steam vent seal portion 11 ("Steam Release") was measured. After heating was completed, the temperature of the portion shown in Table 2 was measured using thermography. "Surface (High)" shows the temperature of the portion with the highest temperature on the food surface. "Surface (Low)" shows the temperature of the portion with the lowest temperature on the food surface. "Inside (Low)" shows the temperature of the portion with the lowest temperature on the cut surface when the hamburger was divided into two. "Temperature Unevenness" shows the difference between the highest and lowest measured temperatures.

As shown in Table 2, the time until steam release was much longer for "Vertical" than for "Horizontal" and "Rise". This result indicates that "Vertical" has lower heating efficiency compared to "Horizontal" and "Rise". Also, the time until steam release was the same for "Horizontal" and "Rise", and the temperature unevenness was smaller for "Rise" than for "Horizontal". This result shows that "Rise" can reduce temperature unevenness without reducing heating efficiency.

**[Table 2]**

| **Table 2** | | | **Measured Temperature [°C]** | | |
|---|---|---|---|---|---|
| **Contents** | **Storage Temperature (Heating Time)** | **Measurement Location** | **Vertical Placement** | **Horizontal Placement** | **Rise** |
| Hamburg Steak | 5°C (1 min 00 sec) | Surface (High) | 63 | 80 | 68 |
| | | Surface (Low) | 18 | 66 | 48 |
| | | Inside (Low) | 21 | 34 | 35 |
| | | Temperature Unevenness | 42 | 46 | 33 |
| | | Time until Steam Release | 56 sec | 45 sec | 48 sec |
| | -18°C (4 min 30 sec) | Surface (High) | 84 | 90 | 84 |
| | | Surface (Low) | 46 | 47 | 57 |
| | | Inside (Low) | 13 | 52 | 58 |
| | | Temperature Unevenness | 71 | 43 | 27 |
| | | Time until Steam Release | 4 min 3 sec | 1 min 26 sec | 1 min 31 sec |
| Fried Rice | -18°C (2 min 45 sec) | Surface (High) | | 96 | 90 |
| | | Surface (Low) | | 47 | 49 |
| | | Temperature Unevenness | | 49 | 41 |
| | | Time until Steam Release | | 2 min 31 sec | 2 min 26 sec |

### 2. Rising Test

### 2-1. Method for Manufacturing Packaging Bag 1

### <Test Examples 1 to 3>

A packaging bag 1 with a fin seal portion 10 having the shape shown in Figs. 1 to 3 was manufactured according to the method shown in the first embodiment of the first to fourth aspects. The inside dimensions of the welded portion in the X, Y, and Z directions in Fig. 1 were set as the depth dimension a, the width dimension b, and the height dimension c of the packaging bag 1, respectively, and packaging bags 1 of Test Examples 1 to 3 with these dimensions having the values shown in Table 3 were manufactured.

### <Test Examples 4 to 6>

A packaging bag 1 was manufactured in which the structure above the opening portion 24 of the packaging bag 1 having the shape shown in Figs. 1 to 3 was changed to the structure shown in Fig. 22C. The dimensions of this packaging bag 1 were as shown in Table 3. This packaging bag 1 does not have a fin seal portion 10, but has a side end welded portion 12 and an upper end welded portion 19 between the front portion 3 and the back portion 4, and a steam vent seal portion 11 is provided in the side end welded portion 12.

**[Table 3]**

| Table 3 | | Test Example | | | | | |
|---|---|---|---|---|---|---|---|
| | | 1 | 2 | 3 | 4 | 5 | 6 |
| Presence or Absence of Fin Seal Portion | | Present | Present | Present | Absent | Absent | Absent |
| Internal dimension [mm] | Depth Dimension [a] | 100 | 90 | 80 | 80 | 60 | 50 |
| | Width Dimension[b] | 175 | 175 | 175 | 175 | 175 | 175 |
| | Height Dimension [c] | 110 | 110 | 110 | 110 | 110 | 110 |
| Depth Dimension [a] / Height Dimension [c] | | 0.91 | 0.82 | 0.73 | 0.73 | 0.55 | 0.45 |
| Rising Test | | A | A | B | A | A | B |

### 2-2. Details of Rising Test

200 ml of water was placed in the packaging bag 1 of each test example, and it was placed in a microwave oven in a state where the peripheral surface portion 21 was laid down as shown in Fig. 8A. It was heated at 500 W until the bag expanded and steam began to escape, and it was checked whether the peripheral surface portion 21 stood up. The rising test was conducted without attaching the reinforcing member 27 to the bottom portion 2.

For each test example, 10 samples were prepared, and evaluation was performed based on whether each of the 10 samples rose, according to the following criteria:
A: The peripheral surface portion 21 rose in all 10 samples.
B: The peripheral surface portion 21 rose in 1 to 9 samples.
C: The peripheral surface portion 21 did not rise in any of the samples.

As shown in Table 3, it was found that for the packaging bag 1 with the fin seal portion 10, it is preferable that the value V1 calculated by {depth dimension [a]/ height dimension [c]} is 0.82 or more. This value V1 is, for example, 0.82 to 1.50, specifically, for example, 0.82, 0.85, 0.90, 0.91, 0.95, 1.00, 1.05, 1.10, 1.15, 1.20, 1.30, 1.40, or 1.50, and may be within a range between any two of the numerical values exemplified here, or any one of them or more.

As shown in Table 3, it was found that for the packaging bag 1 without the fin seal portion 10, it is preferable that the value V1 is 0.55 or more. This value V1 is, for example, 0.55 to 1.50, specifically, for example, 0.55, 0.60, 0.65, 0.70, 0.75, 0.80, 0.85, 0.90, 0.91, 0.95, 1.00, 1.05, 1.10, 1.15, 1.20, 1.30, 1.40, or 1.50, and may be within a range between any two of the numerical values exemplified here, or any one of them or more.

The reason why the preferable lower limit value of V1 differs depending on the presence or absence of the fin seal portion 10 is as follows. When there is a fin seal portion 10, the portion with the fin seal portion 10 is less likely to expand, so the bottom portion 2 of the packaging bag 1 selectively expands and tends to lift up in the initial stage of expansion of the packaging bag 1. On the other hand, when there is no fin seal portion 10, the upper part of the packaging bag 1 also expands, so the entire packaging bag 1 expands uniformly, suppressing the lifting of the bottom portion 2. Therefore, in the packaging bag 1 with the fin seal portion 10, in order to have good rising property, it is necessary to make the depth dimension [a] larger or the height dimension [c] smaller compared to the packaging bag 1 without the fin seal portion 10, and the preferable lower limit value of V1 becomes larger.

Also, regardless of the presence or absence of the fin seal portion 10, considering the stability after the peripheral surface portion 21 rises, it is preferable that the value V2 calculated by {width dimension [b] / height dimension [c]} is 1.0 or more. This value V2 is, for example, 1.0 to 2.5, specifically, for example, 1.1, 1.2, 1.3, 1.4, 1.5, 1.6, 1.7, 1.8, 1.9, 2.0, 2.1, 2.2, 2.3, 2.4, or 2.5, and may be within a range between any two of the numerical values exemplified here, or any one of them or more.

### 3. Rising Test of Packaging Bag 1 Containing Solid Matter

### 3-1. Method for Manufacturing Packaging Bag 1

### <Test Examples 7 to 9>

A packaging bag 1 with a fin seal portion 10 having the shape shown in Figs. 1 to 3 was manufactured according to the method shown in the first embodiment of the first to fourth aspects. The inside dimensions of the welded portion in the X, Y, and Z directions in Fig. 1 were set as the depth dimension a, the width dimension b, and the height dimension c of the packaging bag 1, respectively, and packaging bags 1 of Test Examples 7 to 9 with these dimensions having the values shown in Table 4 were manufactured. When the capacity of the packaging bag 1 of Test Example 8 was measured by filling it with water, it was approximately 800 mL.

**[Table 4]**

| Table 4 | | Test Example | | |
|---|---|---|---|---|
| | | 7 | 8 | 9 |
| Presence or Absence of Fin Seal Portion | | Present | Present | Present |
| Internal dimension [mm] | Depth Dimension [a] | 110 | 100 | 100 |
| | Width Dimension[b] | 175 | 175 | 175 |
| | Height Dimension [c] | 80 | 80 | 90 |
| Depth Dimension [a] / Height Dimension [c] | | 1.38 | 1.25 | 1.11 |
| Rising Test | | A | A | B |

### 3-2. Details of Rising Test

A hamburger (8 cm long, 10 cm wide, 3.5 cm thick, 135 g) and sauce (55 g) were placed in the packaging bag 1 of each test example, and the same test as in "2-2. Details of Rising Test" was conducted, and evaluation was performed according to the same criteria. The rising test was conducted without attaching the reinforcing member 27 to the bottom portion 2. The results are shown in Table 4.

As shown in Table 4, it was found that the value V1 calculated by {depth dimension [a] / height dimension [c]} is preferably 1.15 or more, and more preferably 1.25 or more. This value V1 is, for example, 1.15 to 2.00, specifically, for example, 1.15, 1.20, 1.25, 1.30, 1.35, 1.40, 1.45, 1.50, 1.55, 1.60, 1.65, 1.70, 1.75, 1.80, 1.85, 1.90, 1.95, or 2.00, and may be within a range between any two of the numerical values exemplified here.

Comparing Test Examples 1 to 3 and 7 to 9, it was found that when the contents include solid matter, the peripheral surface portion 21 becomes less likely to rise. Therefore, in Test Examples 7 to 9, the preferable lower limit value of V1 became larger than in Test Examples 1 to 3.

In Test Examples 7 to 9, the ratio of the contents to the internal volume was approximately 24 mass%, and the ratio of the solid matter to the total contents was approximately 71 mass%. The ratio of the contents to the internal volume is, for example, 10 to 50 mass%, preferably 15 to 40 mass%. This ratio is specifically, for example, 10, 15, 20, 25, 30, 35, 40, 45, or 50 mass%, and may be within a range between any two of the numerical values exemplified here. The ratio of the solid matter to the total contents is, for example, 50 to 100 mass%, preferably 60 to 80 mass%. This ratio is specifically, for example, 50, 55, 60, 65, 70, 75, 80, 85, 90, 95, or 100 mass%, and may be within a range between any two of the numerical values exemplified here. The solid matter contained in the contents may be one piece or divided into multiple portions. When the solid matter is divided into multiple portions, it is preferable that the ratio of the largest portion among the multiple portions to the total contents is the above-mentioned ratio of the solid matter.

Note that Test Examples 1 to 9 were all conducted without attaching the reinforcing member 27 to the bottom portion 2, and evaluated the rising property when there is no reinforcing member 27. On the other hand, when a rising test was conducted with a paper reinforcing member 27 having a thickness of 0.68 mm attached to the bottom portion 2 of the packaging bag 1 of Test Examples 1 to 9, the evaluation results were all A.

### [Reference Signs List]

1: packaging bag, 1a: lower end, 1b: outer packaging interior portion, 1c: upper portion, 1d: upper end, 1e: first space, 1f: second space, 1g: dividing seal portion, 1h: tubular film, 1i: ground contact portion, 2: bottom portion, 2a: first bottom portion, 2b: second bottom portion, 2c: front edge, 2d: back edge, 2e: protruding piece, 2f: opening, 2g: portion, 2j: inner edge, 2k: pocket, 2l: short side portion, 2m: long side portion, 2n: gap, 2o: space, 3: front portion, 3a: lower front portion, 3a1: extension portion, 3a2: overlapping portion, 3b: upper front portion, 3c: front facing portion, 4: back portion, 4a: lower back portion, 4a1: extension portion, 4a2: overlapping portion, 4b: upper back portion, 5: to-be-removed portion, 6: main body, 7: opening, 8: outer packaging body, 8a: sheet, 8b: bottom portion, 8c: long side portion, 8d: short side portion, 8e: top portion, 8e1: first top portion, 8e2: second top portion, 8e3: band-shaped portion, 8f: first adhesive margin, 8g: second adhesive margin, 8h: third adhesive margin, 8i: easy-to-cut portion, 8j: illustration, 10: fin seal portion, 10a: overlapping portion, 11: steam vent seal portion, 11a: donut-shaped steam vent seal portion, 11b: unsealed portion, 11c: ventilation portion, 12: side end welded portion, 12a: inner edge, 13: lower end welded portion, 13a: unsealed portion, 13b: opening, 13c: sloped portion, 13c1: starting point, 13c2: inner edge, 13c3: end point, 13c4: outer edge, 13d: central portion, 13e: inner edge, 13f: intersection point, 14: air pocket, 15: fixing portion, 16: upper end welded portion, 17: end seal portion, 19: upper end welded portion, 20a: bottom film, 20a1: upper surface, 20a2: lower surface, 20a3: front edge, 20a4: back edge, 20b: peripheral wall film, 20c: film, 20d: reinforcing member film, 20f: front edge, 20g: back edge, 20h: pocket, 20i: welded portion, 20j: lower end portion, 20k: cover film, 20l: welded portion, 21: peripheral surface portion, 21a: folded-back portion, 21b: upper end, 21c: lower end, 22: opening, 23: opening/closing member, 23a: front side engagement member, 23a1: base portion, 23a2: hook portion, 23b: back side engagement member, 23b1: base portion, 23b2: hook portion, 24: opening portion, 24a: tear initiation portion, 24b: tear line, 26: upper opening portion, 26a: tear initiation portion, 26b: tear line, 27: reinforcing member, 27a: disposable chopsticks, 27b: fold line, 27c: adhesion portion, 28: overlapping portion, 29: fixing means, 29a: double-sided tape, 29b: adhesive tape, 30: non-dedicated member, 30a: plate, 31: fold line, 32: outer packaging body, 32a: outer packaging body, 32a1: first covering portion, 32a2: second covering portion, 32a3: edge, 32a4: easy-to-cut portion, 32b: outer packaging body, 32b1: easy-to-cut portion, 32b2: upper portion, 32b3: first easy-to-cut portion, 32b4: second easy-to-cut portion, 32b5: cut-out piece, 32b6: folding line, 32c: outer packaging body, 32c1: opening, 32c2: edge, 32c3: top portion, 32c4: easy-to-cut portion, 32c5: lid portion, 32c6: one side edge, 32c7: one side surface portion, 32c8: the other side surface portion, 32c9: covering portion, 41: fold line, 42: plate-shaped member, 43: conveyor, 43a: conveying portion, 43b: gap, 44: holding jig, 44a: first support portion, 44b: second support portion, 44c: third support portion, 44d: fourth support portion, 44e: base, 44f: hinge, 44g: gap, 44h: opening, 45: adhesive application device, 45a: nozzle, 45b: guide rail, 45c: conveying table, 45d: adhesive, 46: pressing portion, 47: sheet, 50: packaging bag unit, 51: displacement assisting portion, 51a: shape memory member, 51a1: one end, 51a2: the other end, 51b: expandable member, 51b1: inside, 51b2: one end, 51c1: elastic member, 51c2: restricting member, 51c3: one end, 52: outer packaging, 52a: peripheral surface portion, 52a1: upper end, 52b: inner bottom, 52c: peripheral wall, 52c1: upper end, 52d: outer packaging body, 52e: hinge portion, 52f:outer packaging lid, B: area, C: loop, C1: one end, C2: the other end, D: loop, D1: portion, D2: end portion, E: center line, E1: center line, E2: upper end, E3: lower end, E4: center line, G: surface, P1: first portion, P2: second portion, P3: third portion, S: sealed space, W: contents, W1: solid matter

## Claims

1. A packaging bag for a microwave oven, made of a flexible film formed into a bag shape, comprising: a bottom portion; and a peripheral surface portion, wherein
the peripheral surface portion includes a front portion and a back portion that face each other and are provided so as to stand from the bottom portion;
the front portion and the back portion are configured to be integrally inclinable with respect to the bottom portion toward a front side or a back side of the packaging bag; and
the bottom portion is developable.

2. The packaging bag according to Claim 1, comprising a steam vent seal portion that forms a steam flow path as an internal pressure of the packaging bag increases.

3. The packaging bag according to Claim 1, further comprising a sealed space inside for housing contents, wherein
the packaging bag is configured such that a sum of a weight of a portion of the peripheral surface portion below a center line of the sealed space in a top-bottom direction of the packaging bag and a weight of the bottom portion is greater than a weight of a portion of the peripheral surface portion above the center line of the sealed space.

4. The packaging bag according to Claim 1, wherein
the bottom portion is made of a bottom film; and
the bottom portion is provided with a reinforcing member that reinforces the bottom portion so as to suppress a curvature of the bottom film.

5. The packaging bag according to Claim 4, wherein
the reinforcing member can be removed from the bottom portion and then attached to a bottom portion of another packaging bag.

6. A cooking method for packaged food, comprising a heating step, wherein
the packaged food comprises the packaging bag according to any one of Claims 1 to 5, and food stored in the packaging bag;
in the heating step, heating of the food stored in the packaging bag by a microwave oven is started with the bottom portion developed and grounded and the peripheral surface portion inclined such that an inclination angle with respect to a horizontal surface is 30° or less.

7. A packaging bag for a microwave oven made of a flexible film formed into a bag shape, comprising a bottom portion and a peripheral surface portion, wherein
the peripheral surface portion includes a front portion and a back portion that face each other and are provided so as to stand from the bottom portion;
the front portion and the back portion are configured to be integrally inclinable;
the front portion is provided with a steam vent seal portion that forms a steam flow path as an internal pressure of the packaging bag increases;
the bottom portion is developable; and
the peripheral surface portion is inclined such that the bottom portion and the back portion are valley-folded with the bottom portion developed, and an inclination angle with respect to the bottom portion is 30° or less.

8. The packaging bag according to Claim 7, wherein
the bottom portion is made of a bottom film; and
the bottom portion is provided with a reinforcing member that reinforces the bottom portion so as to suppress a curvature of the bottom film.

9. A cooking method for packaged food, comprising a heating step, wherein
the packaged food comprises a packaging bag and food stored in the packaging bag;
the packaging bag comprises a bottom portion and a peripheral surface portion provided so as to stand from the bottom portion; and
in the heating step, heating of the food stored in the packaging bag by a microwave oven is started with the peripheral surface portion inclined such that an inclination angle with respect to a horizontal surface is 30° or less, and the peripheral surface portion becomes upright when heating is completed.

10. The method according to Claim 9, further comprising a storing step, wherein
in the storing step, cooking liquid is stored in the packaging bag so as to contact the food, and the packaging bag is sealed, and
in the heating step, the food and the cooking liquid stored in the packaging bag are heated by the microwave oven.

11. The method according to Claim 9 or Claim 10, wherein
the bottom portion is developable; and
the heating step is started with the bottom portion developed and grounded.

12. The method according to Claim 9 or Claim 10, wherein
the bottom portion is made of a bottom film; and
the heating step is started with a reinforcing member provided on the bottom portion so as to reinforce the bottom portion to suppress a curvature of the bottom film.

13. A method for manufacturing a packaging bag with a reinforcing member for a microwave oven, comprising: a reinforcing member attaching step, wherein
in the reinforcing member attaching step, a reinforcing member is attached to a bottom portion of a packaging bag in a state where the bottom portion is developed;
the packaging bag is configured by forming a flexible film into a bag shape;
the packaging bag comprises a bottom portion and a peripheral surface portion;
the bottom portion is made of a bottom film;
the peripheral surface portion includes a front portion and a back portion that face each other and are provided so as to stand from the bottom portion;
the front portion and the back portion are configured to be integrally inclinable with respect to the bottom portion toward a front side or a back side of the packaging bag; and
the reinforcing member is configured to reinforce the bottom portion so as to suppress a curvature of the bottom film.

14. The method according to Claim 13, further comprising a bag-making step of manufacturing the packaging bag, wherein
the reinforcing member attaching step is performed after the bag-making step.

15. The method according to Claim 13 or Claim 14, further comprising a contents filling step, wherein
in the contents filling step, contents are filled into the packaging bag and the packaging bag is sealed; and
the reinforcing member attaching step is performed after the contents filling step.

16. A packaging bag unit for a microwave oven, wherein
the packaging bag unit comprises a packaging bag and a displacement assisting portion;
the packaging bag comprises a peripheral surface portion having a front portion and a back portion that face each other; and
the displacement assisting portion is configured to deform and change an inclination angle of the peripheral surface portion when the packaging bag unit is heated in a microwave oven.

17. The packaging bag unit according to Claim 16, wherein
the displacement assisting portion comprises a shape memory member having a property of returning to its original shape when heated above a recovery temperature; and
the packaging bag unit is configured to change an inclination angle of the peripheral surface portion by the shape memory member returning to its original shape as the packaging bag unit is heated in a microwave oven.

18. The packaging bag unit according to Claim 16, wherein
the displacement assisting portion comprises an expandable member having a property of expanding upon heating; and
the packaging bag unit is configured to change an inclination angle of the peripheral surface portion by the expandable member expanding as the packaging bag unit is heated in a microwave oven.

19. The packaging bag unit according to Claim 16, wherein
the displacement assisting portion comprises an elastic member deformed from its original shape and a restricting member that restricts a recovery of the elastic member; and
the packaging bag unit is configured to change an inclination angle of the peripheral surface portion by a restriction by the restricting member being released and the elastic member returning to its original shape as the packaging bag unit is heated in a microwave oven.

20. The packaging bag unit according to Claim 16, wherein
the displacement assisting portion is configured to change an inclination angle of the peripheral surface portion of the packaging bag by pushing up the peripheral surface portion of the packaging bag or by pushing up a peripheral surface portion of an outer packaging surrounding the packaging bag.

21. A cooking method for packaged food, comprising: a heating step, wherein
the packaged food comprises the packaging bag unit according to any one of Claims 16 to 20, and food stored in the packaging bag;
in the heating step, heating of the food stored in the packaging bag is started by a microwave oven, and an inclination angle of the peripheral surface portion is changed by deforming the displacement assisting portion during the heating.

22. A packaging bag unit for a microwave oven, wherein
the packaging bag unit comprises a packaging bag;
the packaging bag comprises a peripheral surface portion having a front portion and a back portion that face each other; and
the packaging bag unit is configured such that a posture of the packaging bag changes as a center of gravity of contents of the packaging bag moves when the packaging bag unit is heated in a microwave oven.

23. The packaging bag unit according to Claim 22, further comprising an outer packaging surrounding the packaging bag, wherein
in a state before heating, an outer packaging interior portion including a lower end of the packaging bag is arranged inside the outer packaging;
the outer packaging interior portion is fixed to the outer packaging; and
the packaging bag unit is so configured that a posture of the packaging bag changes by movement of the center of gravity due to relocation of contents of the packaging bag, that are arranged outside the outer packaging, to the outer packaging interior portion as the packaging bag expands with the heating.

24. The packaging bag unit according to Claim 22, wherein
the packaging bag comprises a dividing seal portion that divides a space inside the packaging bag into a first space and a second space; and
the packaging bag unit is so configured that a posture of the packaging bag changes as the dividing seal portion peels off with the heating, and contents of the first space move to a second space, causing the center of gravity to move.

25. The packaging bag unit according to Claim 22, wherein
the packaging bag unit is so configured that when the packaging bag expands with the heating, contents of the packaging bag move toward a lower end of the packaging bag, causing movement of the center of gravity and a ground contact portion of the packaging bag toward the lower end, thereby changing a posture of the packaging bag.

26. A cooking method for packaged food, comprising a heating step, wherein
the packaged food comprises the packaging bag unit according to any one of Claims 22 to 25, and food stored in the packaging bag;
in the heating step, heating of the food stored in the packaging bag is started by a microwave oven, and a posture of the packaging bag is changed by moving the center of gravity during the heating.
